(19) Europäisches Patentamt
European Patent Office
Office européen des brevets

(11) EP 1 857 930 A2

(12) **EUROPEAN PATENT APPLICATION**

(43) Date of publication:
**21.11.2007 Bulletin 2007/47**

(51) Int Cl.:
***G06F 9/44*** *(2006.01)* ***G06Q 40/00*** *(2006.01)*

(21) Application number: **07107506.3**

(22) Date of filing: **04.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **17.05.2006 US 747535 P**

(71) Applicant: **Ipreo Holdings LLC**
**New York, NY 10018 (US)**

(72) Inventor: **WELLS, Christopher**
**Reading, Berks RG7 1QZ (GB)**

(74) Representative: **Andréasson, Ivar**
**Hynell Patenttjänst AB**
**Patron Carls väg 2**
**683 40 Hagfors/Uddeholm (SE)**

(54) **System, method, and apparatus to allow for a design, administration, and presentation of computer software applications**

(57) A structured product application can be configured by an administrator of a first version of the structured product application by configuring at least one field, configuring at least one view, or configuring at least one permission, and storing the attributes of at least one field, at least one view, and at least one permission. Upon a change to a property of the structured product, the administrator reconfigures the first version of the structured product application to create a second version of the structured product application by either reconfiguring at least one field, adding or deleting a field, reconfiguring at least one view, adding or deleting a view, reconfiguring at least one permission, or adding or deleting a permission. The reconfigured attributes of at least one field, at least one view, and at least one permission are then stored.

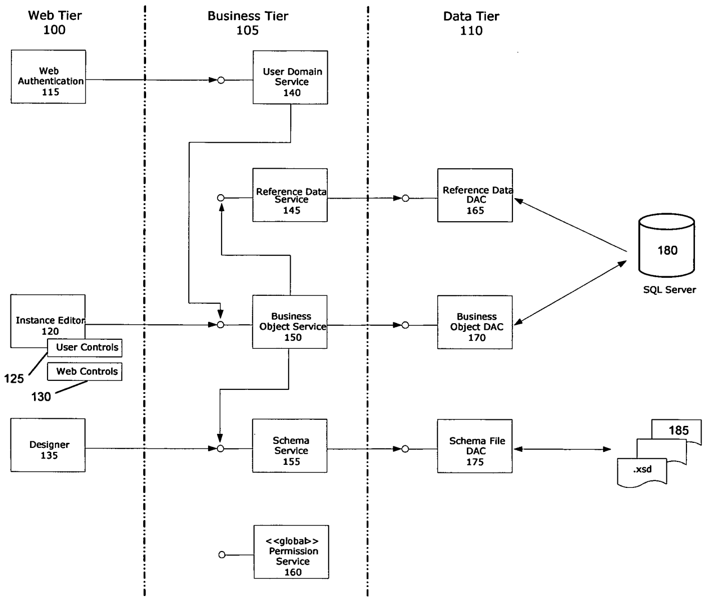


FIG. 1

EP 1 857 930 A2

**Description**

## CROSS-REFERENCE TO RELATED APPLICATIONS

This application claims priority to U.S. Provisional Patent Application No. 60/747,535, filed May 17, 2006, which is hereby incorporated by reference in its entirety.

## BACKGROUND OF THE INVENTION

### Field of the Invention

The invention is directed generally to a computer system, method, and apparatus for the design, administration, and presentation of computer software applications.

### Description of the Related Art

Ordinary debt and equity investments offer certain rewards and risks. Each investor has a distinct outlook as to the rewards and risks of an investment. The importance of reward or sensitivity to risk may vary greatly from one investor to another. Typical debt and equity investments offered to an investor may not meet the investor's precise needs. A particular investor who can only bear a specific level of risk, but who seeks the opportunity to gain a higher return than is typically associated with that risk level, often cannot find a debt or equity investment to meet these precise needs.

Structured products have become a popular form of investment for investors that have specific needs. Structured products are synthetic investment instruments specifically created to meet specific needs that cannot be met from the standardized financial instruments available in the markets. For example, one type of structured product is a collateralized debt obligation ("CDO"). CDOs are securitized interests in pools of - generally non-mortgage - assets. The assets - called collateral - form the pool of a CDO that usually comprises loans or debt instruments, such as bonds. Each of the underlying assets has credit risk associated with it, including, for example, risk of default and risk of repayment. A well-diversified pool of collateral comprising a CDO reduces the overall credit risk of the securities created and sold based upon the CDO. Additionally, the collateral comprising the CDO is divided into multiple "tranches" of securities. Each tranche has a particular maturity and credit risk characteristics. For example, specific loans and bonds in the pool of collateral forming the CDO can be combined to from a tranche of the CDO that has a risk characteristic that meets particular needs. This process of creating structured products is often referred to as "financial engineering."

The business of selling structured products is extremely complicated. New structured products must constantly be created to meet the increasingly demanding and changing needs of investors. For every new structured product, a term sheet must be created that details the investment so that a potential investor can make an informed investment decision. Sales personnel must be able to place orders for the particular structured products offered by the issuer. Additionally, because the performance of many structured products is tied to an interest rate such as, for example the Prime Rate or the London Interbank Offered Rate ("LIBOR"), or to a currency-exchange rate, those rates must be monitored. All of these activities must be performed in a manner that is easily auditable by an internal compliance department or external compliance investigators.

Currently the business of selling structured products suffers from a number of inefficiencies. One reason for the inefficiencies is that each structured product is unique. As a result, there are no standardized sets of properties that can be used to describe each and every structured product. Therefore, an issuer that offers a broad-range of structured product securities cannot present information about each security in a standardized way to personnel and clients. This makes it difficult, for example, to automate the process of generating term sheets that detail the properties of the various securities. More generally, this problem exists for any business that sells products that vary significantly from each other.

There are no conventional solutions to configure software for a new structured note in reaction to a change in the market. A software customer is limited only to those conventional financial instruments and does not have the ability to change the software ad hoc, including adding new rules or interfaces, based on new conditions.

## SUMMARY OF THE INVENTION

What is needed in the art is a technology that overcomes the inefficiencies in the presentation and flow of information pertaining to structured-product securities and other highly-available product classes. The systems and methods described herein can react to changes in the market of software application services. The systems and methods can create a software product driven by specific customer requests. Rather than continuous redevelopment and recoding by developers, users and administrators can configure the flexible software application based on a desired output.

In one embodiment, a system comprises a designer application for a designer to create or edit at least one application, the designer application comprising at least one view comprising at least one field, wherein the designer configures the attributes of the field; a storage device for storing information and attributes of at least one application; an application interface for a user to interact with at least one application; and a screen for displaying the information stored in the storage device regarding at least one application for viewing by the user.

In another embodiment, a computer-implemented method for managing at least one structured product, the method comprises the steps of selecting one or more field names; creating a template of the selected one or more field names; storing the template in a storage media; retrieving information from the storage media corresponding to at least one selected field name to generate a term sheet; and displaying the term sheet comprising only information corresponding to selected fields in the template.

In yet another embodiment, a method for revising a structured product application, the method comprises the steps of configuring by an administrator of a first version of the structured product application, the step of configuring comprising configuring at least one field, configuring at least one view, and configuring at least one permission, and storing the attributes of at least one field, at least one view, and at least one permission, and upon a change to a property of the structured product, reconfiguring by the administrator of the first version of the structured product application to create a second version of the structured product application, the step of reconfiguring comprising at least one step selected from the group consisting of reconfiguring at least one field, adding or deleting a field, reconfiguring at least one view, adding or deleting a view, reconfiguring at least one permission, and adding or deleting a permission; storing the reconfigured attributes of at least one field, at least one view, and at least one permission; and displaying the second version of the structured product application.

In yet another embodiment, a processor-implemented method for managing structured-products, the method comprises the steps of configuring a structured-product security; configuring work-flow templates pertaining to the security, each template comprising at least one field corresponding to a property of the structured-product security; specifying categories of permission for accessing the templates and for changing the information in at least one field; and displaying one of the work-flow templates to a user based upon the user's permission category.

It is an object of an embodiment to devise a technology solution that can provide flexibility and ease of development of structured-product securities in reaction to a constantly changing market.

It is further an object of an embodiment to allow for the customization, generation, and distribution of term sheets that can be done in an efficient and auditable workflow.

It is still further an object of an embodiment to provide the ability to distribute deal information to sales and, optionally, to clients with ease.

It is still further an object of an embodiment to allow for the management of the order flow and allocations and to provide a method for straight through processing to internal systems.

It is still further an object of an embodiment to make it easier to configure the way that information about a product failing within a highly variable product class can be presented.

These and other objects of an embodiment can be accomplished by a computer system, method, and apparatus that provides the capability to design, develop, and implement structured products. This system, method, and apparatus can be implemented as a computer application.

In a further aspect of an embodiment, the application can allow the user to create additional templates for a particular structured-product security. Each template corresponds to the information that a particular class of users is capable of viewing about the security. Therefore, presentation of information about a security can be customized for each class of viewers such as, for example, sales personnel, trading-desk personnel, management, and clients. The application allows the user to build an appropriate workflow that, for example, can mimic the current structured-product desk process.

In a further aspect of an embodiment, the application can retrieve data corresponding to the dates on which the interest rates set by various governmental entities are reset. At the user's request, the application can display a calendar on the computer screen that denotes these particular dates.

In a further aspect of an embodiment, the application can periodically replicate all of the information contained in a database. The information stored in the database includes records of all requests for terms sheets. As a result, an auditor can quickly determine who has been provided with information about a structured-product security that the issuer offers.

In a further aspect of an embodiment, the application can assign different classes of users with varying levels of permission concerning the right to enter, access, or manipulate data or information relating to a particular structured-product security to different classes of users. For example, trading-desk personnel may be granted permission to change the price of a security.

In a further aspect of an embodiment, the application can allow for an order-entry system wherein sales personnel and, optionally, clients can be given permission to enter orders for securities. In addition, the application can use rules-based sales logic to provide sales personnel to their accounts for the purpose of updating, monitoring, and reporting structured-product security sales information.

Additional features and advantages of an embodiment will be set forth in the description which follows, and in part will be apparent from the description, or may be learned by practice of the invention. The objectives and other advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

## BRIEF DESCRIPTION OF THE DRAWINGS

The present invention will be more clearly understood from a reading of the following description in conjunction with the accompanying exemplary figures wherein:

**FIGURE 1** shows a deployment structure according to an embodiment of the present invention;

**FIGURE 2** shows an alternative view of a deployment structure according to an embodiment of the present invention;

**FIGURE 3** shows a custom view editor with the object menu visible according to an embodiment of the present invention;

**FIGURE 4** shows a screen shot of a custom view editor according to an embodiment of the present invention;

**FIGURE 5** shows a screen shot with nested views according to an embodiment of the present invention;

**FIGURE 6** shows a permissions and nested views according to an embodiment of the present invention;

**FIGURE 7** shows a complex view containing a plurality of other sub views according to an embodiment of the present invention;

**FIGURE 8** shows typical node menu properties found in the application designer according to an embodiment of the present invention;

**FIGURE 9** shows a flow diagram according to an embodiment of the present invention;

**FIGURE 10** shows a view permissions model according to an embodiment of the present invention;

**FIGURE 11** shows a rendering of a sample menu according to an embodiment of the present invention;

**FIGURE 12** shows a rendering of a sample menu according to an embodiment of the present invention;

**FIGURE 13A and 13B** show a structure of metadata according to an embodiment of the present invention;

**FIGURE 14** shows a hierarchical tree structure for instances of schemas categorized as "issues" according to an embodiment of the present invention;

**FIGURE 15** shows a diagram of relationships according to an embodiment of the present invention;

**FIGURE 16** shows a screen shot of a permissions section of an application designer according to an embodiment of the present invention;

**FIGURE 17** shows a screen shot of an expression editor where XPATH expressions can make up the workflow conditions according to an embodiment of the present invention;

**FIGURE 18** shows a workflow diagram according to an embodiment of the present invention;

**FIGURE 19** shows a workflow diagram according to an embodiment of the present invention;

**FIGURE 20** shows a table structure according to an embodiment of the present invention;

**FIGURE 21** shows a structured products system controller according to an embodiment of the present invention;

**FIGURE 22** shows a screenshot of a field configuration according to an embodiment of the present invention;

**FIGURE 23** shows a web-based application interface according to an embodiment of the present invention;

**FIGURE 24** shows a summary of the interaction between the various components according to an embodiment of the present invention;

**FIGURES 25A to 25C** show a class diagram according to an embodiment of the present invention;

**FIGURE 26** shows a technology stack according to an embodiment of the present invention;

**FIGURE 27** shows a screenshot of a view configuration according to an embodiment of the present invention;

**FIGURE 28** shows a screenshot of the details configuration of a view according to an embodiment of the present invention;

**FIGURE 29** shows a screenshot of the permissions configuration of a view according to an embodiment of the present invention;

**FIGURE 30** shows a screenshot of a user's ability to enter data into a view according to an embodiment of the present invention;

**FIGURE 31** shows a screenshot of an application according to an embodiment of the present invention;

**FIGURE 32** shows a calendar function according to an embodiment of the present invention;

**FIGURE 33** shows a screenshot of calendar entries according to an exemplary embodiment of the present invention;

**FIGURE 34** shows a screenshot of all secondary calendar entries according to an embodiment of the present invention;

**FIGURE 35** shows a screenshot of a structured note according to an embodiment of the present invention;

**FIGURE 36** shows a screenshot of a web page dialog to add an indication according to an embodiment of the present invention; and

**FIGURE 37** shows a screenshot of a term sheet according to an embodiment of the present invention.

## DETAILED DESCRIPTION

Reference will now be made in detail to the preferred embodiments of the present invention, examples of which are illustrated in the accompanying drawings.

Although the exemplary embodiments described herein are directed to structured products and financial instruments, it is understood that the systems and methods can be applied to other software processes, such as those involving compliance, human resources, consumer products, etc.

There are at least two parties, a user and a designer, described in the exemplary embodiments herein. However, it is understood that the user and designer can be the same person. Alternatively, the user and the designer can be different people or groups of people in the same or different entities. Additionally, it is understood that other personnel may be involved in the process, such as an administrator, who can be a part of the user's or the designer's entity, or a third entity. In one exemplary embodiment, a designer designs a structured product template for a user, such as a bank. An administrator at the bank can change the template and permission other users as desired.

Because there can be two different parties that can utilize the systems and methods described herein, the exemplary description discusses the application in terms of a designer interface or application for a designer or administrator and a user interface for a user. In an exemplary operation, a designer can view configurable views of the interface, permission users for viewing fields or data, and choose layout and fields, as described below. In contrast, in an exemplary operation, a user can interact with the application as configured by the designer. The user can access, enter, edit or manipulate, and delete information, but cannot configure the system in the same way as the designer, though the user can influence the design in other aspects.

The system and method described herein is a computer-based application that can model business processes and deliver those processes to end users. The components of the system enable the creation of new structures, define business rules around those structures, and deliver instances of those structures in a controlled and expedient manner. The system and method allow for a high level of configurability, including the ability to configure a client or presentation layer (or tier) **100,** business logic layer **105**, and a database or data access layer **110**, as shown in the exemplary deployment structures in **FIGS. 1** and **2**. The user and the designer can interact with the layers in different ways. For example, a designer can use the business logic layer **105** for configuring whereas a user can interact with the business logic layer **105** when utilizing the system.

The communication between these layers is in the form of domain models that can contain the objects of the system. In the general operation, a web client **201** sends requests to the business logic layer **208**, which services the requests by making queries and updates against a database **180, 202, 203** and formats the information received in a viewable format which can then be viewed on the web client **201**.

The client layer **100**, business logic layer **105**, and data access layer **110** are merely exemplary of a system architecture. It is understood that these layers do not limit the design of the system and are only intended to provide an example of how to structure the different components of these layers. For example, it is understood that the business rules can be in the business logic layer **105** or the data access layer **110**.

Backend and web-based tools in this exemplary embodiment can be designed to create structures that encapsulate new business processes, define business rules around these structures, and deliver instances of these structures in a controlled and expedient manor. User-driven configurability can be designed into all layers of the system. For example, the client layer **100** can be driven through metadata and can be generated dynamically; the business logic layer **105** can also be configurable and, as such, the business logic layer **105** can deal in abstract domain concepts (such as containers and fields) rather than concrete business domain objects; and the database layer **110** can support a configurable and dynamic structure, persisting structures in hierarchies of nodes.

This exemplary embodiment can implement an application in accordance with an Internet protocol, such as HTTP, Extensible Markup Language ("XML"), or HTML protocol. Additionally, this exemplary embodiment can be implemented as a web-based application that can be used to model business processes and deliver those processes to end users.

The client layer **100** comprises at least one web client or browser **201**, such as Microsoft Internet Explorer. The web-based system can be provided through parameterization of a single web page called, for example, Master.aspx. The parameters of this web page can identify the content that the web page should render. In turn, the content can name an ASP.NET user control that can be loaded dynamically and added to the master page, causing the correct page content to be rendered.

Choosing which user control to load can be determined by the company of which the logged-in user is a member. The system can take the user's company name and styling, which can be stored in a folder of the company's name for the user control. If the control is not found, a default folder can be used to find the control. Alternatively, an empty page can be dynamically branded as and when each view is calculated. As a result, branding of the web site can extend to the page structure. For example, for one company, a menu can be a horizontal structure, i.e., menu items can be listed side-by-side. In another example, a menu for another company can be a vertical structure, i.e., menu items can be listed one on top of another. The branding can also extend to the styles and images that are rendered on that web page. Optionally, the page, which can be created on-the-fly, can be configured for the option to export as a PDF file. Other options can include whether a page is a pop-up window or appears in the main page.

A view is an abstract description of what data should be rendered or displayed and how the data should be presented for a user to interact with that data. The views can be defined at design time and can be stored as part of the metadata of the system. There are three different types of views: a preset view, a custom view, and a complex view. A view can be defined at each "level" node (i.e., a complex view) in the structure. The view can also define the fields (i.e., a preset view) or other views that should be rendered for that level, as well as the format.

A distinction between the views can be their method for selecting content. By default, the system can create two views of preset-type: simple and detail. A preset view, also known as a simple view in certain instances, can allow a domain to be queried using an XPATH expression, the results of which are fed into a style. The preset view can support, for example, the following styles: calendar, chart, default, grid, express, table, tree, and XML. The express view (a preset view with an express style) can be used when higher performance is required and can bypass the complex business logic to access the database directly. In one exemplary embodiment, the express view does not offer as much control as the other views, but the added flexibility can improve speed and performance. The preset view also allows the designer to set properties, such as colors. A custom view can select fields, data, and other views via a graphical user interface. The custom view operates like software, such as Microsoft Word or Microsoft Frontpage that allows a designer to create, drag and drop data fields and present a web interface for the user. A preset view (e.g., a table or calendar) may be consumed in the custom view. The custom view can be embellished with banners, graphics, imagery, or the like in addition to the preset view consumed therein. A complex view can allow other views, including other complex views, to be grouped together. The complex can reference preset and custom views. The complex view can allow other views from the same level or below to be picked. Accordingly, the complex view can be a convenient way to assemble other views.

In an example of the operation and use of different views, a screenshot having nested views is shown in **FIG. 5**. In this exemplary embodiment, a banner **510** is created in a custom view. The fields for a table of summary information **520** can be configured in a preset view and inserted directly in a custom view. As shown in screenshot **500**, a complex view shows the banner **510** positioned above the summary information **520**. As shown in another exemplary embodiment in **FIG. 16**, a banner **1640** can be branded with a company name or a user's domain **1650,** such as "i-Deal Ingenuity." As shown in yet another exemplary embodiment in **FIG. 32**, a complex view can combine a number of other views, such as custom views **3210**, **3220, 3230**, each having a section header label and embedded in each custom view a preset view rendered in grid style containing information about securities. In this particular example, custom view **3220** has an embedded preset view **3200**.

When creating a node, the system can automatically create a simple view and a detail view, a type of preset view that can be presented to the user when the node is created. In that instance, the preset view is a detail view. The system can render the view without designer intervention. If neither the simple view nor detail view exist (e.g., the simple or detail view has been deleted by a designer), then the system can create it by using hard-coded XPATHs for the selection expression.

These views can play a role as far as the global menu is concerned. The detail view can be presented to users when creating an item. The preset view can be used when viewing or editing the item. These views can be identified by their names and well-known ids. However, in an exemplary embodiment, if the name of a view is changed to "simple," the view will not become the designated preset view because the id still belongs to the original preset view.

In one exemplary embodiment, a complex view can be used to assemble other views into a single unified view by allowing a series of views (including other complex views) to be chained together in view of the underlying view permissions. For example, complex view X comprises child views A, B, C, D, and E. Each user can see a different version of complex view X, as the underlying child views offer $2^5$ permutations, i.e., visible or not visible for each of the five A, B, C, D, and E child views. In another example, a complex view comprising 24 child views offers 16.7 million permutations. Additionally, the complex view can contain other complex views to further enhance granularity. Referring to **FIG. 7**, a complex view **700** comprises a plurality other sub-views, including views showing key information **710**, further detail information **720**, and an order book (open) **730**.

In another example, the following shows four views assembled together in a complex view:

Simple View 1 - « John can READ this view »

Simple View 3

Custom View 4 - « John can READ and EDIT this view »

Complex View 8

These views can be rendered in the order specified. Each of the four views contains its own permissions as well as the containing complex view. In this example, a user John will see only the first and third views, assuming John also has permission to see a top level view. John will also be able to edit the third view as long as he has edit privileges for the containing view. Each field contained within each view has its own permissions associated with it and each node (e.g., order book) also has its own permissions. The evaluation of each combination of node, field, or view dictates exactly what each user will see.

As with all views, fields contained within a preset view will be removed if the user does not have permission for that field. In one exemplary embodiment, this can happen automatically without compromising aesthetics and can offer greater flexibility. Permissions are discussed with greater detail below.

According to one exemplary embodiment, a user interface of the system can be constructed of three different view types: preset, complex and custom views. A preset view can describe its content using an XPATH expression to select fields (i.e., non-container nodes) to be rendered in that view. For example, the XPATH expression "Issuer | Description | IssueDate" picks the three nodes Issuer, Description, and Issue Date from the children of the node that the view belongs.

The custom view can use an HTML editor to present a flexible design interface to the user. Rather than using an expression to select fields, the user is able to call up a popup menu and use this to place fields in an arbitrary manner anywhere within the view. The mechanism can also allow the user to select other views and place these within the custom view.

In one exemplary embodiment, an HTML template can be used to specify the rendering of the view. The HTML can be embedded into a user control (i.e. an ASCX) and data binding can be used to populate the data controls at runtime. The conversion to/from HTML and ASCX can be performed by an ASCX converter. Custom views can offer word processing-like formatting functionality. As with all templates, because the data is applied at run time, the view itself can differ depending upon data instances. The different view can result from not only different data, but also because parts of a view can be omitted due to a rule that says to only show part of the view.

With a custom view, the underlying object model can be rendered into a hierarchical menu, allowing any field, views, or the like to be inserted directly into the custom view. **FIG. 3** shows a screenshot of an exemplary custom view editor **310** with an object menu **320** visible. When designing the custom view of the exemplary term sheet, the designer can use the object menu to select, for example, a collateralized debt obligation ("CDO"), which can list options for edit security, view portfolio, manage portfolio, security type, target collateral, CDO warehouse, as well as other functions and options. If the designer selects CD warehouse, a submenu shows options for views, all securities, and inventory. By selecting all securities, the user is shown another submenu showing views, labels, select, and approved. If the user selects labels, the user can choose between select and approved. Thus, menu 320 can provide the user with a list of options and submenus to assist in designing the custom view of the term sheet.

In one exemplary embodiment, a designer can design a new structured product. This structured product can be instantly available within a hierarchical popup menu. This feature can help the user when designing the view or term sheet. Additionally, the designer does not have to be worried about not showing information to the wrong audience, because it can be filtered out at render time.

In another embodiment, referring to **FIG. 4**, a screenshot of a custom view editor **410** shows a creation of a custom view. The use of a popup menu **430** exposes an underlying structure in view creations and rendering permutations of these views. The popup menu **430** allows the placement of fields and nesting of other views. By selecting one of the objects in the menu **430**, a designer can customize the view to include additional fields. Fields can be permissioned too, so they can appear in the final rendering. As a result, care should be given to ensure that the view does not contain obvious blanks, e.g., if field label has "Price" and there is a field for a price, then the field label can be rendered if there is no data.

Referring to **FIG. 6**, a diagram shows how permissions and nested views can combine to produce a complex output. At a first level, a node **N1** has a view **V1** and a field **F1.** A second level has node **N2,** which has views **V2, V3** and fields **F2, F3,** and F4. Permissions can be assigned for each node, view, and field. As shown in this example, each node, view, and field has permissions for create, read, edit, and delete, as shown by check marks for a permission and an "x" for no permission. For example, a user here is permissioned to read view **V2**, but is not permissioned to edit the contents of view **V2**.

View **V1** is shown with a plurality of fields **F1, F2, F3,** as well as other views **V2, V3.** When view **V1** is rendered, the view depicts fields **F1, F2, F3,** as well as view **V2**, which depicts fields **F2, F3**. View **V2** has fields **F2**, **F3**, **F4** and view **V3** has fields **F3, F4, F2**. Views **V2, V3** appear in view **V1**. In this example, although view **V3** has been included in view **V1,** view **V3** is not rendered because the read permission is denied for the current user. In view **V1,** as rendered, view **V2** can be rendered because the user has a read permission. However, view **V2** is read-only because the edit permission is denied. Further, in the rendered view **V1,** fields **F1, F2, F3** are shown, but fields **F1, F2** are read and editable whereas field **F3** is a read-only field.

Linked views are an option of a complex view. Linked views can be used to present global menu and user domain edit screens to the user and prospectus. In one example, a grid of securities has a subordinate view showing the detail for each security. The linked view can contain at least two views: a master view and a subordinate view. The master view can be used to determine which data is plugged into the subordinate view. The system can support an unlimited number of subordinate views, but the designer may choose to only support one.

A method for creating a linked view according to an exemplary embodiment is as follows. First, the a view can be created in the designer application. Next, the user can choose "view style" as "linked." The user can then select a "contents" tab and select the master view and subordinate view.

In an exemplary embodiment, linked views can be stored, e.g., as two SecuritySchemaViewFields of type "view," in the complex view. In this example, the subordinate view does not have an id stored with it. In one embodiment, the node's metadata id is stored where the reference view is stored. However, when using linked views, the subordinate view may not reside in the same schema where the linked view is created, e.g., in a calendar, and so the metadata id will not be known at design time. Because the metadata may not be known, a BusinessObjectViewField.Id cannot be assumed to always have a value and can be null. Therefore, the subordinate view can be identified using the view name and not the view id.

When the view is passed through a transformer, only those fields will be rendered. For example, using the XPATH expression "*" can allow all of the child nodes of the current node to be rendered in the view. As new children are added, there is no need to update the view - the node can automatically be rendered. An output control can be selected such as a grid or a tree in which to display the fields. In an exemplary embodiment, only one output control can be used in each preset view. In another exemplary embodiment, an intention of the preset view is to allow the content of the view to be described in a non-specific way.

A transformation service can take as input a view, data, and a renderer. The transformer will instruct the renderer how to construct and buffer its output based on metadata contained in the view. The renderer can produce ASP.NET controls. Web pages include these controls via a factory, which are then rendered to HTML by ASP.NET.

A view state can be disabled where possible. In many instances, disabling can be possible because the content of the controls can be repopulated from the underlying data model. However, the system can still require view state, especially to support third party controls. To avoid some of the issues surrounding view state, view state itself is not delivered in a hidden field on the page. Instead, session context is used to store the view state and a simple identifier is emitted onto the page in order for the view state to be relocated during a postback. This can put more data into session context than is usual, but avoids the overhead of transporting that data to and from the client browser.

The system can use a standard ASP.NET session state management. The following examples can be held in session state: view state for the current page (held in a view state manager object), a copy of the object being edited, and the current user object. Access to the session state can be via a class such as a SessionData wrapper class.

The instance editor **120** is an editable version of a data object that can be rendered as an editable view of type preset, custom, or complex. The instance editor **120** can use user controls **125** in at least two ways. First, as part of its branding architecture, the system can allow the page structure to be varied on a per-customer basis. Second, the system can render custom-designed HTML and bind data into that HTML.

The system can use action objects, e.g., buttons with an assigned script, to perform its user interface work. An action object encapsulates the user interface knowledge required to invoke operations on the backend (e.g., the Save-SchemaAction encapsulates the call to the schema service to persist a modified schema and report any errors associated with the task back to the user). The action class follows the composite pattern, allowing actions to contain sub-actions. This can allow a hierarchical menu structure to be built, with the composite action being rendered as a sub-menu containing the available sub-actions that can be performed on the node that it represents.

The pages can use custom-built web controls **130**, which can wrap standard Microsoft web controls or third party components. When the web control **130** is created, it is bound to a node in the business object and takes responsibility for rendering the data for that node. As such, the web control **130** can provide lightweight rendering of the node when the node is read-only, can perform client-side validation when the node is editable, and can honor the rendering metadata of the node and observe properties such as the background color. There can be any number of controls, including simple text controls, rich text editors, date-time pickers, and on-demand dropdown lists. Lightweight refers to a non-editable mode rendered using HTML, whereas editable versions can require editable HTML controls with associated client-side code to control what the user can and cannot enter via the keyboard.

Fields can be customizable. The customization can be literal, e.g., color is yellow, or an expression, e.g., if today is Monday, then the color is blue, else the color is red. For example, a designer can configure the size, orientation, color, or other attribute of a field. The designer can also choose a field type including, but not limited to, money, date, text, link, percentage, button, decimal number, document reference, contact, file import, and outlook. As shown in **FIG. 22**, a designer can create fields, permission the fields, and choose whether to include the fields in that view. In this particular example, the designer has a contact list application with a text field **2205** for a list name **2210** and a text field **2215** for the number of contacts **2220**. With the flexibility of this system, the designer can decide not to include a field, such as the number of contacts, and then later add the field by indicating that the field should be included. As a result, the designer can revise the application with limited actions. Alternatively, the designer can choose to allow the user to revise the design by saying that a field, X, is not visible unless another field, Y, equals 2. In another example, a view can be rendered subject to a user changing preferences. Further, the designer can choose to automate the revision by saying that field X is visible only if today's date is later than field Z plus 10 days.

In one exemplary embodiment, the system can store multiple field names relating to particular types of information about a structured-product entity. The system can allow the user to select one or more of the multiple field names to create a template, which the system stores, for a specific structured-product security offered by the issuer. The template contains the fields that the user wants to be included in the term sheet for the structured-product security. The system can store the information corresponding to a template that has been set up and, when needed, retrieves the information that corresponds to each chosen field names in the template of the security and generates a term sheet for the security that displays only the information corresponding to the chosen fields in the template. In this manner, a user can create a highly customized term sheet for any structured product being offered by the issuer.

In this example of a contact list, a user can enter a name **3010** into the contact list, as shown in **FIG. 30**. Once the contact list is compiled, a user can view the contact list **3110,** including all permissioned views, as shown in **FIG. 31.**

Referring to **FIG. 27**, a designer can configure different views in an application designer. In this particular example, a contact list application has a preset view, a complex view, and a custom view, all of which are listed by a view type **2710**. The designer can rename, edit, preview, and indicate the selection of these views.

If the designer selects detail **2720**, the designer can configure the permissions for that view or the properties for that view, including the display, control, menu, export, and style. As shown in **FIG. 28**, a designer can edit the display **2810** properties **2820** of a detail view **2830**, which can include the view style, an expression, number of columns, rendering direction, view container style, view display title, and view name. As an additional feature, the designer can preview **2840** the view before or after any changes.

As shown in **FIG. 29** and as discussed in further detail below, a view can be configured for permissions (e.g., allow or deny actions) **2910** for any role **2920**. In this particular example, i-Deal Administrators are allowed to read, edit contents, see in menu, and see context for view.

Menus are a part of a user interface. Using an action menu control, a menu can be built to reflect the business object structure and can contain the actions that can be performed on that structure. As the user expands the menu on the web client, the web server is called back to download that part of the menu to the browser. Menus are created automatically and are driven by parameters contained within each node of the underlying structure. Menu leafs can be driven by expressions that can allow, for example, a menu to have a sub item for each order in an order book with a menu label display, e.g., investor name and order amount. The menus can represent deep object hierarchies. Because the footprint of the menu can be large, the menu structure is loaded on demand using, for example, AJAX (Asynchronous JavaScript and XML).

There can be a plurality of different menu types in the system. These menu types can include, but are not limited to, global menu, context menus, docking point menus, as well as a special menu field type that can be used to render ad hoc menus. Menu items can become visible to the end user when items have been configured to be docked in the menus and the user has permission to see the menu items in the menu. The special menu field type is available to insert into views. If the special menu field type is included in the view, then the view can render the menu for the node that "owns" the view. **FIG. 8** shows a plurality of exemplary node menu properties that can be found in the application designer. In this exemplary embodiment, a designer can determine the properties of a node with respect to what appears in a menu.

There may also be the option of allowing a design team or individual to create global menu items (e.g., calendar or help) in the application designer and "dock" instances (e.g., calendars, securities, lists, or schemas) within the menu. These "docking points" can be controlled by expressions and honor permissions. For example, a global menu can be created to allow sales people to see their securities in the securities section of the calendar, but only if today is Monday and total orders are less than 10,000.

A security (or other business object) defined in the system can have two pre-defined menu docking points in a global menu: a create docking point and a read docking point. If a user has permission to create an object (e.g., a security) and has permission to see the menu item, then the create docking point is displayed for the user. In a similar way, the read docking point controls where securities that have been created can be seen by a user in the global menu.

Other menu types in the system are automatically generated from the object/data structure and basic create/read/update/delete permissions available to the user at the different levels of the structure. For example, if an end user has a "create" permission for an order, then the end user will see a "create" or "add" action for the order in a context menu that is visible in a security order book view. In another example, visibility in a menu can be prevented by setting properties that hide menu items from all users. In yet another example, if an order has been created and a user has a "view" permission, the orders will be docked in the context menu in an order book view. The visibility of any entity in a context menu can be controlled by a mixture of properties and user permissions. An administrator can be granted these permissions, whereas other users are typically not.

Referring to **FIG. 9**, a flow diagram is shown for showing an action item. Visibility of actions in menus and general entities, e.g., orders, can be controlled by a separate mechanism, as described above. In step **910**, the first query can be whether an action can be docked in a menu. If not, then the menu item cannot be shown. If so, then step **920** asks whether the menu is visible in a view. If not, then the menu item cannot be shown. If so, then step **930** asks whether a user is permissioned to see the menu. If not, then the menu item cannot be shown. If so, then step **940** shows the menu item.

Nodes within a business object can be viewed within menus. For example, an order book can be docked in a context menu for a main security view. Referring to **FIG. 10,** a view permissions model is shown. In this exemplary model, a node **N1** at a level zero having field **F1** can be seen in a global menu, a context menu, a local shortcut, and a parent menu. A node **N2,** which is a node of node **N1,** at level one and having fields **F2, F3**, and **F4**, can be seen in the context menu, the local menu, and the parent menu. The permissions of the nodes and fields are shown in other exemplary embodiments as shown in **FIGS. 6** and **14**. The visibility of nodes can be controlled at the user level, e.g., John can see the nodes but Susan cannot.

Object nodes and actions associated with those nodes can be docked in a parent menu, which can allow a complete hierarchy of data structure and actions to be seen in menus. For example, a main view for a security can contain menu items relating to the order book and, within this menu, the menu. The ability of the menu actions to be docked in parent menus can be controlled and permissioned for every node within the object structure.

Context and global menus can be created by calling an expression. The designer can choose to override the default menu behavior. As an example, a global menu can be constructed using XPATH functions with menu items that do not normally form part of the global menu, such as navigation to other systems. In another example, a context menu can be constructed with custom actions associated with the menu items that the user can perform in the course of interacting with the system, such as changing the deal state of security.

Referring to **FIG. 11**, a rendering of a sample menu **1100** is shown. In the sample menu **1100,** a user can choose to create a node N1 **1110** or go to a submenu regarding an instance of node N1 **1120.** If the user selects "Instance of N1" **1120,** the menu presents options for deleting node N1 **1130,** adding an instance of node N2 **1140**, instance 1 of node N2 **1150**, and instance 2 of node N2 **1160**, which has a submenu for deleting instance 2 of node N2 **1170**.

Referring to **FIG. 12**, a rendering of a sample menu **1200** similar to the menu shown in **FIG. 11**, but with a business context. In one exemplary embodiment, once an orderbook is created, a menu can be automatically created within the orderbook, which can include actions such as "add order." As shown in **FIG. 12**, within an orderbook menu item **1210**, a user can select from add order **1220**, orders for investor A **1230**, orders for investor B **1240**, and deleting orders for investor B **1250**. Local shortcuts can be optional docking points within the views where actions from other levels within the data structure can be docked without having to display the complete structural hierarchy. For example, it can be possible to dock the "add order" **1220** actions within a main security view without having to display an "order book" **1210** menu item.

As shown in **FIG. 4**, the docking of an orderbook **420** can appear in a global menu **430**. Actions such as "add order" are fields that appear in a context menu when selecting the orderbook. Based upon permissions for that user, the global menu or context menu can appear different.

The web client **201** of the presentation layer **100** connects to the business logic layer **105** through Internet **207.** In one exemplary embodiment, the Internet **207** can be a WAN defined by the use of TCP/IP to exchange information, but can be any other type of WAN. Alternatively, the Internet **207** can include, but is not limited to an intranet, extranet, LAN, or MAN. The WAN, in turn, is connected to a variety of gateways (not shown). A gateway forms a connection or bridge between the WAN and some other type of network, such as an RF wireless network, cellular network, satellite network, other synchronous or asynchronous land-line connection, or to a Local Area Network ("LAN").

The Internet **207** communicates with a web server that is responsible for accepting HTTP requests from the web client **201.** In this example, Microsoft Internet Information Services ("IIS") **208** is used as a web server, but any web server can be used. A load balancer **209** is used to assign workloads to a set of the IIS servers **208** in such a manner that the computing resources are used in an optimal manner. The IIS servers **208** communicate with the data access layer **110** of the web application, which can be built using web development technologies like ASP.NET, which is a part of Microsoft's .NET platform and is a collection of pages, controls, code modules, and services all running under a single IIS web server application directory. Information relevant to the request by the web client **201** is retrieved and displayed to the user or, alternatively, can be updated by the system. A web client **201** will request a view, rendered in the form of a web page from the IIS Servers **208** usually employing Hypertext Transfer Protocol (HTTP) or Secure Hypertext Transfer Protocol (HTTPS). Interactions by the user on the web client **201** are sent back to the IIS server **208** in the form of postback.

**FIG. 26** shows an exemplary technology stack, a set of components and systems that can deliver a functional system described herein. In this example, each component requires each other component positioned below that component. The components for a functional system comprise web clients **2600,** IIS **2610,** Ingenuity ASP.NET application **2620,** .NET framework 1.1 **2630,** active directory **2640,** SQL server **2650**, state server **2660**, distributed file system ("DFS") **2670**, PDF writer **2680**, and Microsoft Windows O/S **2690**. The interaction of these components is described above with respect to the exemplary configuration in **FIG. 2.** Web Clients interacting with the system will request rendered views from the IIS Server **2610**. These views are rendered by an application employing ASP.NET technology **2620** and hosted in a .NET Framework **2630**. Depending on the type request and user actions the application may interact with a number of other subsystems and processes, including SQL Server **2650** to retrieve or save data, active directory **2640** to determine the user identity and permissions group membership, State Server **2660** to persist the state of view and data information sent to the user, DFS **2670** (Distributed File System) to retrieve files stored in a common location, and PDF writer **2680** to convert HTML based views to PDF format.

The business logic layer **105** comprises an engine using some dynamic web content technology, e.g., CGI, PHP, Java Servlets or Active Server Pages. In one embodiment, the business logic layer **105** uses Microsoft .NET and is delivered using .NET ASPX pages. The business logic can also be configurable so that the business logic layer **105** deals in abstract domain concepts (such as containers and fields) rather than business domain classes. An entry point to the business logic layer **105** can be through various services, such as those services providing functions including, but not limited to, a coarse-grained API for discovering the available types in the system and retrieving instances of those types and their related metadata, checking of entitlements ensuring that the active user can only perform activities on the system that they entitled to perform (typically involving create, read, update, and delete activities), caching of information and ensuring freshness of data, and concurrency management for multiple updates to the system. For efficiency reasons, these services can be provided as in-process interfaces only. However, their coarse-grained nature can mean that a web services façade could be placed around them for cross-system interoperability. The Web Authentication service **115** is responsible for identifying and authenticating the user interacting with the system. The designer application **135** is used to create and configure applications by manipulating the schemas. Reference Data DAC **165** (Discretionary Access Control) is used to restrict access to reference data based on the identity of subjects and/or groups to which they belong. Business Object Data DAC **170** (Discretionary Access Control) is used to restrict access to all business objects based on the identity of subjects and/or groups to which they belong. Schema File DAC **175** (Discretionary Access Control) is used to restrict access to all schema files (XML Schema Definition files - with file extension XSD **185**) based on the identity of subjects and/or groups to which they belong. A business object service **150** provides life-cycle methods for creating, destroying and locating business objects.

An instance can be created for each of the services in the service configuration. The service configuration is an XML file describing the name of the service, the name of the stored procedures used to access data for instances managed by that service, and other per-service configuration such as the caching policy for the service. For example, a business object service **150** can be provided through the BusinessObjectService class. In one embodiment, there are four business object services **150**. First, a user domain service **140** can be used to manage companies, users, and groups of users. Second, a security service can be used to manage instances of "securities" (i.e., financial products or deals) and their related data (e.g., order books). Third, a data list service or reference data service **145** can be used to manage lists of data, such as lists of currencies and lists of issuers. Fourth, a general service, also known as the business domain service, can be used to handle generic data.

The service locator pattern can be used internally to discover the available services and obtain an instance of that service. For every business object service (used to manage instances of business objects), there can be a corresponding metadata or schema service **155** (provided through a class, e.g., a SchemaService class), which can be used to manage the available metadata in the system on a per-service basis.

The system can be a metadata-driven system, using XML schemas (XSD) as the vehicle for the metadata. These schemas can contain the core simple types of the system (e.g., date, money, percentage, and rating) and common complex types that are built out of these types (e.g., security, order book). The complex types are further arranged into authorities, i.e., schemas that define what can be added or removed from a schema. By building on these underlying authority schemas, the system can create new types that are specific to end-users. This allows the system to create and instantiate types that have not been seen before, such as a model for a new type of structured debt.

Because the system needs rules, XSD can be used for describing the rules. Basically, schema can be an XSD document that can be a basic building block for the system. In one example, although a simple user may only see a global menu, the user can still interact with a plurality of schema for generating the page.

In effect, the schemas form a hierarchy, beginning with the base authority and extending to end-user specific schemas. For example, the following exemplary schemas are in order from more specific to less specific: simple types.xsd, complex types.xsd, base authority.xsd, base security.xsd, default security.xsd, and lunar.xsd. After the creation, each schema exists independently. As a result, if a schema changes, it will not affect other inherited schemas.

When new schemas are created from an existing schema, the existing schema becomes the base schema for the new schema. Optional components in the base schema are removed when the new schema is created, but these can be re-added as necessary by the schema designer. The type of each field can be changed to any other existing type. Some of the types are compatible, which means that the existing instances will still be valid even though the metadata type has been changed. But if the type is changed to an incompatible type, then existing instances become invalid and, therefore, the designer will prevent the change.

The metadata held in the schemas describes the structure of an instance of that schema as well as system-specific metadata. The specific meta data can include: an internal identifier for the type allowing instances of that type to quickly find their metadata and allowing types to record their dependency on other types by ID, runtime type information describing the business object domain class that should be instantiated to manage data for the schema type, properties describing the type (e.g., a default label to use for an instance of the type), extra validation rules beyond those supported by standard XSD, type information used by the client layer **100** to render instances of that type (i.e., the control class to instantiate when building a page displaying data of that type), and view information describing in an abstract way how instances of the type should be rendered. The schema definition language may not cover all of the extra metadata that is needed to drive the system. This information is stored at the schema level, but it is not information that should appear in an instance of a document conforming to that schema. Accordingly, the information can be held in its own namespace with an "AppInfo" schema extension point.

A schema object model is provided as part of the .NET framework. The system can use this technology to process its schemas. In addition, the system can apply external schemas to validate the data held in its namespaces within the schema itself. This extra validation cannot be performed directly by the schema object model itself, because there is no support for validating a schema against anything other than the XMLSchema.xsd (commonly known as the "schema for schemas"), so this extra work can be performed by the system when processing the schema.

Having loaded and validated the schema, the system can expose the metadata contained in it through an abstraction layer in the form of a metadata domain model. This domain model exposes the schema in an object-oriented way without the client of the model having to cope with the complexities of the XSD itself. In addition, this model more accurately reflects the meaning of the metadata held in the schema, effectively joining concepts from the main schema namespace to concepts held in the extra system namespace. Referring to **FIG.13A and 13B**, a structure of the metadata and the instances that are based on that metadata are shown. Metadata classes are shown with shading.

The metadata class model is split into approximately two distinct areas. First, classes representing the elements from the schema describe the types that were found and the hierarchical relationship between those types. Second, view rendering metadata describes in an abstract way how instances of the type should be rendered.

A schema can be given a category, allowing that schema and instances based on it to be logically grouped (also known as "silo'd") together. Categories can be as simple as a single word or as complex as, for example, A/B/C/D, wherein category D is a subcategory of C, which is a subcategory of B, which is a subcategory of A.

When an instance is created from an underlying schema, the structure that is built confirms to the minimum validity requirements specified by the schema. For example, if the schema specifies that there must be a minimum of three elements at a given level, the system automatically creates three initial elements. The metadata dictates the classes that will be instantiated to hold and manage the instance data. These classes can use the metadata to validate themselves, apply entitlement checks, and determine what operations may be performed on them. For example, a parent would allow a child to be created or deleted according to the rules defined in the underlying schema and subject to permission checks.

The schemas and their instances form hierarchical structures that are, in many ways, similar to XML documents. The structures can be treated as XML instances on-demand. This can be achieved by a BusinessObjectNavigator class that implements the interfaces, i.e., inherits from an abstract class, mandated by the Microsoft XML framework. With this mechanism in place, the system is able to: validate its domain models using standard XML schema validation, apply XPATH expressions to its domain model to easily query the object model, and convert the object model directly to XML allowing the easy export of data. The XPATH language has been extended using custom functions to offer functionality not found in the core language. These functions implement the IXsltContextFunction interface and are automatically discovered at runtime using reflection to make them available to the rest of the system.

A "domain" describes all of the schemas and instances that are available in the system. From the root of the domain, it is possible to navigate to find any information that exists in the system. The domain itself is built dynamically using the schema categories to define its structure. For example, if there are two schema categories, A and B, the domain can build itself to look like a single instance with two child nodes beneath its root node named A and B. If there are three categories A, A/C, and B, then the domain will have a root with two child nodes A and B. A will have a child node itself called C. As the categories change, the domain rebuilds its structure accordingly. However, it may appear that the domain is a potentially large structure containing all of the data in the system arranged by category. In fact, the domain is a small structure containing simple instructions (in the form of query expressions) that define how the various parts of the system can be queried to find the relevant data. The domain object is exposed for querying using the "domain ()" XPATH function.

The structures built can be hierarchical tree structures. However, much of the functionality provided relies on being able to join these separate tree structures together at arbitrary levels to form graphs of objects. This can be achieved by allowing a node to define its contents using an XPATH expression, where the XPATH expression is allowed to point anywhere in the domain. Referring to **FIG. 14,** an issue list object is populated using an XPATH expression to find all of the instances of schemas categorized as "Issues." In this example, an Issue List is at level zero. The Issue List include issues A, B at level one. Each of issue A, B have an Order Book at level two, which can have a plurality of orders. Domain()/Issues/* can return all the root nodes of instances in the "Issues" category.

Schemas are stored as files and are accessed by a pluggable data access object ("DAO"). The FileSchemaDAO stores schemas under a directory name that corresponds to the service that manages the schema. The schema filename corresponds to the identifier for the schema, which is itself generated using the identity generation service. In a web-farm environment, the schemas are stored in a central location. When hosted in an ASP environment, the central location is a distributed file system ("DFS").

The system can use log4net to log events. This is a highly customizable library that supports logging to various destinations and for different levels. By default, the system can log to a rolling local log file.

The system can use at least the following third party web components: Infragistics NET Advantage, Telerik, Component Art, and Dundas. With regards to Infragistics NET Advantage, the system uses various components from this library, including the date picker, grid control, tree control, and tab control. With regards to Telerik, the main component used by the system can be the rad Editor, which is used to create custom views. With regards to Component Art, the menu component in the system can be a customized version of the Component Art menu.

Referring to **FIG. 15**, a diagram of relationships between schema is shown. All schema derive from a base schema **1510**, which is the starting point for all other schema. The system allows a user to create a new schema from the base schema **1510**, a derived schema such as a base security **1530**, or any other schema, subject to permissions. A schema component **1520** can also be imported into other schema. For example, an order book can be imported in a derived security **1540**. A list schema, shown as base list schema **1550** and derived list schema **1560**, can be accessible anywhere within the application by specifying the appropriate path. The list schema **1550** can be used to populate lists within other schemas. Lists can also access other lists. Base user/groups schema **1570** form the basis of permissioning. All schema use lists of users and groups to specify permissions. The user/group schema **1570** is bound to permissions within all other schema. A global menu **1580** is a list of menu "docking" points that specify where an entity appears within the global menu **1580**. Expressions can drive the docking position in the global menu **1580**. Some relationships between schema are defined within the core engine, e.g., user/groups being used within permissions, docking points, and global menus. All other relationships can be arbitrary and defined using a domain expression. In an exemplary embodiment, the expression is XPATH. Some schema may need to access instances of schema of the same type, e.g., a list may also reference another list. User/group instances that form the basis of permissioning may also need to be permissioned, or all users will be allowed access.

In this embodiment, the schemas and their instances form hierarchical structures which can be treated like XML documents. With this mechanism in place, the system is able to (i) validate its domain models using standard XML schema validation; (ii) apply XPATH expressions to its domain model to easily query the object model; and (iii) convert the object model directly into XML allowing the easy export of data. In this example, the XPATH language has been extended by the system using custom functions to offer functionality not found in the core language.

The system can perform at least two types of validation: primary and secondary validation. Primary validation is primitive validation at a node level. Primary validation checks that the node conforms to the constraints defined by its schema. This validation is performed by the node itself before its data is saved and by applying schema validation to the instance. Secondary validation is the checking of co-concurrency constraints that cannot be defined using the schema, e.g., a date range where the start data must be before the end date. This type of constraint is specified by an XPATH rule that must evaluate to true for the data to be considered valid.

The backend performs secondary validation checks before the data is saved, allowing the data to be valid before it is saved. This can be necessary because the data may have to be invalid for a period of time during editing, e.g., the start date may be set to be beyond the end date and the user is changing the date range, so the secondary validation check is applied only when the data is saved.

The front end of the system also applies validation checks on the client using ASP.NET validators. This front end validation is provided purely to enhance the user experience and the system does not rely on the front end providing validation.

Some of the structures are not often used and the loading of these structures can be unnecessary. As a result, the system can support lazy-loading of these parts of the structure. This lazy-loading works by only loading the parent node of a structure and then loading the child nodes on-demand. These lazy-loaded structures or, alternatively, non-lazy-loaded structures can be put in a temporary cache, which allows them to expire over a period of time as they are no longer used.

The system can make use of the ASP.NET cache object to avoid database roundtrips. At least the following object can be held in cache: business objects, schemas, child collections, and the names of ASCX templates. If an ASCX needs to be reloaded, i.e., recreated, then its name can be removed from the cache. These entries can use a sliding expiration that causes them to be removed from the cache when they have not been accessed for a given period of time. The period of time in question can be configured on a per-service basis. The cache entry is also cleared when an object or an object that it is dependent on is changed. The cache by necessity is a read-through cache. When an object is requested, its version number is first read from the database and compared to the version number held in cache. If the version in the cache is out of date, the object is removed from the cache and reloaded. The system can also perform per-request caching to prevent multiple queries for an object causing multiple version checks. In effect, once an object has been checked for a given result, the result is stored in the request cache and the check is not made again. In one embodiment, this can be achieved using the RequestCache class, which is itself an abstraction of the HttpContext.

Multiple users can simultaneously update parts of a structure and store those changes. The system can manage this concurrency using optimistic locks at the granularity of a node. This fine-grained approach can allow two users to change two individual fields in a record without necessarily causing an optimistic lock failure. This can be achieved using a unit of work pattern. The process is as follows. First, a user obtains an editable copy of a business object. Second, the user updates a field in the business object. The change is recorded in the unit of work. Third, the user saves the change. Fourth, the system begins a transaction and checks the version of the object being saved with the version in the database. This check can cause a lock to be taken on the object. Fifth, if the check succeeds (i.e., the version numbers match), the data is written to the database. Sixth, if the check fails (i.e., the version numbers do not match, meaning another user has changed the object), then object is reloaded from the database and the unit of work is re-applied to the fresh object. During the application of the unit of work, if the change conflicts with the change in the reloaded object, a concurrency check failure is raised and the user is notified.

The system can use IIS and ASP.NET to perform user authentication. The performance of the authentication depends upon how the system is deployed, but can generally fall into at least one of two categories. First, by default, the system uses forms based authentication where a current user is looked up via the system's user domain service and a password comparison is performed to authenticate the user. Second, authentication occurs when hosted with an ASP model authentication if performed using active directory. In either case, once the current user is authenticated, that user is available as the current principal on the executing thread and can be accessed from anywhere in the system. Access to the current user can be abstracted by a PermissionableEntity class.

Each view can be permissioned by an administrator or user. For example, a complex view may have five preset views, each one containing some or all of a model, grid, or the like. The administrator can permission user A to see preset view 1 and permission user B to see preset view 2. Although both user A and user B will see the same complex view, each will see a different preset view. In another example, a structured note has a summary, an issue date, an amount, and a managing bank. An administrator can permission each investor to see only their orders. In this example, the investor would be permissioned to see an OrderBook, but not the summary information, which includes the orders of all investors. In the OrderBook, the investor can be permissioned to see those orders created only by that investor. However, a trading desk, who can act as an administrator, can have access to the summary information. There are many permutations of the views and data that can be permissioned.

A permission service **160** is responsible for performing entitlement checks for a current user. Permissions may be checked at various points in the system, from access control to the ability to read schemas and parts thereof, to individual fields and individual views defined in the Schema. The permission check can look at the allow/deny setting of the permission being checked for the current user. More specifically, the permissions can define what level of access the user has for an evaluated item, ranging from more primitive action permissions create, read (or view), edit (or update or change), and delete, to more application specific permissions, such as whether the item should be visible in global or local context menus. The permissions can be driven through configuration, where the available permissions and the operations they relate to are defined in the schema. A permission may itself have been defined for a single user (which can be rare) or for a group (or multiple groups) of users.

In one exemplary embodiment, the permission service **160** process when checking entitlements is as follows. These rules are merely exemplary and can be used in any combination. These rules can use a logical model, such as AND or OR, TRUE or FALSE, to determine the outcome of a conflict. If a user exists in multiple user groups bound to the same action, a rule can decide the outcome. For example, all instances of that user can be set to "allow" else the action is denied. If a user is bound multiple times to the same action, a rule can decide the outcome. For example, all instances of that user can be set to "allow" else the action is denied. If a user is found in a user group(s) and the user is bound to an action, a rule can resolve conflicts between the user group(s) and the user. For example, both the user group(s) and the user can be set to "allow" in order to allow the action. If either the user or user group(s) is set to "deny," then "deny" will take precedence. If a user is bound to an action and the user is in a user group(s) bound to an action, the user group(s) can be ignored, else the system can use a user versus user group resolution. If a workflow clause is added to an action, e.g., allow read, if the status is launched, a rule can decide what happens when the condition fails. If "flip" is selected, "allow" will alternate to "deny" and vice-versa. If "ignore" is selected, the binding can be treated as though it did not exist.

Assuming a positive account of the initial check, the permission service 160 goes on to evaluate any rules associated with the permission. These rules can be specified as XPATH expressions that must evaluate to true for the permission to be granted. As these expressions can be pointing to other parts of the system that can change over time, a complete system workflow can be established.

**FIG. 16** shows a screenshot of the permissions section of an application designer. An administrator of a contact list can assign permissions for individuals or a group, such as i-Deal Administrators **1610**. In this particular example, the administrator can indicate by allowing or denying **1620** the group of i-Deal Administrators **1610** as allowed to read, save, see docked in parent menu, see docked in context menu, and see docked in global menu. Because the other actions are not set, the sales group is unable to access, create, edit, or delete. Similarly, if these actions were indicated as denied, the sales group would be unable to perform those actions. The administrator can also enter an XPATH expression **1630** for a workflow expression or condition.

**FIG. 17** shows a screen shot of a drill-down into an expression editor **1700** for setting up XPATH expressions to make up workflow conditions. In order to assist the administrator in the exemplary embodiment in **FIG. 16** to create an XPATH expression to indicate a status, the administrator can utilize the expression editor **1700**. The administrator can select an expression from a hierarchical list **1710**, a list **1720**, or enter the expression directly in display **1730**. If the administrator does select an expression from a list, the expression will be displayed in display **1730**. The administrator can also use the expression editor **1700** to validate an expression.

As further shown in **FIG. 16**, a designer can create and edit applications (e.g., a contact list) by managing, for example, structures, views, permissions (entitlements), workflow rules, menus, users, data, components, fields, and the like.

The person designing the application can construct business objects from an abstract object mode. In one example, an order in a security is modeled and an assignment of permissions to create or view is made for different groups. Access for different end user groups can differ, so one group of users may only view and edit orders they have created, whereas people with more authority within the client organization are allowed to view, edit and delete, or commit some other transaction on the order, e.g., allocate the order, for any orders in a security.

The permission of an end user to interact with an order (or any other business object) can be further controlled by workflow expressions. Workflow expressions can make a specific permission available (or in some cases preventing a specific permission) when some other attributes of the security are true. As a result, for example, an order on a security cannot be placed unless the security is launched (or the security status is "launched"). Thus, the flow of orders (visibility of orders) and availability of certain transactions on orders can be modeled.

Allocation of a security is a sample operation that is, normally, not directly associated with permission level object actions, but can still be modeled or managed in the same way. To allow allocation functionality, additional fields can be added to the order and special permissions are associated with these fields so that the fields are not visible to the user until the security is being allocated (e.g., security state is "allocating"). In this state, the traders can see a column of data in the order book where they may assign or adjust allocations of a pot to individual investors, which can also be calculated by the system. Typically, sales people cannot make changes to their orders during this time. When the traders have made the final allocation, the state of the security is changed to reflect the fact that the security is not "allocated." Sales people can then see the outcome of the allocation.

Referring to **FIG. 18**, a start request **1800** loads a business object **1810**. The business object is filtered based upon read permission. When the complete business object is loaded, parts that cannot be read by the user are filtered out. The business object is filtered based on read permissions **1820**. The filter views are based on view read permissions **1830**. Data is rendered into view based on the permissions **1840**. The system creates editable controls for the data where read and edit are allowed on the field and read-only control where read is allowed, but not edit. The view is then output to the user.

Workflow and workflow rule are general terms that describe how various components interact with each other and how and when these components are allowed to interact with the user. Workflow rules can be assigned to:

1. Read, write, edit and delete permissions for each node (a discrete piece of data) in the entire application. For example, a workflow rule can be assigned to an orderbook read permission and separately for each field within the orderbook.

2. Read and edit permissions for views.

3. Display characteristics of data and presentation. For example, a field can be rendered with a red background if the orderbook is closed and blue if it is open. Similarly, the field might display "closed" if it is closed and "open for orders" if it is open. Each of these conditions can be managed by workflow rules.

A user's experience will be governed by the execution of one or more workflow rules. In one exemplary embodiment, the user can only logon because of the existence of a workflow rule authorizing their access.

The system and methods described herein have a workflow that can allow a series of rules to control different aspects of the system. For example, a user will see one view of a table having 24 columns. If the user requests a view between 2 and 3 AM, only column 2 is shown to the user. The individual fields can have a workflow rule that say that if time equals X, then read equals true for those users. In another example, the system can show a field if it is between the hours of 4 and 5 PM in a particular country. The designer can create any number of these rules. A status field can be added, e.g., open/close, up/down, red/blue. A group can then be created, such as a different group for each weekday. In the view, a user can only see a particular day, e.g., Monday, if it is Monday. The field can automatically calculate based on the day.

In one exemplary embodiment, a workflow rule can be simple, such as:

Orderbook: read=True

Alternatively, the workflow rule can be more complex, such as:

read = True if DealState='Open' and sum(orders) < max_order_value

These examples are understood to not be literal examples of coding and programming language, but an example of the type of structuring that can be used. Workflow rules can also govern where an instance (e.g., a security or a list) appear (i.e., docked) within a global menu system.

Rules can be set up to establish a minimum and/or a maximum value for a number of entries, such as the number of orders in an order book. In one example, a user can define the minimum value as 1 and a maximum value as 5. Accordingly, in this example, a user would not be able to enter more than 5 orders in the order book. By setting a minimum value to 1, the system can recognize that the filed should be automatically generated.

Referring to **FIG. 19**, a workflow diagram is shown. First, customer requirements are analyzed 1910. Using designer, a series of discrete entities, including securities, menus, and lists, are built **1920**. For each new entity, views are added **1930**. In one example, a list can require only a single view. In another example, a security can have 50 to 100 or more views. For each new entity, workflow rules are added **1940**. Each entity is tested as a discrete item and adjusted where necessary **1950**. Each entity is tested as part of the application and adjusted where necessary **1960**. Finally, each entity is tested as part of the application for each user, group, or role perspective and adjusted where necessary **1970**.

In one exemplary embodiment, the system writes trades away to a remote system. A trade, in this particular embodiment, refers to an electronic exchange of cash to satisfy a transaction. For example, the system can be used to build a book of orders for a security. The order book is closed once the issue/security has been sold. Each order then needs to have a trade generated. The system achieves straight-through processing to internal systems by creating a trade book (i.e., a list of trades), which is then transmitted to an external system. Each individual trade (which is typically one trade per order) can be sent to the remote system. The status of the transmission for each trade is returned to the system and displayed adjacent to the appropriate trade. The system can select parts of an instance that need to be transmitted. XPATH can be used to select the trades and XPATH extensions can be used to send the trades to the remote systems. One example of an XPATH command used to select and send the trades can be:

/OrderBook/Trades/Result=sendtrades(/OrderBook/Trades/*)

The system can be viewed as an engine abstracted away from any vertical application. Therefore, the process can relate to e-mails being sent to an e-mail server or, alternatively, expense forms being submitted to a human resources department. The system can select a target series of nodes from its model/domain and process these using one or more server side processes.

In the exemplary embodiment shown in **FIGS. 1** and **2**, the data access layer **110** can comprises a database, such as a SQL server **180, 202**, to store instance data. In one embodiment, the SQL server **202** can replicate data to a second SQL server **203** for auditing (compliance) purposes. The data access layer can additionally comprise a distributed file system **204**, an ASP.NET state server **205**, and a PDF writer **206**, which can create PDF files from HTML. In another embodiment, the system can be built using the IIS **208,** ASP.NET **205,** and/or the SQL server **202.**

The database can support a configurable and dynamic structure without requiring the database to be taken offline. In other words, a relational table structure found in the database deals with abstract concepts (e.g., hierarchies of nodes) rather than large numbers of relational tables. This table structure can be repeated for each of the main services in the system and the stored procedures used to access them are also set-up per-service. Beyond these data structures, the system can have at least the following tables. First, a table holding the next available identity by category name.

This can be used by the identity generation service. Second, reference data tables used to hold forward curve information. This can be used by the reference data service **145**. The relational model held in the database may appear simple, but reflects the flexible nature of the software. Referring to the exemplary structure in **FIG. 20,** the main structure used by the system is composed of two tables, a first table **2000** holding business object information and a second table **2010** holding the hierarchical node structure that is owned by that business object. Each node in the hierarchical structure is described by a complete data row in the node table **2010** and contains references to previous sibling nodes, next sibling nodes and parent nodes. When all nodes for a business object have been read in the hierarchy, it can be processed by following the references.

The data can be retrieved from the database using traditional relational queries. However, the business model (domain) can be queried using XPATH. The XPATH query is issued within a view and the XPATH is translated by the object model into a relational database request.

All access to the database is via stored procedures. The main stored procedures are capable of returning header information for business objects (to determine which objects are available and their version numbers), retrieving a node hierarchy for a given parent node, and updating, deleting and adding nodes. The tables and stored procedures are designed to allow auditing via replication. Access to these stored procedures can be provided via COM+ components that can extend the Phoenix Generic DAC (Discretionary Access Control) used to restrict access to objects based on the identity of subjects and/or groups to which they belong.

Referring to **FIG. 21**, a block diagram of a system controller **101** is shown. The system controller **101** can be used to host all of the services and processes as defined in **FIGS. 1 and 2.** The system controller **101** can process, store, search, serve, identify, instruct, generate, match, and/or update recordings, expirations, and/or other related data.

Typically, users, which may be people and/or other systems, engage information technology systems (e.g., commonly computers) to facilitate information processing. In turn, computers employ processors to process information. Such processors are often referred to as central processing units ("CPU"). A common form of processor is referred to as a microprocessor. A computer operating system, which, typically, is software executed by the CPU on a computer, enables and facilitates users to access and operate computer information technology and resources. Common resources employed in information technology systems include: input and output mechanisms through which data may pass into and out of a computer; memory storage into which data may be saved; and processors by which information may be processed. Often, information technology systems are used to collect data for later retrieval, analysis, and manipulation, commonly, which is facilitated through database software. Information technology systems provide interfaces that allow users to access and operate various system components.

In one embodiment, the system controller **101** can be connected to and/or communicate with entities such as, but not limited to: one or more users from user input devices **111**; peripheral devices **112**; a cryptographic processor device **128**; and/or a communications network **113**.

Networks are commonly thought to comprise the interconnection and interoperation of clients, servers, and intermediary nodes in graph topography. It should be noted that the term "server" as used throughout this disclosure refers generally to a computer, other device, software, or combination thereof that processes and responds to the requests of remote users across a communications network. Servers serve their information to requesting "clients." The term "client" as used herein refers generally to a computer, other device, software, or combination thereof that is capable of processing and making requests and obtaining and processing any responses from servers across a communications network. A computer, other device, software, or combination thereof that facilitates, processes information and requests, and/or furthers the passage of information from a source user to a destination user is commonly referred to as a "node." Networks are generally thought to facilitate the transfer of information from source points to destinations. A node specifically tasked with furthering the passage of information from a source to a destination is commonly called a "router." There are many forms of networks such as local area networks ("LANs"), Pico networks, wide area networks ("WANs"), wireless networks ("WLANs"), etc. For example, the Internet is generally accepted as being an interconnection of a multitude of networks whereby remote clients and servers may access and interoperate with one another.

The system controller **101** can be based on common computer systems that can comprise, but are not limited to, components such as a computer systemization **102** connected to a memory **123**.

A computer systemization **102** can comprise a clock **131**, CPU **103**, a read only memory ("ROM") **106**, a random access memory ("RAM") **138**, and/or an interface bus **107**, and most frequently, although not necessarily, are all interconnected and/or communicating through a system bus **104**. Optionally, the computer systemization may be connected to an internal power source **186**. Optionally, a cryptographic processor **126** can be connected to the system bus. The clock **131** typically has a crystal oscillator and provides a base signal. The clock **131** is typically coupled to the system bus and various clock multipliers that will increase or decrease the base operating frequency for other components interconnected in the computer systemization. The clock **131** and various components in the computer systemization **102** can drive signals embodying information throughout the system. Such transmission and reception of signals embodying information throughout a computer systemization may be commonly referred to as communications. These communicative signals can further be transmitted, received, and the cause of return and/or reply signal communications beyond the instant computer systemization to: communication networks, input devices, other computer systemizations, peripheral devices, and/or the like. Of course, any of the above components can be connected directly to one another, connected to the CPU, and/or organized in numerous variations employed as exemplified by various computer systems.

The CPU can comprise at least one high-speed data processor adequate to execute program modules for executing user and/or system-generated requests. The CPU may be a microprocessor such as AMD's Athlon, Duron and/or Opteron; IBM and/or Motorola's PowerPC; Intel's Celeron, Itanium, Pentium, Xeon, and/or XScale; and/or the like processor(s). The CPU interacts with memory through signal passing through conductive conduits to execute stored program code according to conventional data processing techniques. Such signal passing facilitates communication with the system controller and beyond through various interfaces. Should processing requirements dictate a greater amount of speed, then parallel, mainframe, and/or super-computer architectures can be similarly employed.

The power source **186** can be of any standard form for powering small electronic circuit board devices such as the following power cells: alkaline, lithium hydride, lithium ion, nickel cadmium, solar cells, and/or the like. Other types of AC or DC power sources can be used as well. In the case of solar cells, in one embodiment, the case provides an aperture through which the solar cell can capture photonic energy. The power cell **186** is connected to at least one of the interconnected subsequent components of the system thereby providing an electric current to all subsequent components. In one example, the power source **186** is connected to the system bus component **104**. In an alternative embodiment, an external power source **186** is provided through a connection across the I/O interface 108. For example, a USB and/or IEEE 1394 connection carries both data and power across the connection and is therefore a suitable source of power.

Interface bus(ses) **107** can accept, connect, and/or communicate to a number of interface adapters, conventionally, although not necessarily, in the form of adapter cards, such as but not limited to: I/O interfaces **108,** storage interfaces **109,** network interfaces **139**, and/or the like. Optionally, cryptographic processor interfaces **127** similarly can be connected to the interface bus. The interface bus provides for the communication of interface adapters with one adapter as well as with other components of the computer systemization. Interface adapters are adapted for a compatible interface bus. Interface adapted conventionally connect to the interface bus via a slot architecture. Conventional slot architectures can be employed, such as, but not limited to: accelerated graphics port ("AGP"), card bus, (extended) industry standard architecture ("(E)ISA"), micro-channel architecture ("MCA"), NuBus, peripheral component interconnect (extended) ("PCI(X)"), PCI Express, personal computer memory card international association ("PCMCIA"), and/or the like.

Storage interfaces **109** may accept, communicate, and/or connect to a number of storage devices such as, but not limited to: storage devices **114**, removable disc devices, and/or the like. Storage interfaces may employ connection protocols such as, but not limited to: (Ultra) (Serial) Advanced Technology Attachment (Packet Interface) ((Ultra) (Serial) ATA(PI)), (Enhanced) Integrated Drive Electronics ((E)IDE), Institute of Electrical and Electronics Engineers (IEEE) 1394, fiber channel, Small Computer Systems Interface (SCSI), Universal Serial Bus (USB), and/or the like.

Network interfaces **139** may accept, communicate, and/or connect to a communications network **113**. Network interfaces may employ connection protocols such as, but not limited to: direct connect, Ethernet (thick, thin, twisted pair 10/100/1000 Base T, and/or the like), Token Ring, wireless connection such as IEEE 802.11 a-x, and/or the like. A communications network may be any one and/or the combination of the following: a direct interconnection; the Internet; a Local Area Network (LAN); a Metropolitan Area Network (MAN); an Operating Missions as Nodes on the Internet (OMNI); a secured custom connection; a Wide Area Network (WAN); a wireless network (e.g., employing protocols such as, but not limited to a Wireless Application Protocol (WAP), I-mode, and/or the like); and/or the like. A network interface may be regarded as a specialized form of an input output interface. Further, multiple network interfaces **139** may be used to engage with various communications network types **113**. For example, multiple network interfaces may be employed to allow for the communication over broadcast, multicast, and/or unicast networks.

Input Output interfaces (I/O) **108** may accept, communicate, and/or connect to user input devices **111**, peripheral devices **112**, cryptographic processor devices **128,** and/or the like. I/O may employ connection protocols such as, but not limited to: Apple Desktop Bus (ADB); Apple Desktop Connector (ADC); audio: analog, digital, monaural, RCA, stereo, and/or the like; IEEE 1394a/b; infrared; joystick; keyboard; midi; optical; PC AT; PS/2; parallel; radio; serial; USB; video interface: BNC, coaxial, composite, digital, Digital Visual Interface (DVI), RCA, RF antennae, S-Video, VGA, and/or the like; wireless; and/or the like. A common output device is, for example, a video display, which typically comprises a Cathode Ray Tube (CRT) or Liquid Crystal Display (LCD) based monitor with an interface (e.g., DVI circuitry and cable) that accepts signals from a video interface. The video interface composites information generated by a computer systemization and generates video signals based on the composited information in a video memory frame. Typically, the video interface provides the composited video information through a video connection interface that accepts a video display interface (e.g., an RCA composite video connector accepting an RCA composite video cable; a DVI connector accepting a DVI display cable, etc.).

User input devices **111** may be card readers, dongles, finger print readers, gloves, graphics tablets, joysticks, keyboards, mouse (mice), remote controls, retina readers, trackballs, trackpads, and/or the like.

Peripheral devices **112** may be connected and/or communicate to I/O and/or other facilities of the like such as network interfaces, storage interfaces, and/or the like. Peripheral devices may be audio devices, cameras, dongles (e.g., for copy protection, ensuring secure transactions with a digital signature, and/or the like), external processors (for added functionality), goggles, microphones, monitors, network interfaces, printers, scanners, storage devices, video devices, video sources, visors, and/or the like.

It should be noted that although user input devices and peripheral devices may be employed, the system controller may be embodied as an embedded, dedicated, and/or monitor-less (i.e., headless) device, wherein access would be provided over a network interface connection.

Cryptographic units such as, but not limited to, microcontrollers, processors **126**, interfaces **127**, and/or devices **128** may be attached, and/or communicate with the system controller. A MC68HC16 microcontroller, commonly manufactured by Motorola Inc., may be used for and/or within cryptographic units. Equivalent microcontrollers and/or processors may also be used. The MC68HC 16 microcontroller utilizes a 16-bit multiply-and-accumulate instruction in the 16 MHz configuration and requires less than one second to perform a 512-bit RSA private key operation. Cryptographic units support the authentication of communications from interacting agents, as well as allowing for anonymous transactions. Cryptographic units may also be configured as part of CPU. Other commercially available specialized cryptographic processors include VLSI Technology's 33 MHz 6868 or Semaphore Communications' 40 MHz Roadrunner 184.

Generally, any mechanization and/or embodiment allowing a processor to affect the storage and/or retrieval of information is regarded as memory **129**. However, memory is a fungible technology and resource, thus, any number of memory embodiments may be employed in lieu of or in concert with one another. It is to be understood that a system controller and/or a computer systemization may employ various forms of memory **129**. For example, a computer systemization may be configured wherein the functionality of on-chip CPU memory (e.g., registers), RAM, ROM, and any other storage devices are provided by a paper punch tape or paper punch card mechanism; of course such an embodiment would result in an extremely slow rate of operation. In a typical configuration, memory **129** will include ROM **106**, RAM **138**, and a storage device **114**. A storage device **114** may be any conventional computer system storage. Storage devices may include a drum; a (fixed and/or removable) magnetic disk drive; a magneto-optical drive; an optical drive (i.e., CD ROM/RAM/Recordable (R), ReWritable (RW), DVD R/RW, etc.); and/or other devices of the like. Thus, a computer systemization generally requires and makes use of memory.

The memory **123** may contain a collection of program and/or database modules and/or data such as, but not limited to: operating system module(s) **137** (operating system); information server module(s) **116** (information server); user interface module(s) **117** (user interface); Web browser module(s) **118** (Web browser); database(s) **119**; cryptographic server module(s) **121** (cryptographic server); system module(s) **136**; and/or the like (i.e., collectively a module collection). These modules may be stored and accessed from the storage devices and/or from storage devices accessible through an interface bus. Although non-conventional software modules such as those in the module collection, typically, are stored in a local storage device **114**, they may also be loaded and/or stored in memory such as: peripheral devices, RAM, remote storage facilities through a communications network, ROM, various forms of memory, and/or the like.

The operating system module **137** is executable program code facilitating the operation of a system controller. Typically, the operating system facilitates access of I/O, network interfaces, peripheral devices, storage devices, and/or the like. The operating system may be a highly fault tolerant, scalable, and secure system such as Apple Macintosh OS X (Server), AT&T Plan 9, Be OS, Linux, Unix, and/or the like operating systems. However, more limited and/or less secure operating systems also may be employed such as Apple Macintosh OS, Microsoft DOS, Palm OS, Windows 2000/2003/3.1/95/98/CE/Millennium/NT/XP (Server), and/or the like. An operating system may communicate to and/or with other modules in a module collection, including itself, and/or the like. Most frequently, the operating system communicates with other program modules, user interfaces, and/or the like. For example, the operating system may contain, communicate, generate, obtain, and/or provide program module, system, user, and/or data communications, requests, and/or responses. The operating system, once executed by the CPU, may enable the interaction with communications networks, data, network interfaces **139**, peripheral devices, program modules, memory, user input devices, and/or the like. The operating system may provide communications protocols that allow the system controller to communicate with other entities through a communications network **113**. Various communication protocols may be used by the system controller as a subcarrier transport mechanism for interaction, such as, but not limited to: multicast, TCP/IP, UDP, unicast, and/or the like.

An information server module **116** is stored program code that is executed by the CPU. The information server may be a conventional Internet information server such as, but not limited to Apache Software Foundation's Apache, Microsoft's Internet Information Server, and/or the like. The information server may allow for the execution of program modules through facilities such as Active Server Page (ASP), ActiveX, (ANSI) (Objective-) C (++), C#, Common Gateway Interface (CGI) scripts, Java, JavaScript, Practical Extraction Report Language (PERL), Python, WebObjects, and/or the like. The information server may support secure communications protocols such as, but not limited to, File Transfer Protocol (FTP); Hypertext Transfer Protocol (HTTP); Secure Hypertext Transfer Protocol (HTTPS), Secure Socket Layer (SSL), and/or the like. The information server provides results in the form of Web pages to Web browsers, and allows for the manipulated generation of the Web pages through interaction with other program modules. After a Domain Name System (DNS) resolution portion of an HTTP request is resolved to a particular information server, the information server resolves requests for information at specified locations on a system controller based on the remainder of the HTTP request. For example, a request such as http://123.124.125.126/myInformation.html might have the IP portion of the request "123.124.125.126" resolved by a DNS server to an information server at that IP address; that information server might in turn further parse the http request for the "/myInformation.html" portion of the request and resolve it to a location in memory containing the information "myInformation.html." Additionally, other information serving protocols may be employed across various ports, e.g., FTP communications across port **21**, and/or the like. An information server may communicate to and/or with other modules in a module collection, including itself, and/or facilities of the like. Most frequently, the information server communicates with the system database **119**, operating systems, other program modules, user interfaces, web browsers, and/or the like.

Access to the system database may be achieved through a number of database bridge mechanisms such as through scripting languages as enumerated below (e.g., CGI) and through inter-application communication channels as enumerated below (e.g., CORBA, WebObjects, etc.). Any data requests through a Web browser are parsed through the bridge mechanism into appropriate grammars as required by the system. In one embodiment, the information server would provide a Web form accessible by a Web browser. Entries made into supplied fields in the Web form are tagged as having been entered into the particular fields, and parsed as such. The entered terms are then passed along with the field tags, which act to instruct the parser to generate queries directed to appropriate tables and/or fields. In one embodiment, the parser may generate queries in standard SQL by instantiating a search string with the proper join/select commands based on the tagged text entries, wherein the resulting command is provided over the bridge mechanism to the system as a query. Upon generating query results from the query, the results are passed over the bridge mechanism, and may be parsed for formatting and generation of a new results Web page by the bridge mechanism. Such a new results Web page is then provided to the information server, which may supply it to the requesting Web browser.

Also, an information server may contain, communicate, generate, obtain, and/or provide program module, system, user, and/or data communications, requests, and/or responses.

The function of computer interfaces in some respects is similar to automobile operation interfaces. Automobile operation interface elements such as steering wheels, gearshifts, and speedometers facilitate the access, operation, and display of automobile resources, functionality, and status. Computer interaction interface elements such as check boxes, cursors, menus, scrollers, and windows (collectively and commonly referred to as widgets) similarly facilitate the access, operation, and display of data and computer hardware and operating system resources, functionality, and status. Operation interfaces are commonly called user interfaces. Graphical user interfaces (GUIs) such as the Apple Macintosh Operating System's Aqua, Microsoft's Windows XP, or Unix's X-Windows provide a baseline and means of accessing and displaying information graphically to users.

A user interface module **117** is stored program code that is executed by the CPU. The user interface may be a conventional graphic user interface as provided by, with, and/or atop operating systems and/or operating environments such as Apple Macintosh OS, e.g., Aqua, Microsoft Windows (NT/XP), Unix X Windows (KDE, Gnome, and/or the like), mythTV, and/or the like. The user interface may allow for the display, execution, interaction, manipulation, and/or operation of program modules and/or system facilities through textual and/or graphical facilities. The user interface provides a facility through which users may affect, interact, and/or operate a computer system. A user interface may communicate to and/or with other modules in a module collection, including itself, and/or facilities of the like. Most frequently, the user interface communicates with operating systems, other program modules, and/or the like. The user interface may contain, communicate, generate, obtain, and/or provide program module, system, user, and/or data communications, requests, and/or responses.

A web browser module **118** is stored program code that is executed by the CPU. The web browser may be a conventional hypertext viewing application such as Microsoft Internet Explorer or Netscape Navigator. Secure Web browsing may be supplied with 128-bit (or greater) encryption by way of HTTPS, SSL, and/or the like. Some Web browsers allow for the execution of program modules through facilities such as Java, JavaScript, ActiveX, and/or the like. Web browsers and like information access tools may be integrated into PDAs, cellular telephones, and/or other mobile devices. A web browser may communicate to and/or with other modules in a module collection, including itself, and/or facilities of the like. Most frequently, the Web browser can communicate with information servers, operating systems, integrated program modules (e.g., plug-ins), and/or the like; e.g., it can contain, communicate, generate, obtain, and/or provide program module, system, user, and/or data communications, requests, and/or responses. Of course, in place of a Web browser and information server, a combined application can be developed to perform similar functions of both. The combined application can similarly affect the obtaining and the provision of information to users, user agents, and/or the like from system-enabled nodes. The combined application can be nugatory on systems employing standard Web browsers.

A cryptographic server module **121** is stored program code that is executed by the CPU **103**, cryptographic processor **126**, cryptographic processor interface **127**, cryptographic processor device **128**, and/or the like. Cryptographic processor interfaces will allow for expedition of encryption and/or decryption requests by the cryptographic module; however, the cryptographic module, alternatively, may run on a conventional CPU. The cryptographic module allows for the encryption and/or decryption of provided data. The cryptographic module allows for both symmetric and asymmetric (e.g., Pretty Good Protection (PGP)) encryption and/or decryption. The cryptographic module may employ cryptographic techniques such as, but not limited to: digital certificates (e.g., X.509 authentication framework), digital signatures, dual signatures, enveloping, password access protection, public key management, and/or the like. The cryptographic module will facilitate numerous (encryption and/or decryption) security protocols such as, but not limited to: checksum, Data Encryption Standard (DES), Elliptical Curve Encryption (ECC), International Data Encryption Algorithm (IDEA), Message Digest 5 (MD5, which is a one way hash function), passwords, Rivest Cipher (RC5), Rijndael, RSA (which is an Internet encryption and authentication system that uses an algorithm developed in 1977 by Ron Rivest, Adi Shamir, and Leonard Adleman), Secure Hash Algorithm (SHA), Secure Socket Layer (SSL), Secure Hypertext Transfer Protocol (HTTPS), and/or the like. Employing such encryption security protocols, the system may encrypt all incoming and/or outgoing communications and may serve as node within a virtual private network (VPN) with a wider communications network. The cryptographic module facilitates the process of "security authorization" whereby access to a resource is inhibited by a security protocol wherein the cryptographic module effects authorized access to the secured resource. In addition, the cryptographic module may provide unique identifiers of content, e.g., employing and MD5 hash to obtain a unique signature for an digital audio file. A cryptographic module may communicate to and/or with other modules in a module collection, including itself, and/or facilities of the like. The cryptographic module supports encryption schemes allowing for the secure transmission of information across a communications network to enable a system module to engage in secure transactions if so desired. The cryptographic module facilitates the secure accessing of resources on system and facilitates the access of secured resources on remote systems; i.e., it may act as a client and/or server of secured resources. Most frequently, the cryptographic module communicates with information servers, operating systems, other program modules, and/or the like. The cryptographic module may contain, communicate, generate, obtain, and/or provide program module, system, user, and/or data communications, requests, and/or responses.

A system database module **119** may be embodied in a database and its stored data. The database is stored program code, which is executed by the CPU; the stored program code portion configuring the CPU to process the stored data. The database may be a conventional, fault tolerant, relational, scalable, secure database such as Oracle or Sybase. Relational databases are an extension of a flat file. Relational databases consist of a series of related tables. The tables are interconnected via a key field. Use of the key field allows the combination of the tables by indexing against the key field; i.e., the key fields act as dimensional pivot points for combining information from various tables. Relationships generally identify links maintained between tables by matching primary keys. Primary keys represent fields that uniquely identify the rows of a table in a relational database. More precisely, they uniquely identify rows of a table on the "one" side of a one-to-many relationship.

Alternatively, the system database may be implemented using various standard **15** data-structures, such as an array, hash, (linked) list, struct, structured text file (e.g., XML), table, and/or the like. Such data-structures may be stored in memory and/or in (structured) files. In another alternative, an object-oriented database may be used, such as Frontier, ObjectStore, Poet, Zope, and/or the like. Object databases can include a number of object collections that are grouped and/or linked together by common attributes; they may be related to other object collections by some common attributes. Object-oriented databases perform similarly to relational databases with the exception that objects are not just pieces of data but may have other types of functionality encapsulated within a given object. If the system database is implemented as a data-structure, the use of the system database **119** may be integrated into another module such as the system module **136**. Also, the database may be implemented as a mix of data structures, objects, and relational structures. Databases may be consolidated and/or distributed in countless variations through standard data processing techniques. Portions of databases, e.g., tables, may be exported and/or imported and thus decentralized and/or integrated.

In one embodiment, the database module **119** includes several tables, for example, **119a-c**. A users table **119a** includes fields such as, but not limited to: a user name, address, user_id, account_id, order_id, and/or the like. The user table may support and/or track multiple entity accounts on a system. An accounts table **119b** includes fields such as, but not limited to: account_id, admin_user_id (a user given administrative status to control the account), account level, user id, and/or the like. For example, a structured-products sales personnel may have their unique account_id key field used as part of the user account table as one way to track orders per sales person. A structured_product table **119c** includes fields such as, but not limited to: structured_product_id, issuer_id, issue_size _id, and/or the like.

In one embodiment, the system database may interact with other database systems. For example, employing a distributed database system, queries and data access by system modules may treat the combination of the system database, an integrated data security layer database as a single database entity.

In one embodiment, user programs may contain various user interface primitives, which may serve to update the system. Also, various accounts may require custom database tables depending upon the environments and the types of clients a system may need to serve. It should be noted that any unique fields may be designated as a key field throughout. In an alternative embodiment, these tables have been decentralized into their own databases and their respective database controllers (i.e., individual database controllers for each of the above tables). Employing standard data processing techniques, one may further distribute the databases over several computer systemizations and/or storage devices. Similarly, configurations of the decentralized database controllers may be varied by consolidating and/or distributing the various database modules, for example, modules **119a-c**. The system may be configured to keep track of various settings, inputs, and parameters via database controllers.

A system database may communicate to and/or with other modules in a module collection, including itself, and/or facilities of the like. Most frequently, the system database communicates with a system module, other program modules, and/or the like. The database may contain, retain, and provide information regarding other nodes and data, and may also be replicated at time intervals.

A system module **136** is stored program code that is executed by the CPU. The system affects accessing, obtaining and the provision of information, services, transactions, and/or the like across various communications networks.

The system module can enable the construction of various structured-product securities and customization of the manner in which information about the securities can be captured, processed and displayed via a Web client interface. The system employs the Web server and user interface modules to obtain user inputs to, for example, specify various fields to be included in one or more templates relating to a structured-product security and generates, for example, highly specific and precise term sheets.

A system module can enable access of information between nodes may be developed by employing standard development tools such as, but not limited to: (ANSI) (Objective-) C (++), Apache modules, binary executables, database adapters, Java, JavaScript, mapping tools, procedural and object oriented development tools, PERL, Python, shell scripts, SQL commands, web application server extensions, WebObjects, and/or the like. In one embodiment, the system server employs a cryptographic server to encrypt and decrypt communications. A system module may communicate to and/or with other modules in a module collection, including itself, and/or facilities of the like. Most frequently, the system module communicates with a system database, operating systems, other program modules, and/or the like. The system may contain, communicate, generate, obtain, and/or provide program module, system, user, and/or data communications, requests, and/or responses.

The structure and/or operation of any of the system node controller components may be combined, consolidated, and/or distributed in any number of ways to facilitate development and/or deployment. Similarly, the module collection may be combined in any number of ways to facilitate deployment and/or development. To accomplish this, one may integrate the components into a common code base or in a facility that can dynamically load the components on demand in an integrated fashion.

The module collection can be consolidated and/or distributed in countless variations through standard data processing and/or development techniques. Multiple instances of any one of the program modules in the program module collection may be instantiated on a single node, and/or across numerous nodes to improve performance through load-balancing and/or data-processing techniques. Furthermore, single instances may also be distributed across multiple controllers and/or storage devices; e.g., databases. All program module instances and controllers working in concert may do so through standard data processing communication techniques.

The configuration of the system controller can depend on the context of system deployment. Factors such as, but not limited to, the budget, capacity, location, and/or use of the underlying hardware resources may affect deployment requirements and configuration. Regardless of if the configuration results in more consolidated and/or integrated program modules, results in a more distributed series of program modules, and/or results in some combination between a consolidated and distributed configuration, data may be communicated, obtained, and/or provided. Instances of modules consolidated into a common code base from the program module collection may communicate, obtain, and/or provide data. This may be accomplished through intra-application data processing communication techniques such as, but not limited to: data referencing (e.g., pointers), internal messaging, object instance variable communication, shared memory space, variable passing, and/or the like.

If module collection components are discrete, separate, and/or external to one another, then communicating, obtaining, and/or providing data with and/or to other module components can be accomplished through inter-application data processing communication techniques such as, but not limited to: Application Program Interfaces (API) information passage; (distributed) Component Object Model ((D)COM), (Distributed) Object Linking and Embedding ((D)OLE), and/or the like), Common Object Request Broker Architecture (CORBA), process pipes, shared files, and/or the like. Messages sent between discrete module components for inter-application communication or within memory spaces of a singular module for intra-application communication may be facilitated through the creation and parsing of a grammar. A grammar may be developed by using standard development tools such as lex, yacc, XML, and/or the like, which allow for grammar generation and parsing functionality, which in turn may form the basis of communication messages within and between modules. Again, the configuration will depend upon the context of system deployment.

An exemplary embodiment of a system is presented herein. In this example, the system can be a flexible, 100% web-based application that can be used to model business processes and Web Applications and deliver these to end users. In this implementation, the system can abstracted away from the Applications it creates, for example, by treating each Application as a series of Components, Views (Pages), Permissions (Entitlements), Workflow rules, Menus, Users, and Data. In this example, the system comprises three main components. The core engine which the user configures by using, for example, the web-based application designer. The core engine is driven by a series of schemas which manage every aspect of the user interaction with the system.

Referring to **FIG. 35**, a screenshot of a structured note **3500** is shown according to an exemplary embodiment. In this particular example, a user can view details regarding at least one of that user's structured notes. When viewing the structured note **3500**, the user can choose to view deal detail **3510** and a term sheet **3520**, an exemplary screenshot of which is shown in **FIG. 37**. The user can also close **3540** an order to an order book **3530**, edit **3550** an order to the order book **3530**, and add **3560** an order to the order book **3530**.

A term sheet is a view that can display information or data pertaining to a security that has special meaning to an end user. The term sheet can be designed like any other view. The term sheet view can be assembled using a combination of custom, complex, and preset views to relate terms and conditions of a security to the user. The term sheet can be more than a document that is generated once and needs to be revisited when the state of the security changes. In an exemplary embodiment, the term sheet displays a live view of terms and conditions of the security. Typically, term sheets can go through a number of stages, possibly including a preliminary term sheet where terms are not finalized, and the system manages the term sheet by having a live view on the underlying information and the state of the security. For example, referring to **FIG. 37**, a screenshot of a term sheet **3700** is shown.

In some cases, the term sheet can contain a custom view component. The custom view component can facilitate the use of a company-specific branding that is often required on term sheets. The term sheet view can be configured to be exportable in a PDF format and the users can save a copy to their workstation or desktop, or make use of a document delivery system to send the term sheets to other users or customers.

Access to the term sheet can be managed similarly to the management of other views by using permissions and workflow conditions. In some instances, term sheets may not be shown out to parts of the user base unless the terms and conditions have been finalized.

In this exemplary embodiment, the term sheet is a complex view, a rendering on a screen, using data assembled in a particular way. Using the systems and methods described herein, the term sheet can appear as though it was generated from a word processing software program. However, it is recognized that the term sheet is just an exemplary application of the systems and methods described herein.

Referring to **FIG. 36**, a user can enter, edit, or delete an indication, i.e., an interest, in a security. In this particular example, as shown in this screenshot, the user can edit an indication based upon a broker **3610**, edit or enter an indication amount **3620**, a percentage cost **3630**, indicate whether the indication is hard or soft **3640**, and add any comments **3650**.

In exemplary embodiments, referring to **FIGS. 32** to **34**, the system can, at the user's request, retrieve and display on the computer screen a calendar of securities. A Calendar of securities is a list of brief descriptions of securities that can have a date such as a launch date or issue date that can be pending and therefore make the securities significant at that point in time. In **FIG. 32**, a screenshot of a calendar is shown in an exemplary embodiment where a user has a plurality of different structured notes **3200** in various stages of a deal state, such as setup **3210**, launched or allocating **3220**, and candidate **3230**. In this example, the deals are organized by the deal state. The user can view further details of each structured note deal by clicking, for example, on Deal Details **3240**. In **FIGS. 33** and **34**, a screenshot of an alternative embodiment shows a calendar function where a user can choose to view all ideas **3310**, all launched **3320**, all secondary **3330**, or all drafts **3340** of the user's listed deals. In the particular embodiment of **FIG. 33**, the user has no deals available. In **FIG. 34**, the user can view all secondary deals **3410**. Using a calendar can provide the user access to an order book or deal details without the need for navigating through other menus.

The system can be configured to use classes, which are a programming language construct that can group related instance variables and methods. A class can comprise a particular kind of metadata. The class can describe rules by which objects behave. Those objects are referred to as instances of that class. As described herein, exemplary names of classes can appear as a combination of words without spaces, which can reflect a nomenclature for naming classes using the function of the class. In one exemplary embodiment, as used herein, internal names do not have spaces.

The RenderingConfigurationOptions object can be the object used to maintain state through an entire rendering process and can be an immutable object. Any modifications can result in a new object being returned.

The system can use standard object classes for coding. For example, a ViewAction class can be used in menus and for buttons and can be responsible for launching the view either into a page or a modal dialog window. It can also contain an algorithm that can determine whether a view is editable. An HTTP get call can then be issued to one of the user controls.

SecurityNodeEditor and SecurityNodeViewer are ascx files that can be used as an entry point to all rendered screens. SecurityNodeEditor can be used for editable views and SecurityNodeViewer can be used for non-editable views. SecurityNodeViewer can use data directly from an object cache whereas SecurityNodeEditor takes a clone of the data and stores it in ViewState. Because of this additional serialization overhead, it may be preferable that the design views are editable only if necessary. SecurityNodeEditor creates an instance of SecurityElementEditor, which is responsible for registering with the business object for various events. SecurityElementEditor no longer needs to be a separated control and its functionally can be merged into SecurityNodeEditor.

A TwinTemplateHeaderControl is responsible for creating the context menu for a view and kicking off the main rendering process. The name relates to the historical functionality that has been deprecated. It can be called from SecurityElementEditor and SecurityNodeViewer. This control can also be known as ViewHeaderControl.cs.

ControlFactory is where any code related to all views can be placed. This is because the Transformer class is not called for custom views.

Custom views can have DataBind called on them and this is the only way to resolve the binding tags in the ascxs. That means the Requires DataBind flag will be set to false earlier than in auto-rendering. The LinkedViewControl has its own RequiresDataBind to take account of this.

The Transformer class performs the transformation of auto-rendered views and data into the specified output type. In the GetTransformData method, the view is reconstructed based on the data that is available data. But this may only be done if the view is of type collection, e.g., grids or charts. This is because DisparateControl, which is responsible for rendering grids, charts, and linked views, has a related algorithm that it performs to filter the metadata.

The ability to render multiple attributes, e.g., an issuer with MinOccurs 1 and MaxOccurs 5, is achieved by the use of a special case in the Transformer. A special control is used that handles the rendering of the multiple attributes. A temporary view is created that contains only the view fields (labels and values) that relate to the pertinent metadata node. This is passed to the RepeatedAttributesControl, which calls the control factory again. This is only possible in auto-rendered views in horizontal rendering (left to right), i.e., not grid and custom.

The term "interest period" ("IP") is used to refer to a coupon component within the system. Using this component, the user can create complex financial models using simple building blocks. In this particular example, the IP component works by allowing scalar and non-scalar expressions to be plugged together and then used to produce data for a given period of time. Referring to **FIGS. 25A to 25C**, a class diagram shows exemplary main classes that can be used to provide the IP component. The IP component uses a reference data service to retrieve forward curve data to model coupon structures. This data is then evaluated by an expression for each date of the interest period, causing a corresponding output value to be generated. The expressions can be chained together, allowing the output of one expression to be used as the input to another expression.

Unique identifiers can be used throughout the system for business objects, schemas, and nodes. These identifiers are generated using an identity generation service that returns the next available identity for a named category of identifiers. On the first request for an identifier, this service queries the database to reserve a range of identifiers (the range size can be 1,000 by default, for example, but can be configurable). When this range is exhausted, the service returns to the database to reserve another range and so on. In this way, different servers can be guaranteed to be able to provide unique identifiers without continually having to request the next available identifier from the database.

**FIG. 24** shows a summary of the interaction between the various components of an exemplary embodiment in order to use the systems and methods to provide a flexible application to a user. A designer application **2410**, **135** can use a plurality of schema **2420** that when processed by the core engine **2430** produces an application **2440** for viewing or interaction by a user.

The product of the designer in the application designer can be rendered for a user. As shown in the exemplary embodiment of **FIG. 23**, a web-based application interface can present to the user a viewable output based on a product created in the application designer. Using the systems and methods described herein, in one exemplary embodiment, the designer can revise or change the application based on a market change or desire of the user.

The above-described systems and methods can be implemented on a computing device, such as a personal computer, Personal Digital Assistant (PDA), internet enabled telephone, dedicated image compression/decompression device, or the like, or a separate programmed general purpose computer having a image management capabilities. Additionally, the systems and methods of this invention can be implemented on a special purpose computer, a programmed microprocessor or microcontroller and peripheral integrated circuit element(s), and ASIC or other integrated circuit, a digital signal processor, a hard-wired electronic or logic circuit such as a discrete element circuit, a programmable logic device such as a PLD, PLA, FPGA, PAL, or the like. In general, any device capable of implementing a state machine that is in turn capable of implementing the processes described herein can be used to implement the systems and techniques according to this invention.

While the embodiments illustrated herein show the various components of the system co-located, it is to be appreciated that the various components of the system can be located at distant portions of a distributed network and/or the Internet, or within a dedicated secure, unsecured and/or encrypted system. Thus, it should be appreciated that the components of the system can be combined into one or more devices or co-located on a particular node of a distributed network, such as a telecommunications network. As will be appreciated from the following description, and for reasons of computational efficiency, the components of the system can be arranged at any location within a distributed network without affecting the operation of the system. Moreover, the components could be embedded in a dedicated image encoding and/or decoding machine.

Furthermore, it should be appreciated that the various links, including the channel, connecting the elements can be wired or wireless links, or any combination thereof, or any other known or later developed element(s) that is capable of supplying and/or communicating data to and from the connected elements. The term module as used herein can refer to any known or later developed hardware, software, firmware, or combination thereof that is capable of performing the functionality associated with that element. The terms determine, calculate and compute, and variations thereof, as used herein are used interchangeably and include any type of methodology, process, mathematical operation or technique.

Furthermore, the disclosed methods may readily be implemented in software using object or object-oriented software development environments that provide portable source code that can be used on a variety of computer or workstation platforms. Alternatively, the disclosed system may be implemented partially or fully in hardware using standard logic circuits or, for example, a VLSI design. Whether software or hardware is used to implement the systems in accordance with this invention is dependent on the speed and/or efficiency requirements of the system, particular function, and the particular software or hardware systems or microprocessor or microcomputer systems being utilized. The systems and methods illustrated herein can be readily implemented in hardware and/or software using any suitable systems or structures, devices and/or software, such as JAVA®, by those of ordinary skill in the applicable art from the functional description provided herein and with a basic general knowledge of the computer and data or image processing arts.

Moreover, the disclosed methods may be readily implemented in software, e.g., as a computer program product, executed on a programmed general purpose computer, a special purpose computer, a microprocessor, or the like. In these instances, the systems and methods of this invention can be implemented as a program embedded on a personal computer such as a JAVA®, CGI or Perl script, as a resource resigning on a server or graphics workstation, as a routine embedded in a dedicated image system, or the like. The systems and methods of this invention can also be implemented by physically incorporating this system and method into a software and/or hardware system, such as the hardware and software systems of a computer. Such computer program products and systems can be distributed and employ a client-server architecture. While exemplary embodiments disclosed herein use still imagery to enable principles of the invention, these principles can also be applied to, e.g., video, medical imagining, transmission of images to wireless devices.

The embodiments described above are intended to be exemplary. One skilled in the art recognizes that numerous alternative components and embodiments that may be substituted for the particular examples described herein and still fall within the scope of the invention.

## Claims

**1.** A system comprising:

a designer application for a designer to create or edit at least one application, the designer application comprising:

at least one view comprising at least one field, wherein the designer configures the attributes of the field;

a storage device for storing information and attributes of the at least one application;
an application interface for a user to interact with the at least one application; and
a screen for displaying the information stored in the storage device regarding the at least one application for viewing by the user.

**2.** The system according to claim 1, further comprising at least one schema to drive the designer application.

**3.** The system according to claim 1, further comprising a domain that comprises all of the at least one schema as well as at least one instance.

**4.** The system according to claim 1, wherein the designer manages as least one of structures, views, permissions, workflow rules, menus, users, and data.

**5.** The system according to claim 1, wherein the designer configures a preset view comprising physical attributes of the application interface.

**6.** The system according to claim 1, wherein the designer configures a custom view comprising arrangement of the at least one field within the application interface.

**7.** The system according to claim 1, wherein the designer configures a complex view comprising at least one of:

a preset view comprising physical attributes of the application interface; and
a custom view comprising arrangement of the at least one field within the application interface.

**8.** The system according to claim 1, further comprising at least one permission regarding the user's entitlement to access, enter, edit, or delete information within at least one field.

**9.** The system according to claim 1, further comprising at least one permission regarding the user's entitlement to access at least one view.

**10.** The system according to claim 1, further comprising at least one permission regarding the user's entitlement to access a menu item.

**11.** The system according to claim 1, wherein the application interface is a web browser.

**12.** The system according to claim 1, wherein the designer and the user are members of the same entity.

**13.** A computer-implemented method for managing at least one structured product, the method comprising the steps of:

selecting one or more field names;
creating a template of the selected one or more field names;
storing the template in a storage media;
retrieving information from the storage media corresponding to the at least one selected field name to generate a term sheet; and
displaying the term sheet comprising only information corresponding to selected fields in the template.

**14.** The computer-implemented method according to claim 13, further comprising the step of replicating information in the storage media corresponding to requests for a term sheet.

**15.** The computer-implemented method according to claim 13, further comprising the step of displaying a calendar on a computer screen that denotes dates when interest rates are reset.

**16.** The computer-implemented method according to claim 13, further comprising the step of granting permission to an entity regarding the right to enter, access, or manipulate information.

**17.** The computer-implemented method according to claim 16, wherein at least one trading-desk personnel is permissioned to edit an attribute of the at least one structured product.

**18.** The computer-implemented method according to claim 16, wherein at least one client is permissioned to enter an order for the at least one structured product.

**19.** The computer-implemented method according to claim 13, further comprising the step of using a permission to enter, access, or manipulate information.

**20.** The computer-implemented method according to claim 19, wherein the step of using a permission comprises editing an attribute of the at least one structured product.

**21.** The computer-implemented method according to claim 19, wherein the step of using a permission comprises entering information for the at least one structured product.

**22.** The computer-implemented method according to claim 13, further comprising the step of automatically generating at least one menu item based upon the attributes of the structured product.

**23.** A method for revising a structured product application, the method comprising the steps of:

configuring by an administrator of a first version of the structured product application, the step of configuring comprising:

configuring at least one field;
configuring at least one view;
configuring at least one permission; and
storing the attributes of the at least one field, the at least one view, and the at least one permission; and

upon a change to a property of the structured product,
reconfiguring by the administrator of the first version of the structured product application to create a second version of the structured product application, the step of reconfiguring comprises

at least one step selected from the group consisting of:

reconfiguring the at least one field,
adding or deleting a field,
reconfiguring the at least one view,
adding or deleting a view,
reconfiguring the at least one permission, and
adding or deleting a permission;

storing the reconfigured attributes of the at least one field, the at least one view, and the at least one permission; and
displaying the second version of the structured product application.

**24.** A processor-implemented method for managing structured-products, the method comprising the steps of:

configuring a structured-product security;
configuring work-flow templates pertaining to the security, each template comprising at least one field corresponding to a property of the structured-product security;
specifying categories of permission for accessing the templates and for changing the information in the at least one field; and
displaying one of the work-flow templates to a user based upon the user's permission category.

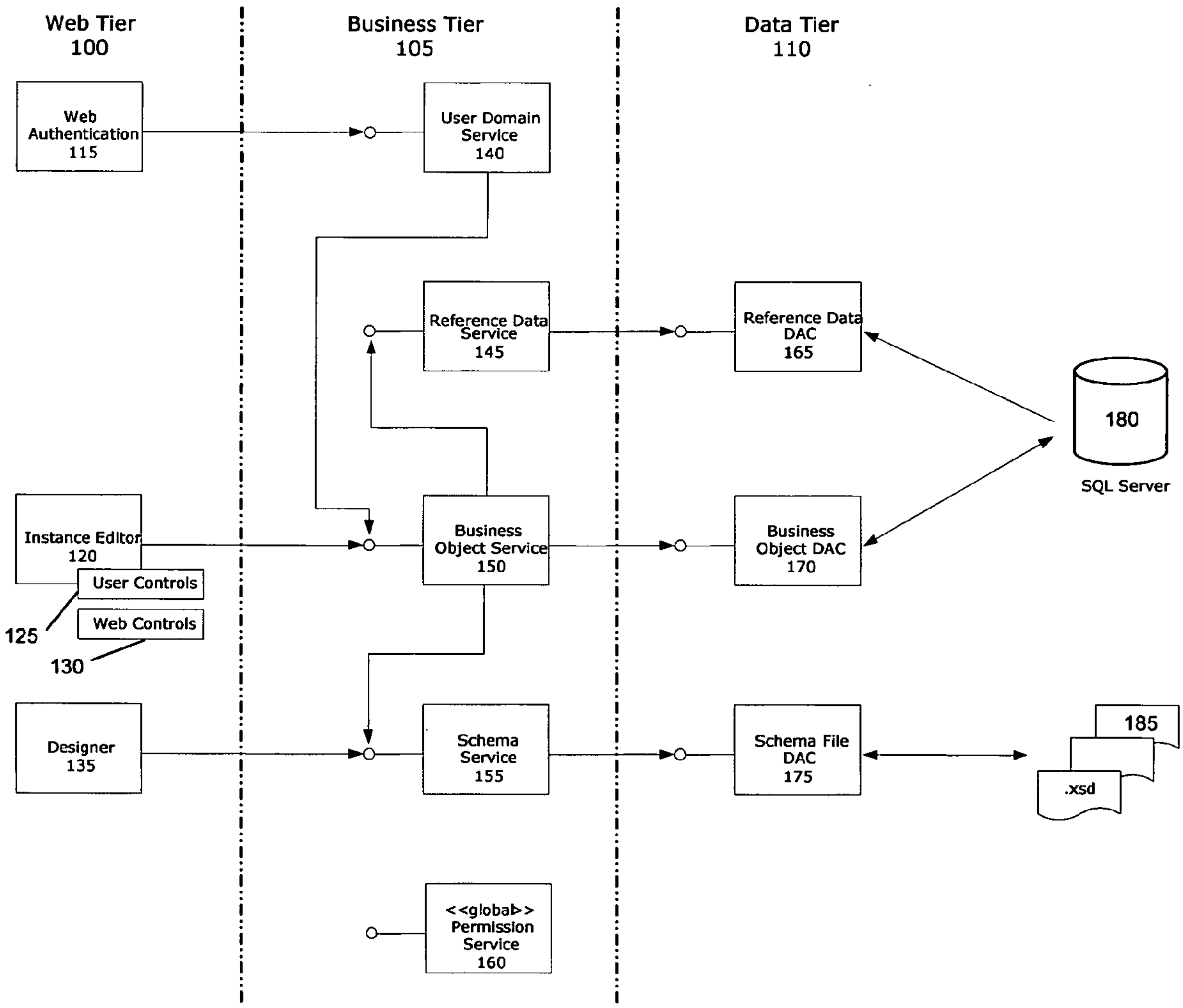
Web Tier
100
Business Tier
105
Data Tier
110
Web Authentication
115
User Domain Service
140
Reference Data Service
145
Reference Data DAC
165
180
SQL Server
Instance Editor
120
User Controls
Web Controls
125
130
Business Object Service
150
Business Object DAC
170
Designer
135
Schema Service
155
Schema File DAC
175
185
.xsd
<<global>>
Permission Service
160

FIG. 1

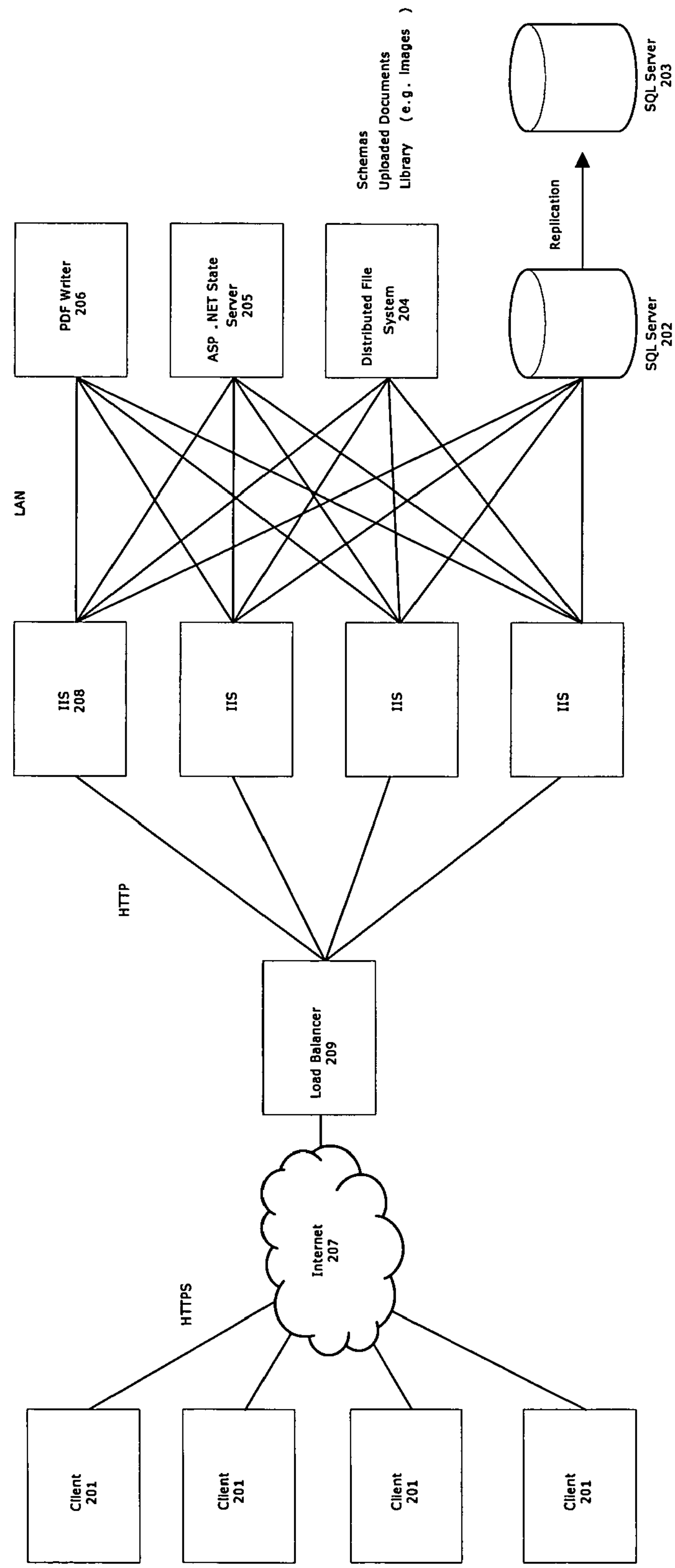
Schemas
Uploaded Documents
Library (e.g. images )
SQL Server
203
Replication
PDF Writer
206
ASP .NET State
Server
205
Distributed File
System
204
SQL Server
202
LAN
IIS
208
IIS
IIS
IIS
HTTP
Load Balancer
209
Internet
207
HTTPS
Client
201
Client
201
Client
201
Client
201

FIG. 2

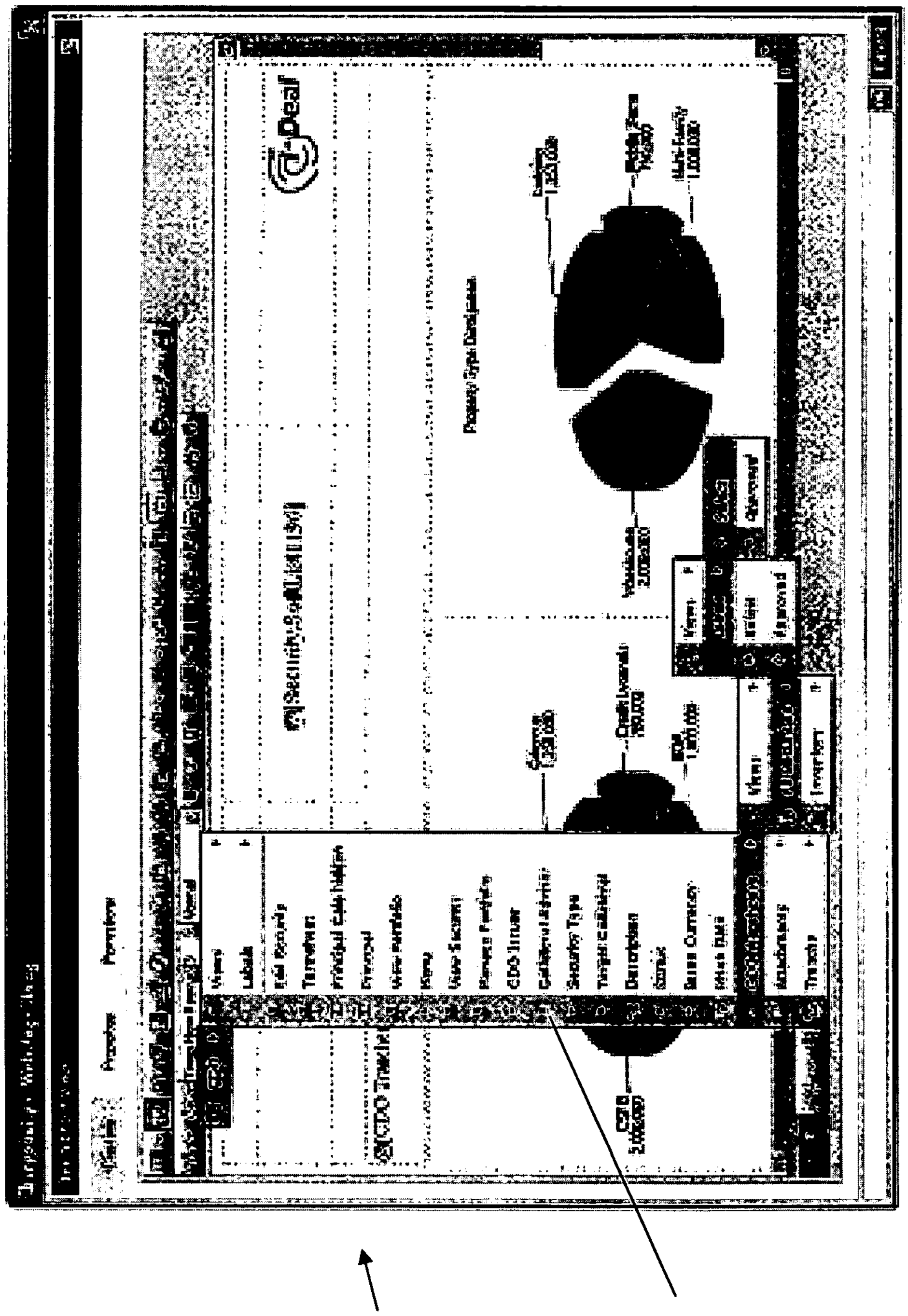

310

320

FIG. 3

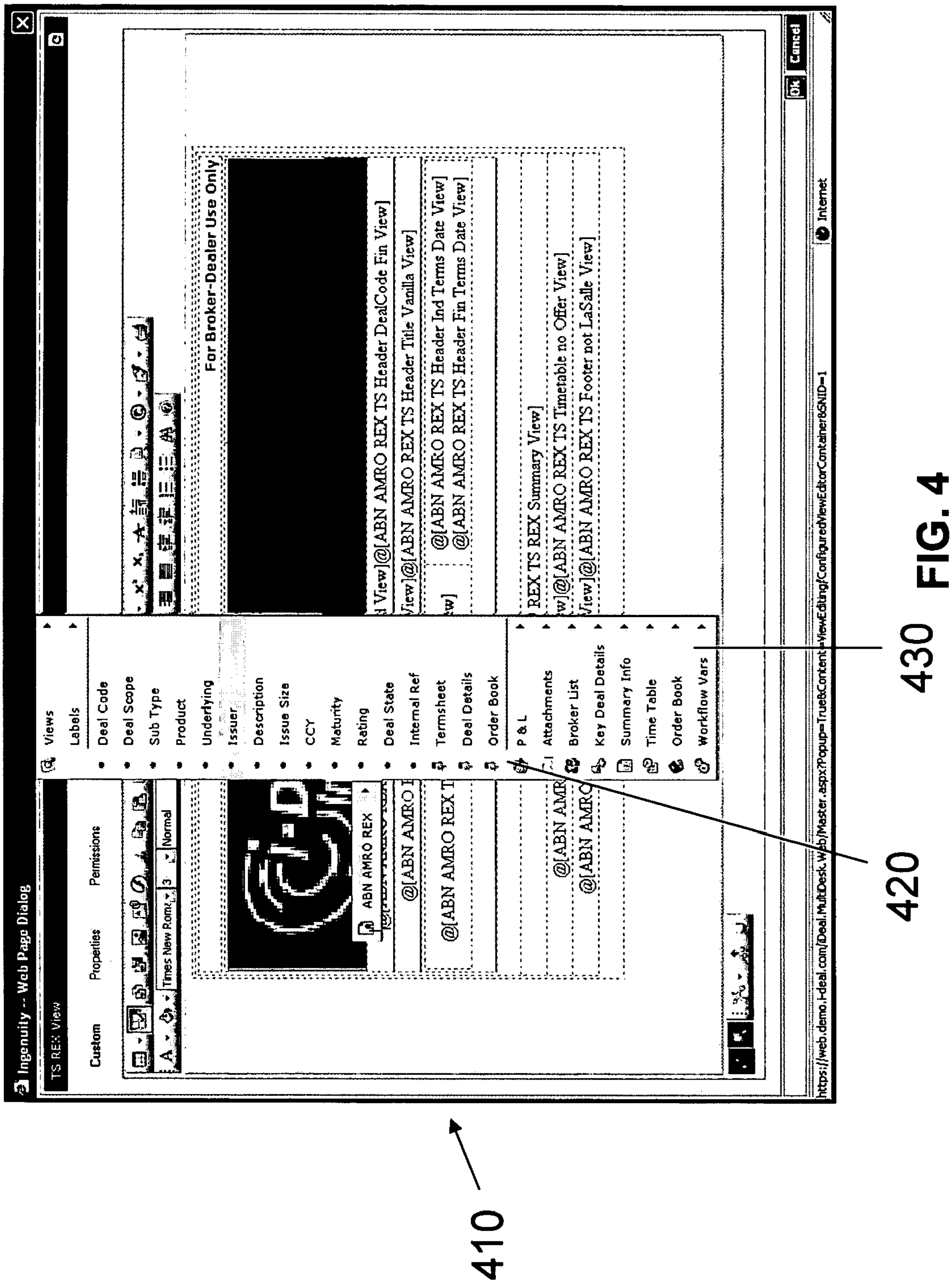
Ingenuity -- Web Page Dialog
TS REX View
Custom
Properties
Permissions
Times New Roman
Normal
Views
Labels
Deal Code
Deal Scope
Sub Type
Product
Underlying
Issuer
Description
Issue Size
CCY
Maturity
Rating
Deal State
Internal Ref
Termsheet
Deal Details
Order Book
P & L
Attachments
Broker List
Key Deal Details
Summary Info
Time Table
Order Book
Workflow Vars
ABN AMRO REX
For Broker-Dealer Use Only
View]@[ABN AMRO REX TS Header DealCode Fin View]
View]@[ABN AMRO REX TS Header Title Vanilla View]
@[ABN AMRO REX TS Header Ind Terms Date View]
@[ABN AMRO REX TS Header Fin Terms Date View]
REX TS REX Summary View]
w]@[ABN AMRO REX TS Timetable no Offer View]
View]@[ABN AMRO REX TS Footer not LaSalle View]
Internet
Ok
Cancel
410
420
430

FIG. 4

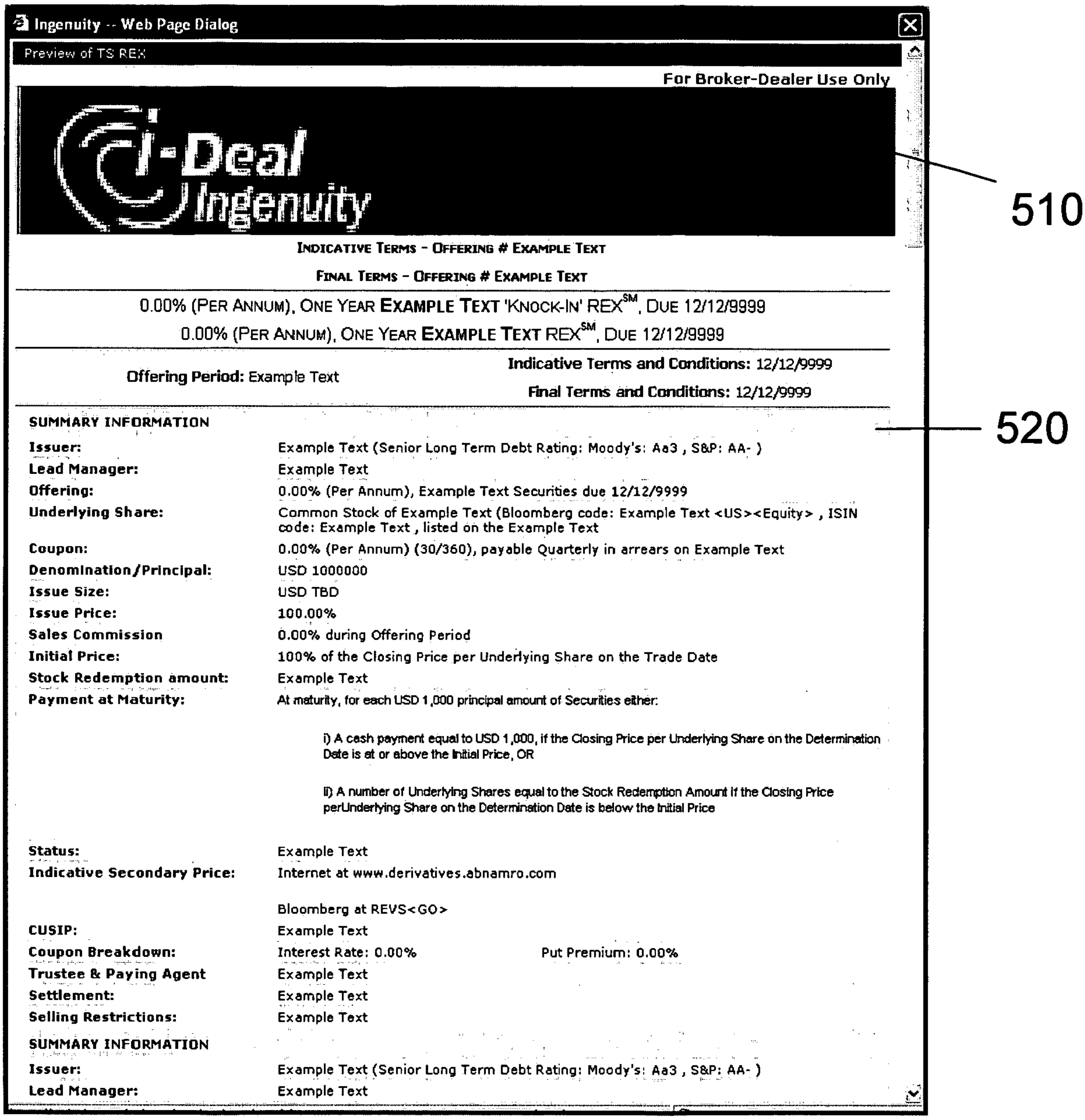
Ingenuity -- Web Page Dialog
Preview of TS REX
For Broker-Dealer Use Only
i-Deal Ingenuity
510
INDICATIVE TERMS - OFFERING # EXAMPLE TEXT
FINAL TERMS - OFFERING # EXAMPLE TEXT
0.00% (PER ANNUM), ONE YEAR EXAMPLE TEXT 'KNOCK-IN' REXSM, DUE 12/12/9999
0.00% (PER ANNUM), ONE YEAR EXAMPLE TEXT REXSM, DUE 12/12/9999
Offering Period: Example Text
Indicative Terms and Conditions: 12/12/9999
Final Terms and Conditions: 12/12/9999
520
SUMMARY INFORMATION
Issuer: Example Text (Senior Long Term Debt Rating: Moody's: Aa3 , S&P: AA- )
Lead Manager: Example Text
Offering: 0.00% (Per Annum), Example Text Securities due 12/12/9999
Underlying Share: Common Stock of Example Text (Bloomberg code: Example Text <US><Equity> , ISIN code: Example Text , listed on the Example Text
Coupon: 0.00% (Per Annum) (30/360), payable Quarterly in arrears on Example Text
Denomination/Principal: USD 1000000
Issue Size: USD TBD
Issue Price: 100.00%
Sales Commission 0.00% during Offering Period
Initial Price: 100% of the Closing Price per Underlying Share on the Trade Date
Stock Redemption amount: Example Text
Payment at Maturity: At maturity, for each USD 1,000 principal amount of Securities either:
i) A cash payment equal to USD 1,000, if the Closing Price per Underlying Share on the Determination Date is at or above the Initial Price, OR
ii) A number of Underlying Shares equal to the Stock Redemption Amount if the Closing Price perUnderlying Share on the Determination Date is below the Initial Price
Status: Example Text
Indicative Secondary Price: Internet at www.derivatives.abnamro.com
Bloomberg at REVS<GO>
CUSIP: Example Text
Coupon Breakdown: Interest Rate: 0.00% Put Premium: 0.00%
Trustee & Paying Agent Example Text
Settlement: Example Text
Selling Restrictions: Example Text
SUMMARY INFORMATION
Issuer: Example Text (Senior Long Term Debt Rating: Moody's: Aa3 , S&P: AA- )
Lead Manager: Example Text

FIG. 5

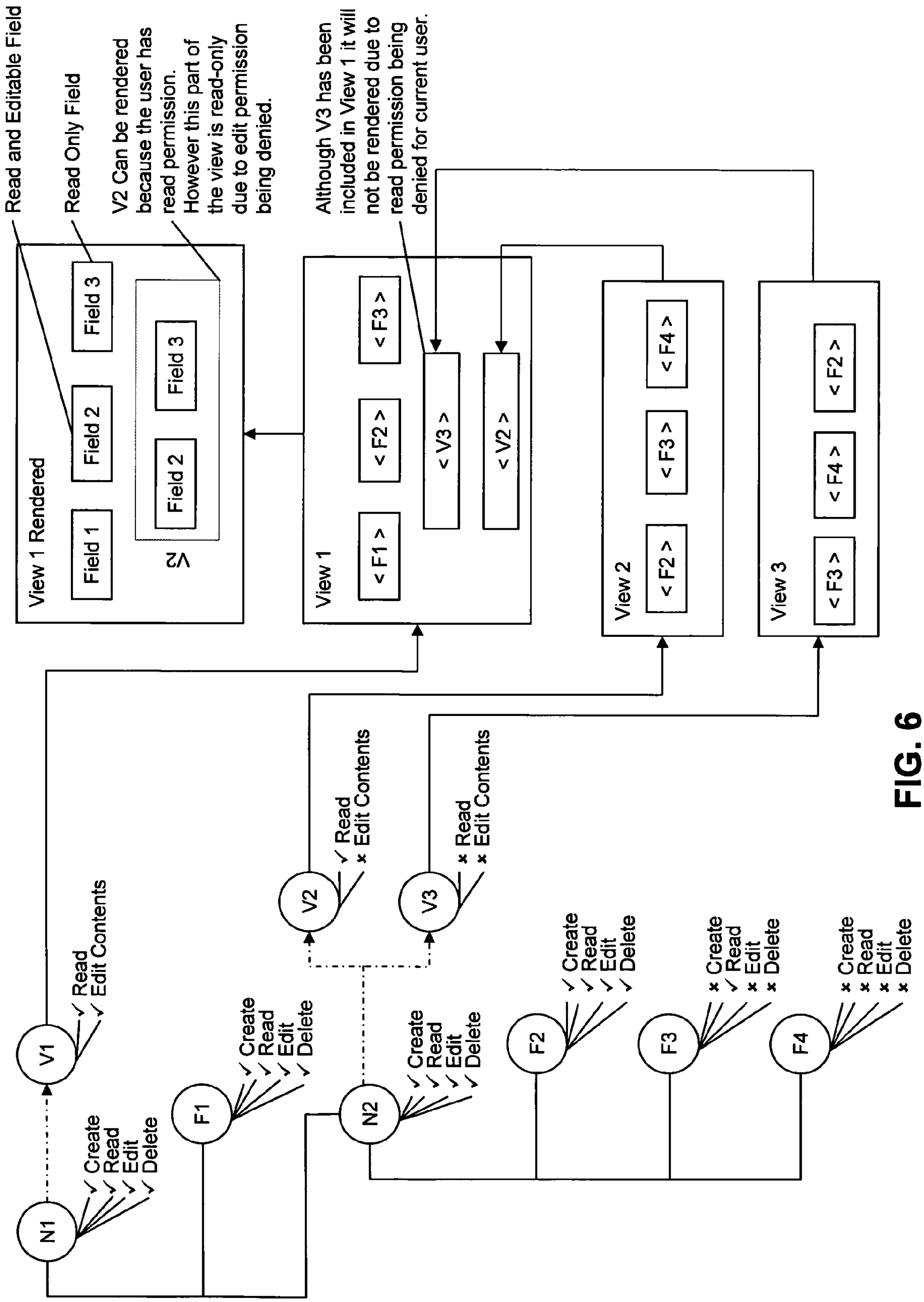
Read and Editable Field
Read Only Field
V2 Can be rendered because the user has read permission. However this part of the view is read-only due to edit permission being denied.
Although V3 has been included in View 1 it will not be rendered due to read permission being denied for current user.
View 1 Rendered
Field 1
Field 2
Field 3
V2
Field 2
Field 3
View 1
< F1 >
< F2 >
< F3 >
< V3 >
< V2 >
View 2
< F2 >
< F3 >
< F4 >
View 3
< F3 >
< F4 >
< F2 >
N1
Create
Read
Edit
Delete
V1
Read
Edit Contents
F1
Create
Read
Edit
Delete
N2
Create
Read
Edit
Delete
V2
Read
Edit Contents
V3
Read
Edit Contents
F2
Create
Read
Edit
Delete
F3
Create
Read
Edit
Delete
F4
Create
Read
Edit
Delete

FIG. 6

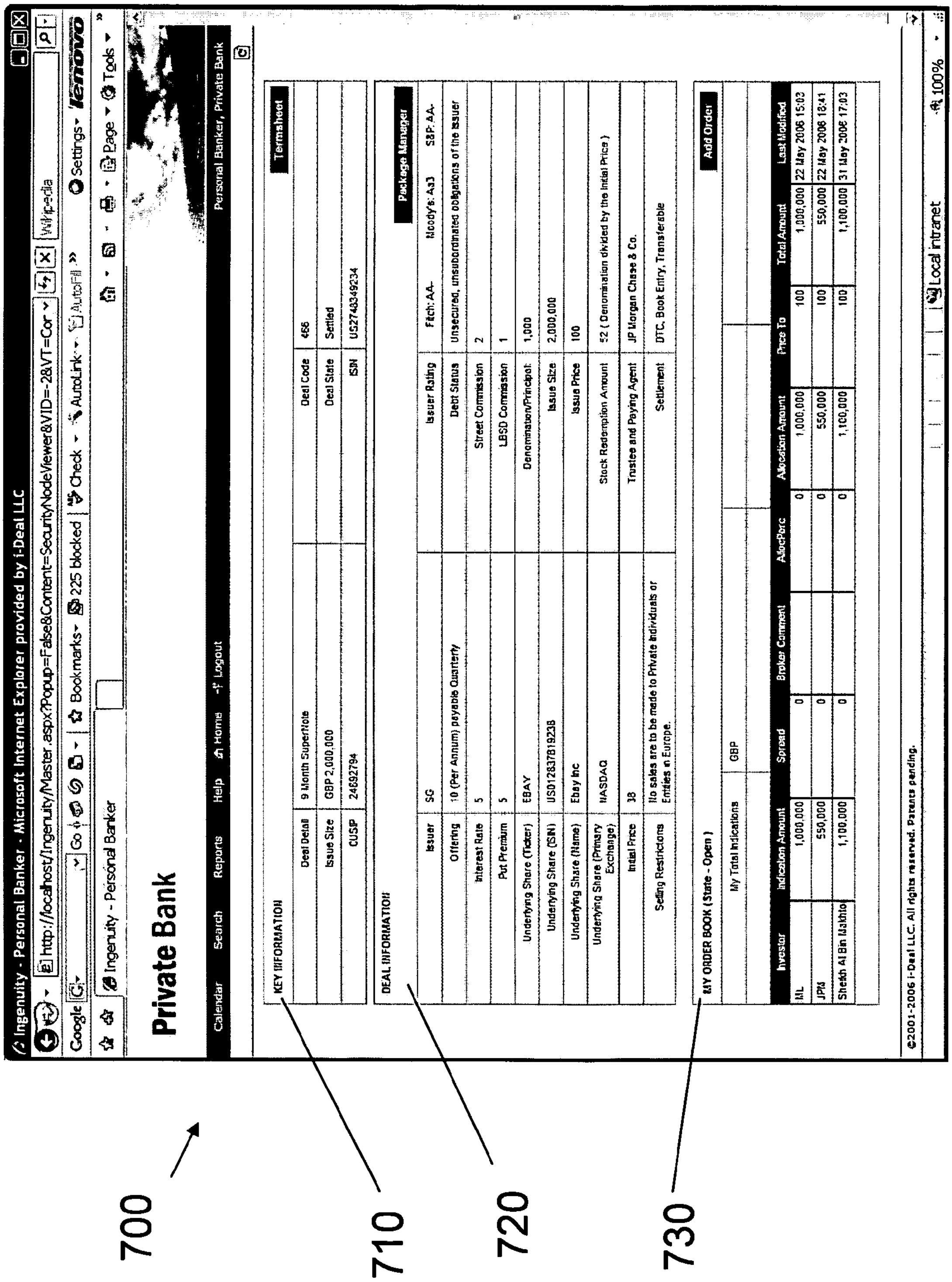
700
710
720
730
Ingenuity - Personal Banker - Microsoft Internet Explorer provided by i-Deal LLC
Private Bank
Calendar
Search
Reports
Help
Home
Logout
Personal Banker, Private Bank
KEY INFORMATION
Termsheet
Deal Detail
9 Month SuperNote
Deal Code
456
Issue Size
GBP 2,000,000
Deal State
Settled
CUSIP
24692794
ISIN
US274334923 4
DEAL INFORMATION
Package Manager
Issuer
SG
Issuer Rating
Fitch: AA-
Moody's: Aa3
S&P: AA-
Offering
10 (Per Annum) payable Quarterly
Debt Status
Unsecured, unsubordinated obligations of the issuer
Interest Rate
5
Street Commission
2
Put Premium
5
LBSD Commission
1
Underlying Share (Ticker)
EBAY
Denomination/Principal
1,000
Underlying Share (ISIN)
US0128378192 38
Issue Size
2,000,000
Underlying Share (Name)
Ebay Inc
Issue Price
100
Underlying Share (Primary Exchange)
NASDAQ
Stock Redemption Amount
52 ( Denomination divided by the Initial Price )
Initial Price
38
Trustee and Paying Agent
JP Morgan Chase & Co.
Selling Restrictions
No sales are to be made to Private Individuals or Entities in Europe.
Settlement
DTC, Book Entry, Transferable
MY ORDER BOOK ( State - Open )
Add Order
My Total Indications
GBP
Investor
Indication Amount
Spread
Broker Comment
AllocPerc
Allocation Amount
Price To
Total Amount
Last Modified
ML
1,000,000
0
0
0
1,000,000
100
1,000,000
22 May 2006 15:03
JPM
550,000
0
0
0
550,000
100
550,000
22 May 2006 18:41
Sheikh Al Bin Makhtio
1,100,000
0
0
0
1,100,000
100
1,100,000
31 May 2006 17:03
©2001-2006 i-Deal LLC. All rights reserved. Patents pending.
Local intranet
100%

FIG. 7

| Name | Value |
|---|---|
| Dock in Context Menu | ☐ |
| Dock in Local Shortcut | ☐ |
| Dock in Parent Menu | ☑ |
| Load on Demand in Menu | ☑ |
| Show Add in Parent Menu | ☑ |
| Show Delete in Menu | ☑ |
| Show References in Context Menu | ☑ |

FIG. 8

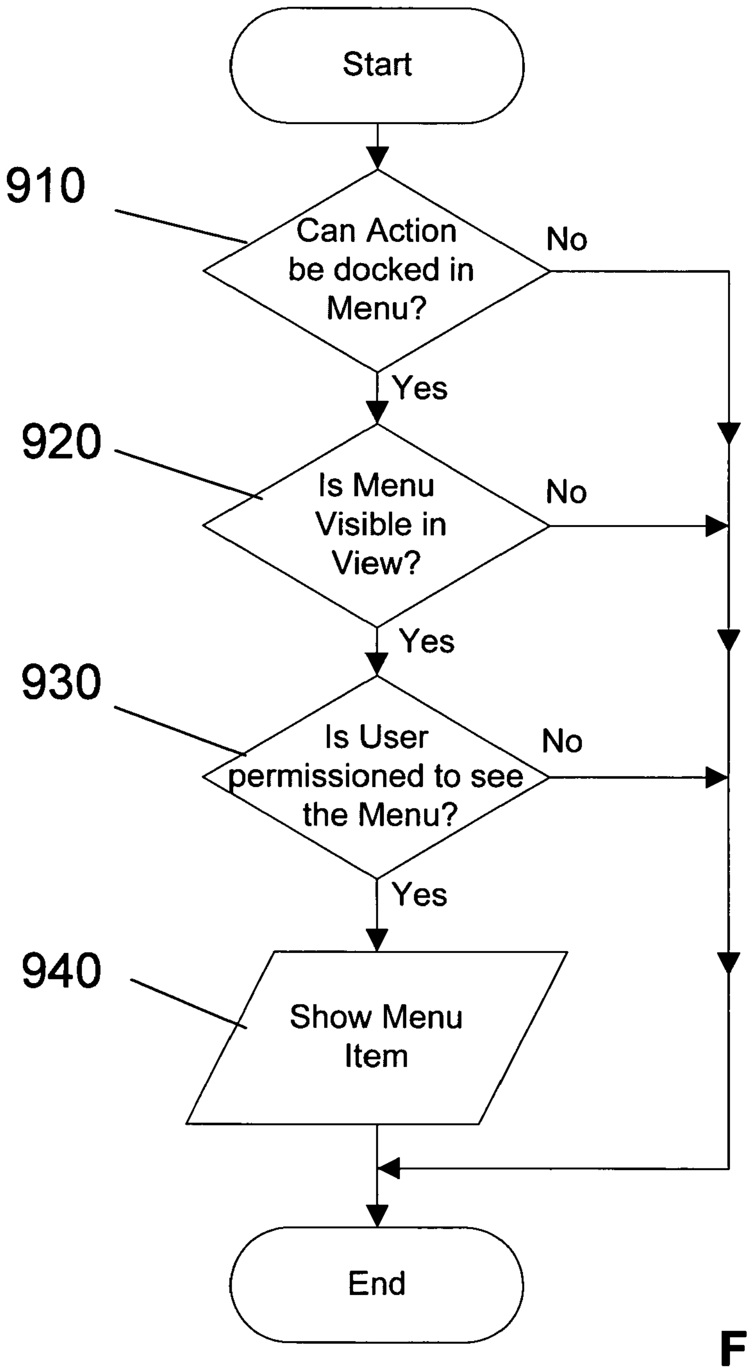
Start
910
Can Action be docked in Menu?
No
Yes
920
Is Menu Visible in View?
No
Yes
930
Is User permissioned to see the Menu?
No
Yes
940
Show Menu Item
End

FIG. 9

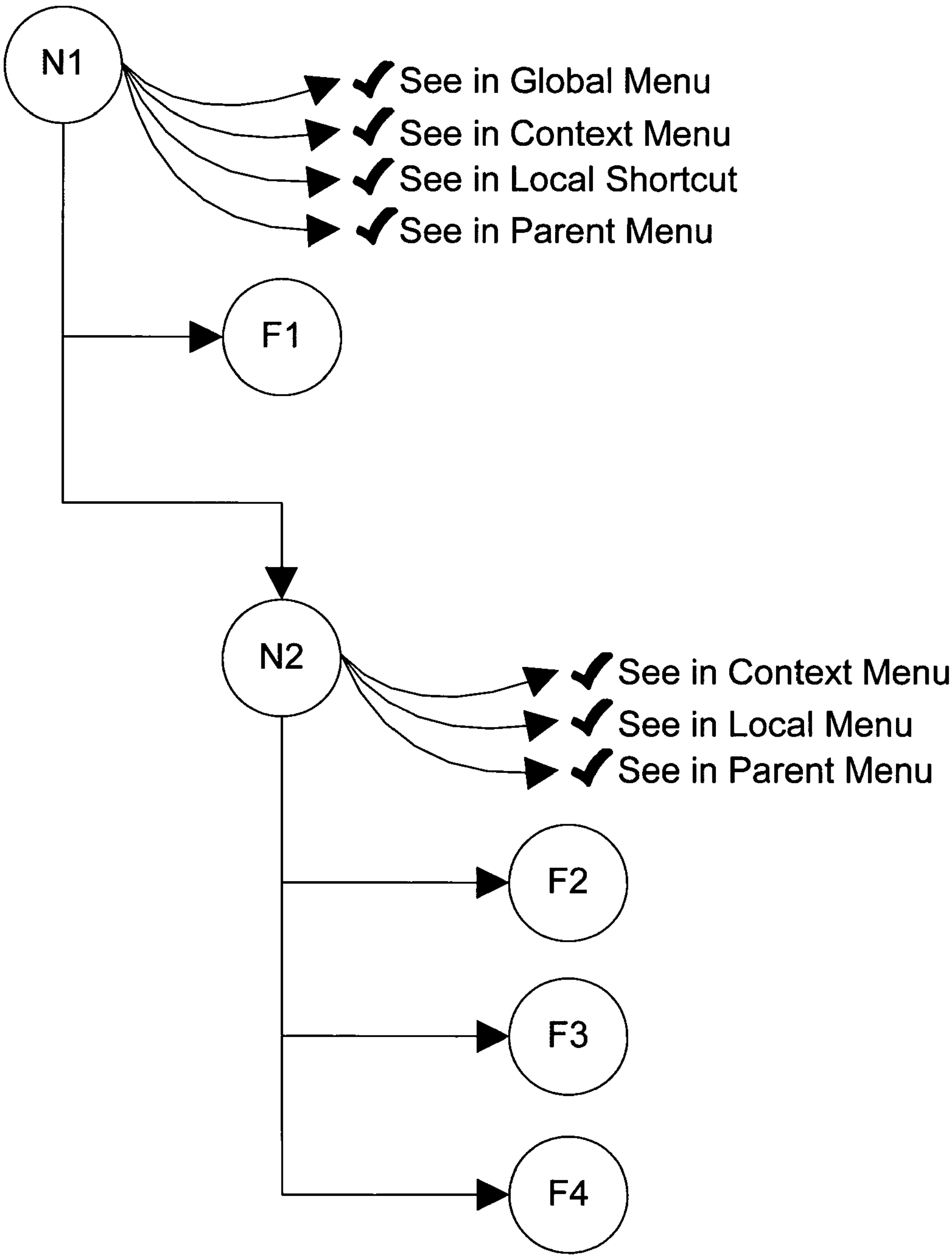
N1
See in Global Menu
See in Context Menu
See in Local Shortcut
See in Parent Menu
F1
N2
See in Context Menu
See in Local Menu
See in Parent Menu
F2
F3
F4

FIG. 10

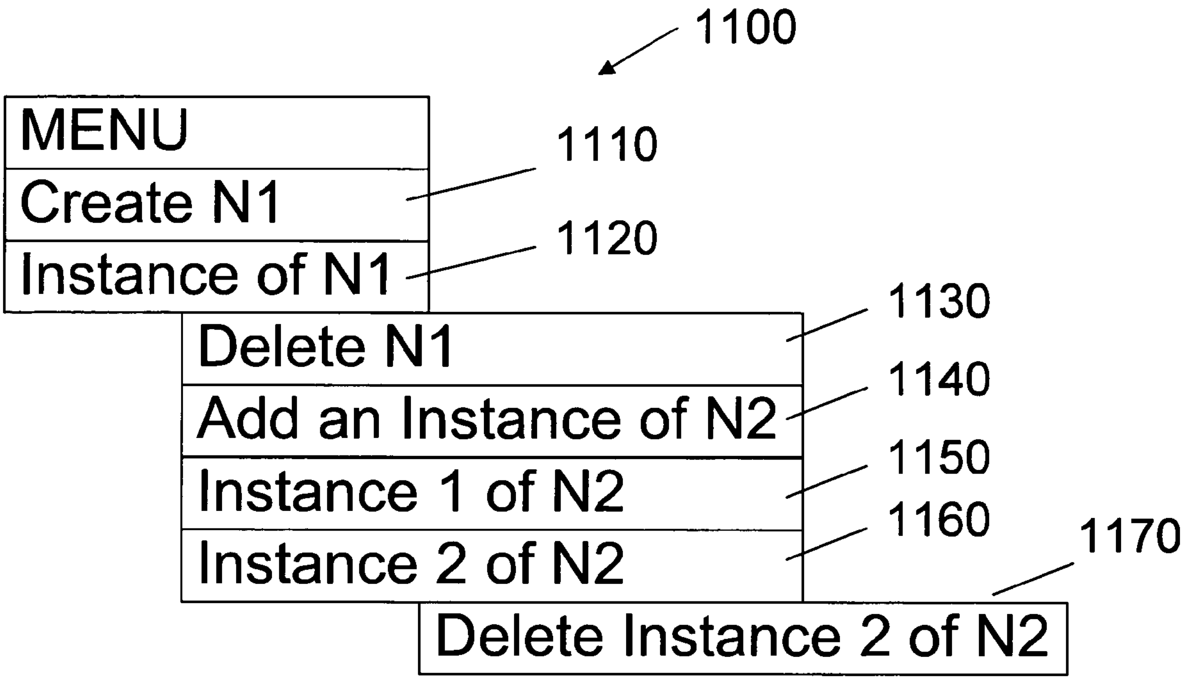
1100
MENU
Create N1
Instance of N1
1110
1120
Delete N1
Add an Instance of N2
Instance 1 of N2
Instance 2 of N2
1130
1140
1150
1160
1170
Delete Instance 2 of N2

**FIG. 11**

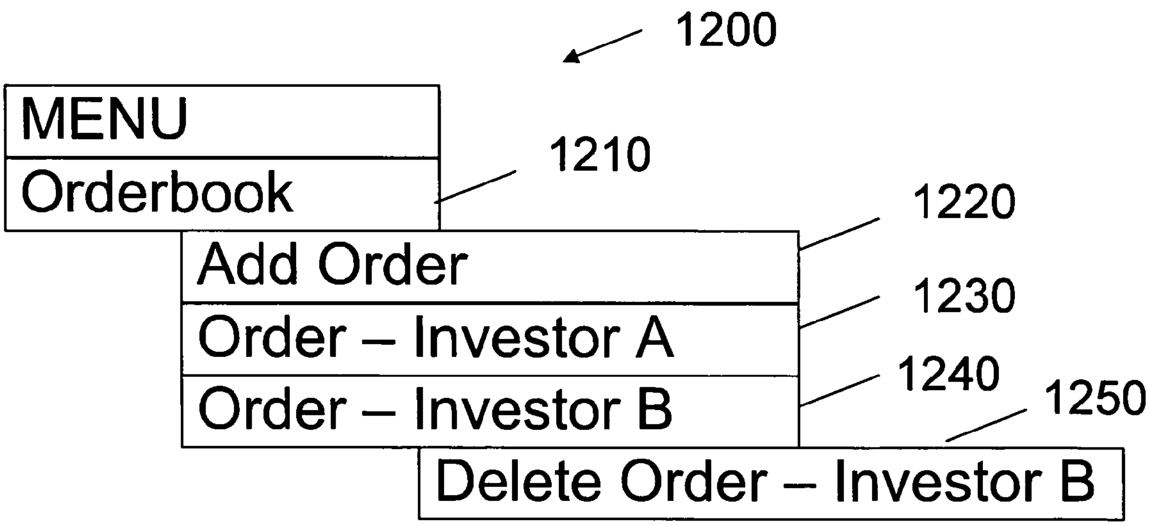
1200
MENU
Orderbook
1210
Add Order
Order – Investor A
Order – Investor B
1220
1230
1240
1250
Delete Order – Investor B

**FIG. 12**

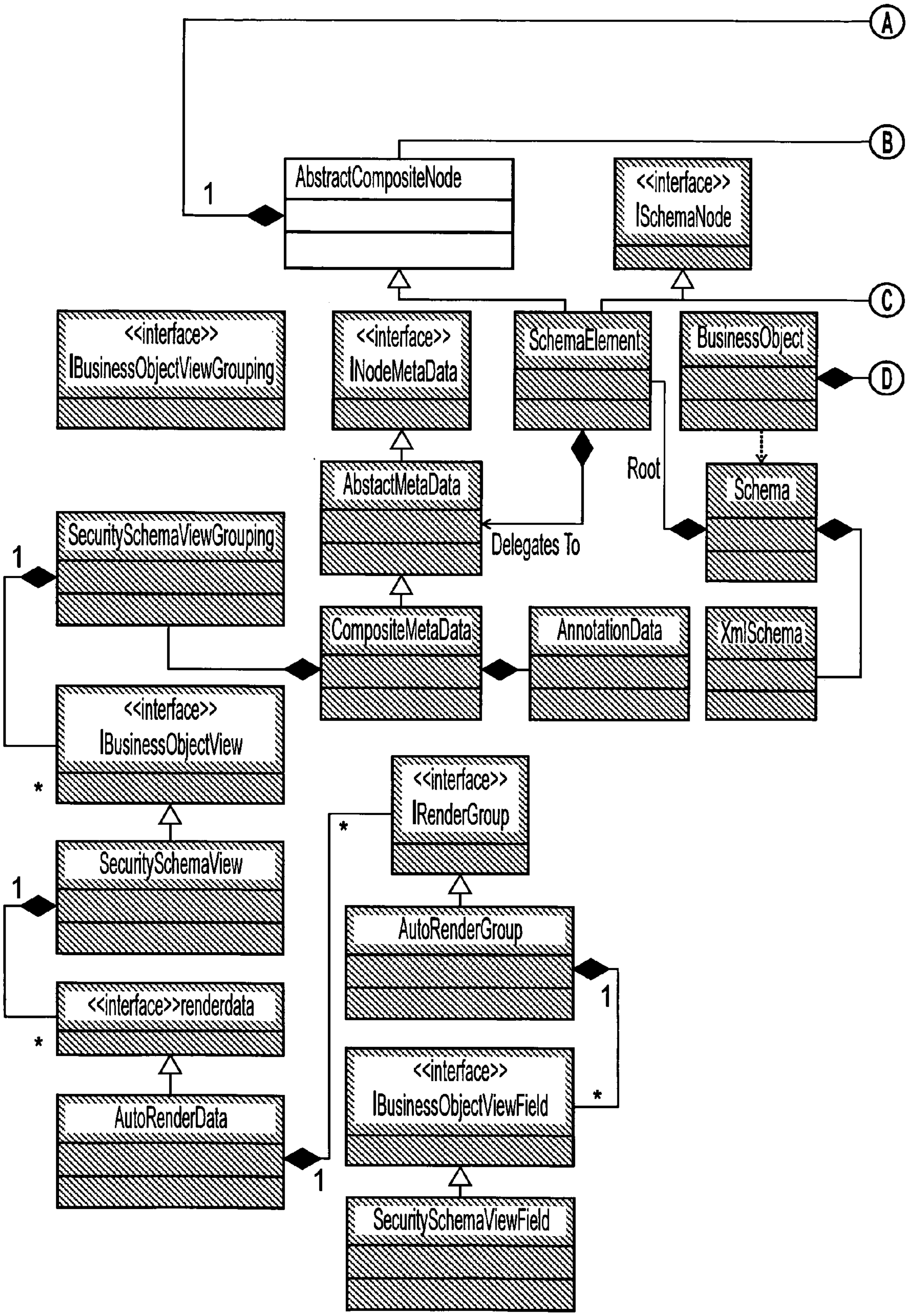
A
B
C
D
1
AbstractCompositeNode
<<interface>>
ISchemaNode
<<interface>>
IBusinessObjectViewGrouping
<<interface>>
INodeMetaData
SchemaElement
BusinessObject
Root
AbstactMetaData
Delegates To
Schema
SecuritySchemaViewGrouping
1
CompositeMetaData
AnnotationData
XmlSchema
<<interface>>
IBusinessObjectView
*
<<interface>>
IRenderGroup
*
SecuritySchemaView
1
AutoRenderGroup
1
<<interface>>renderdata
*
<<interface>>
IBusinessObjectViewField
*
AutoRenderData
1
SecuritySchemaViewField

FIG. 13A

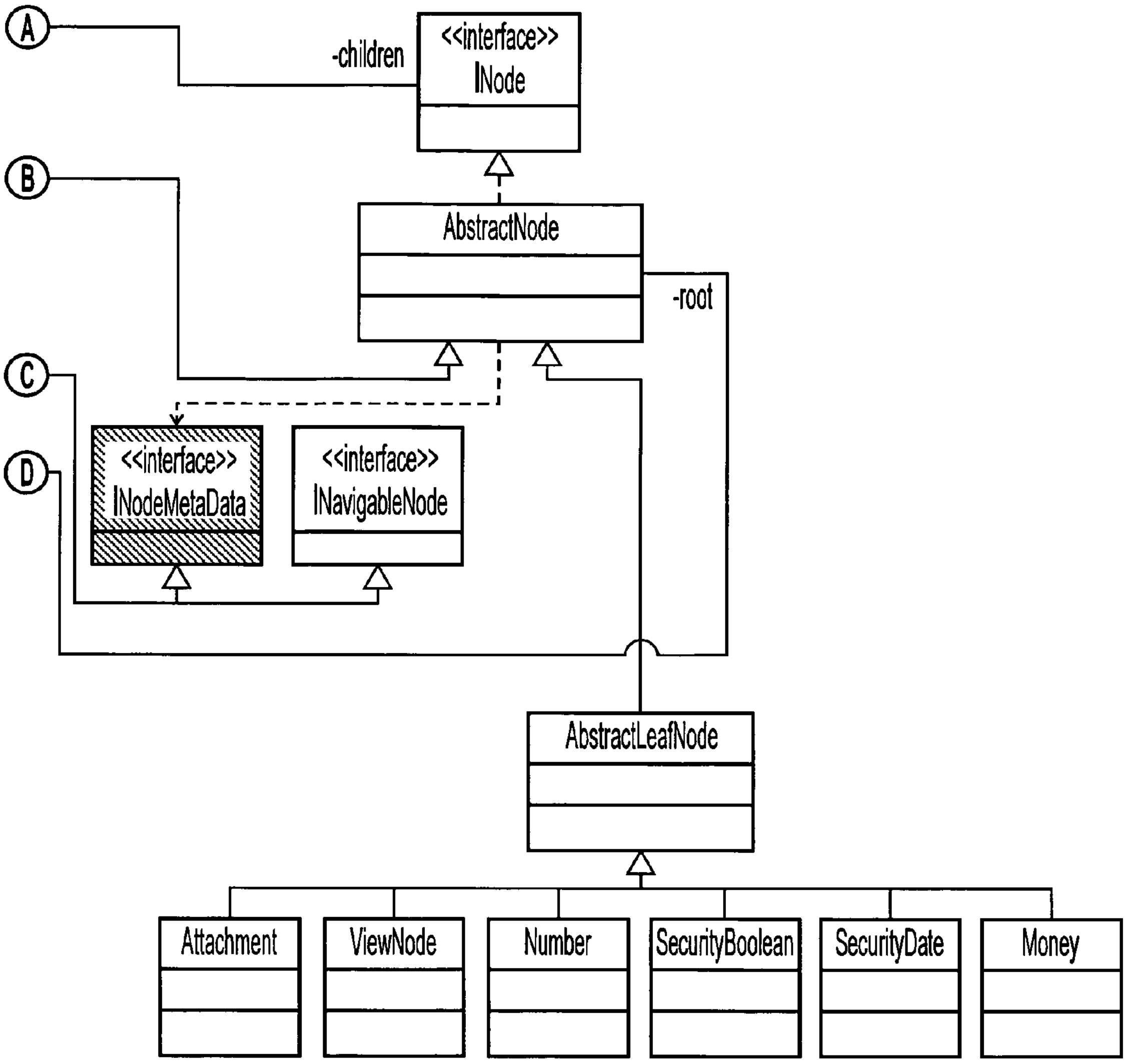
A
B
C
D
-children
<<interface>>
INode
AbstractNode
-root
<<interface>>
INodeMetaData
<<interface>>
INavigableNode
AbstractLeafNode
Attachment
ViewNode
Number
SecurityBoolean
SecurityDate
Money

FIG. 13B

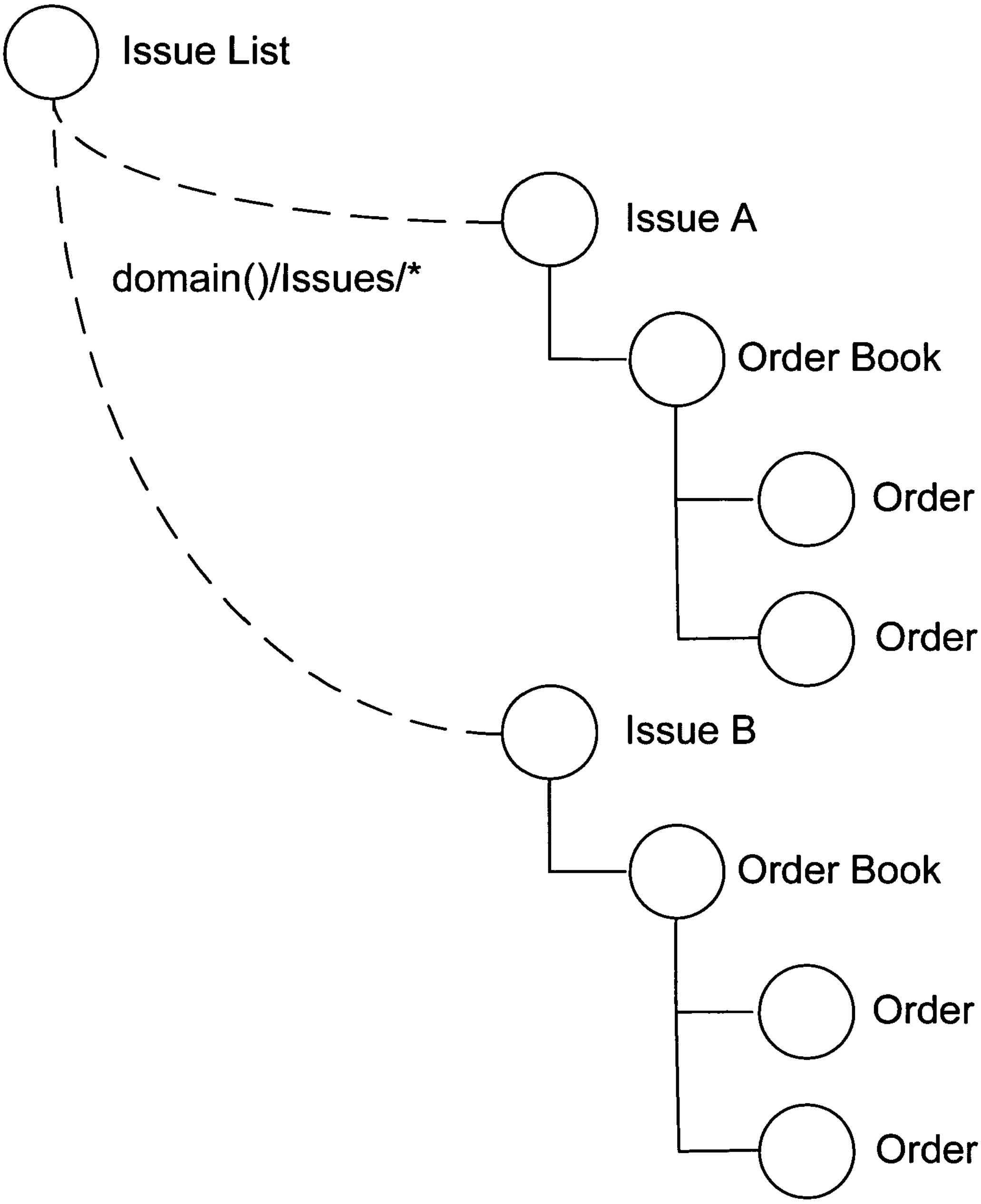
Issue List
domain()/Issues/*
Issue A
Order Book
Order
Order
Issue B
Order Book
Order
Order

FIG. 14

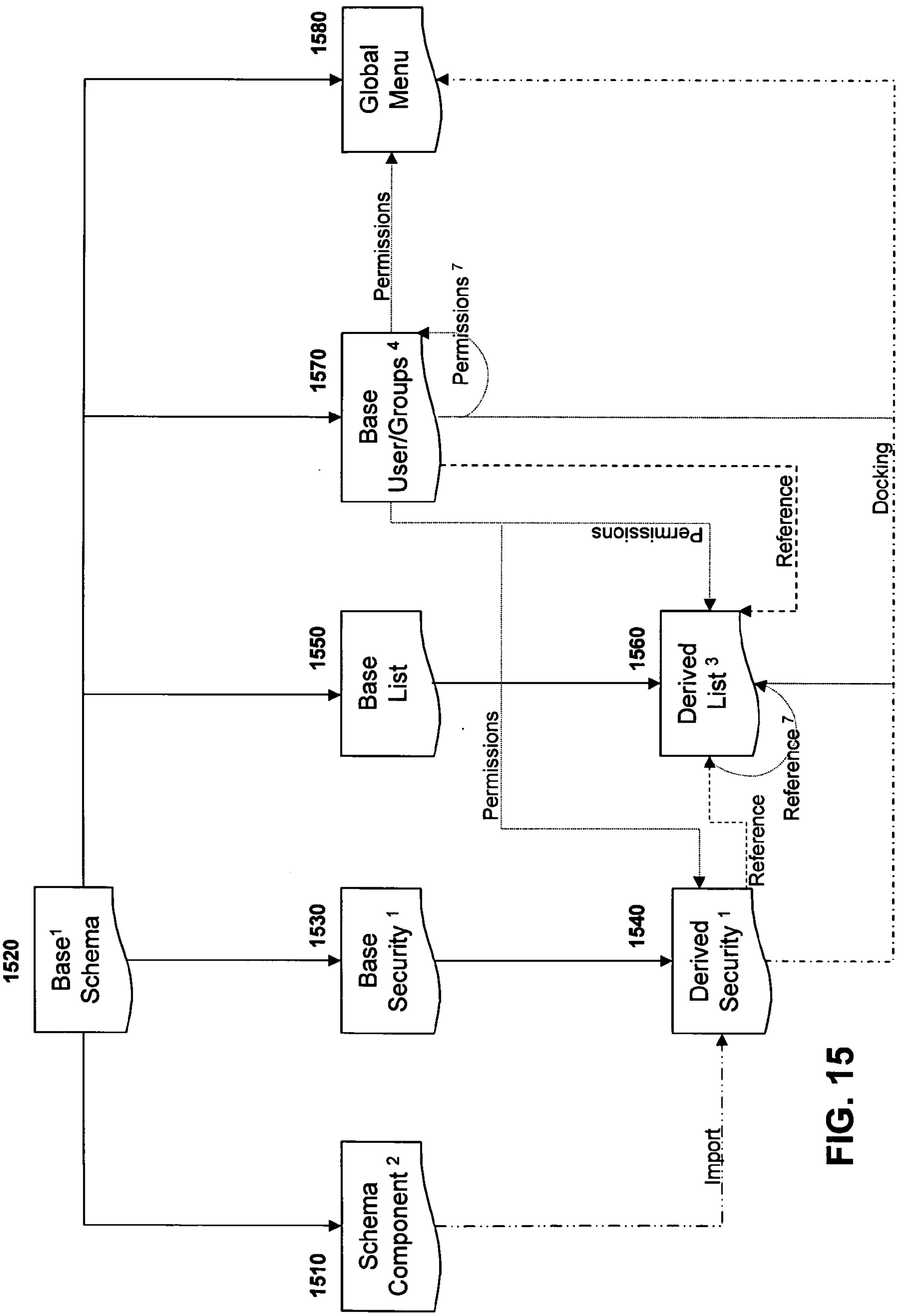
1520
Base[1] Schema
1510
Schema Component 2
1530
Base Security 1
1540
Derived Security 1
1550
Base List
1560
Derived List 3
1570
Base User/Groups 4
1580
Global Menu
Permissions
Permissions 7
Permissions
Permissions
Reference
Reference
Reference 7
Docking
Import

FIG. 15

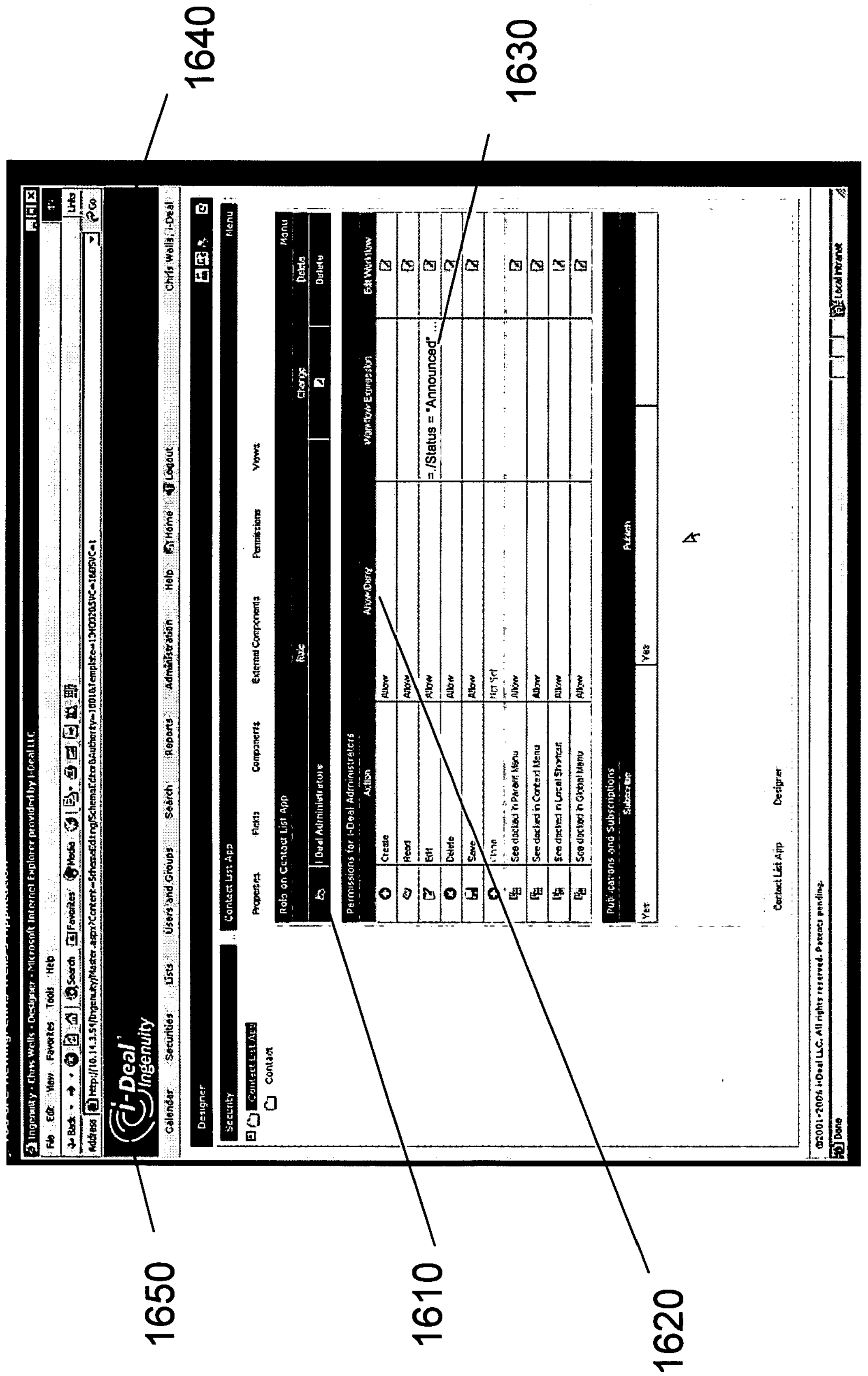


FIG. 16

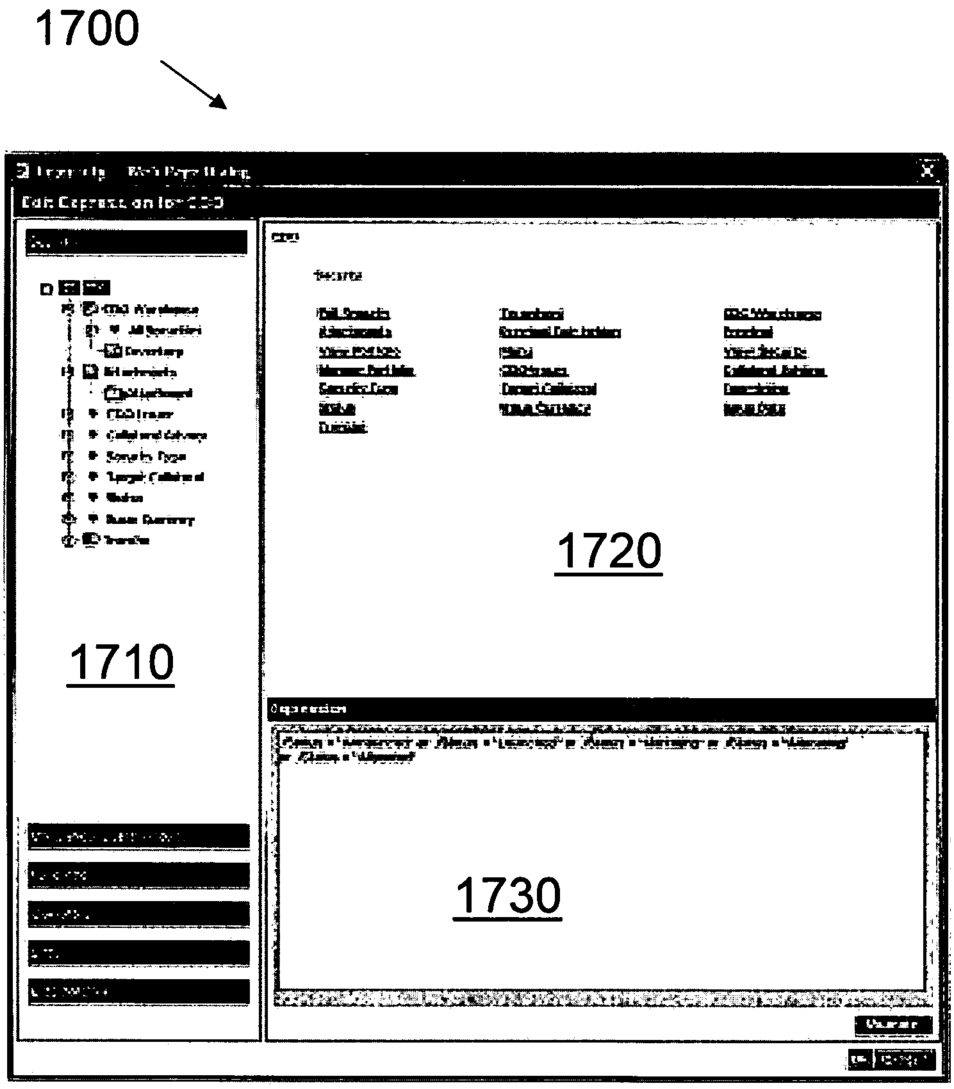


FIG. 17

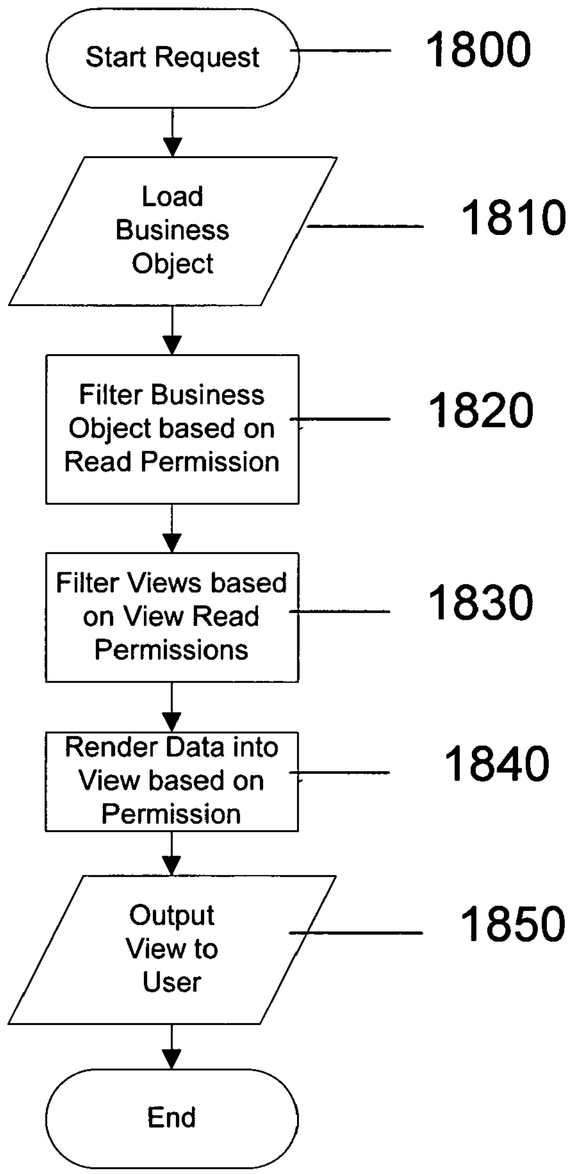
Start Request
1800
Load Business Object
1810
Filter Business Object based on Read Permission
1820
Filter Views based on View Read Permissions
1830
Render Data into View based on Permission
1840
Output View to User
1850
End

FIG. 18

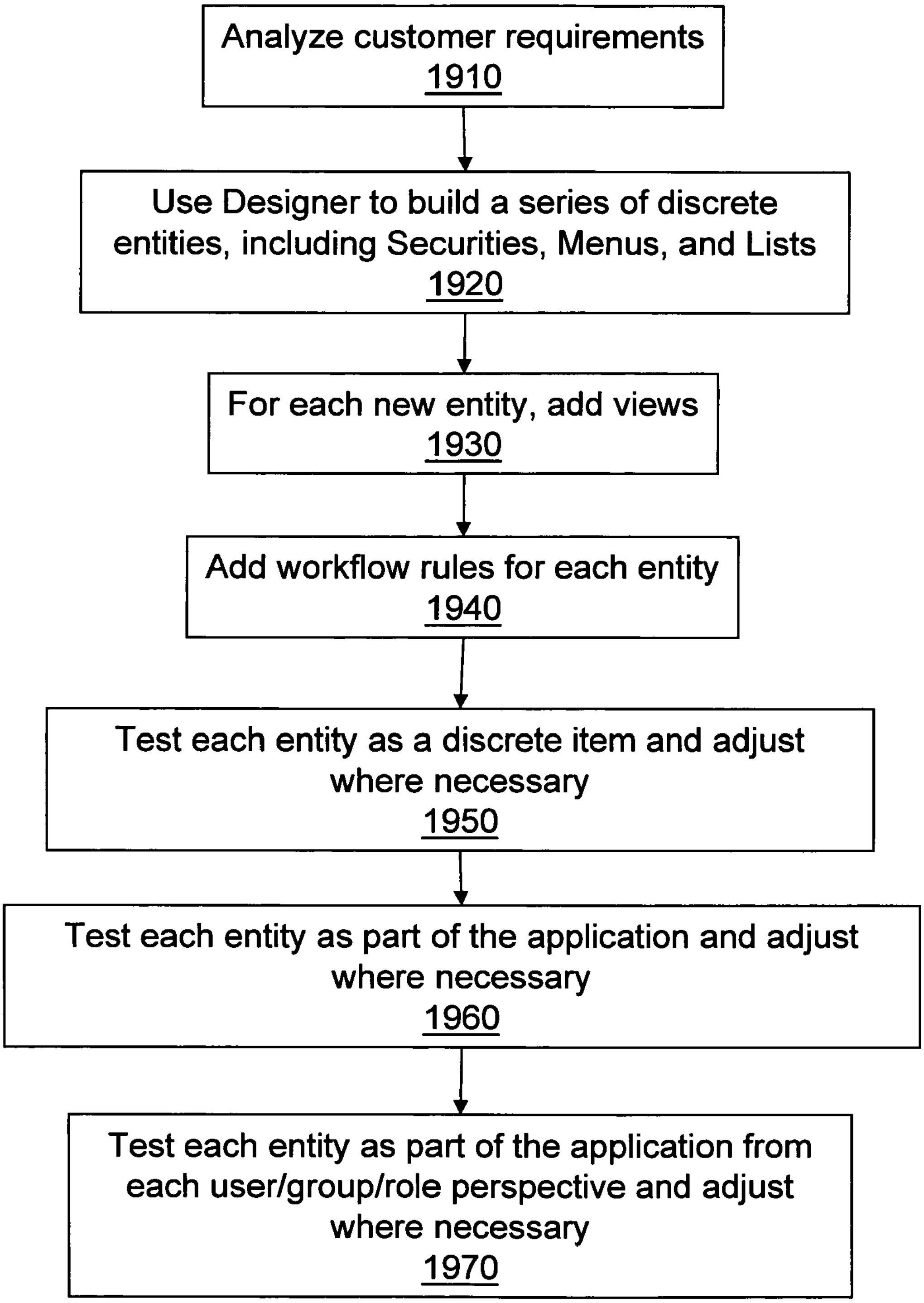
Analyze customer requirements
1910
Use Designer to build a series of discrete entities, including Securities, Menus, and Lists
1920
For each new entity, add views
1930
Add workflow rules for each entity
1940
Test each entity as a discrete item and adjust where necessary
1950
Test each entity as part of the application and adjust where necessary
1960
Test each entity as part of the application from each user/group/role perspective and adjust where necessary
1970

FIG. 19

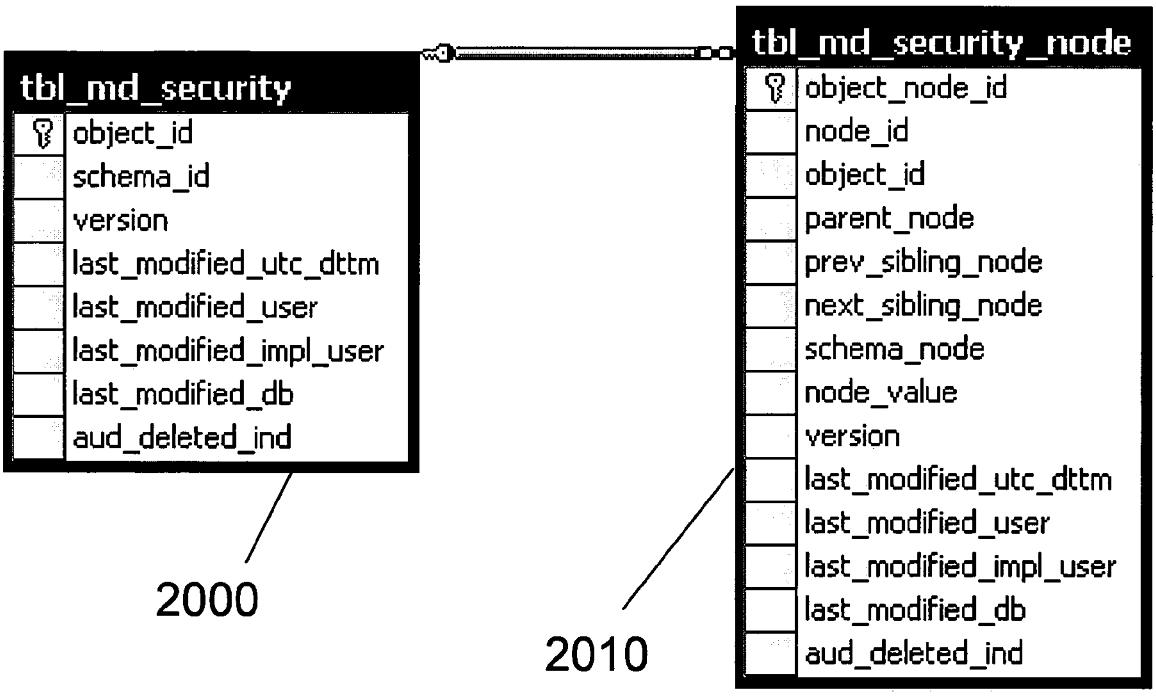
tbl_md_security
object_id
schema_id
version
last_modified_utc_dttm
last_modified_user
last_modified_impl_user
last_modified_db
aud_deleted_ind
tbl_md_security_node
object_node_id
node_id
object_id
parent_node
prev_sibling_node
next_sibling_node
schema_node
node_value
version
last_modified_utc_dttm
last_modified_user
last_modified_impl_user
last_modified_db
aud_deleted_ind
2000
2010

FIG. 20

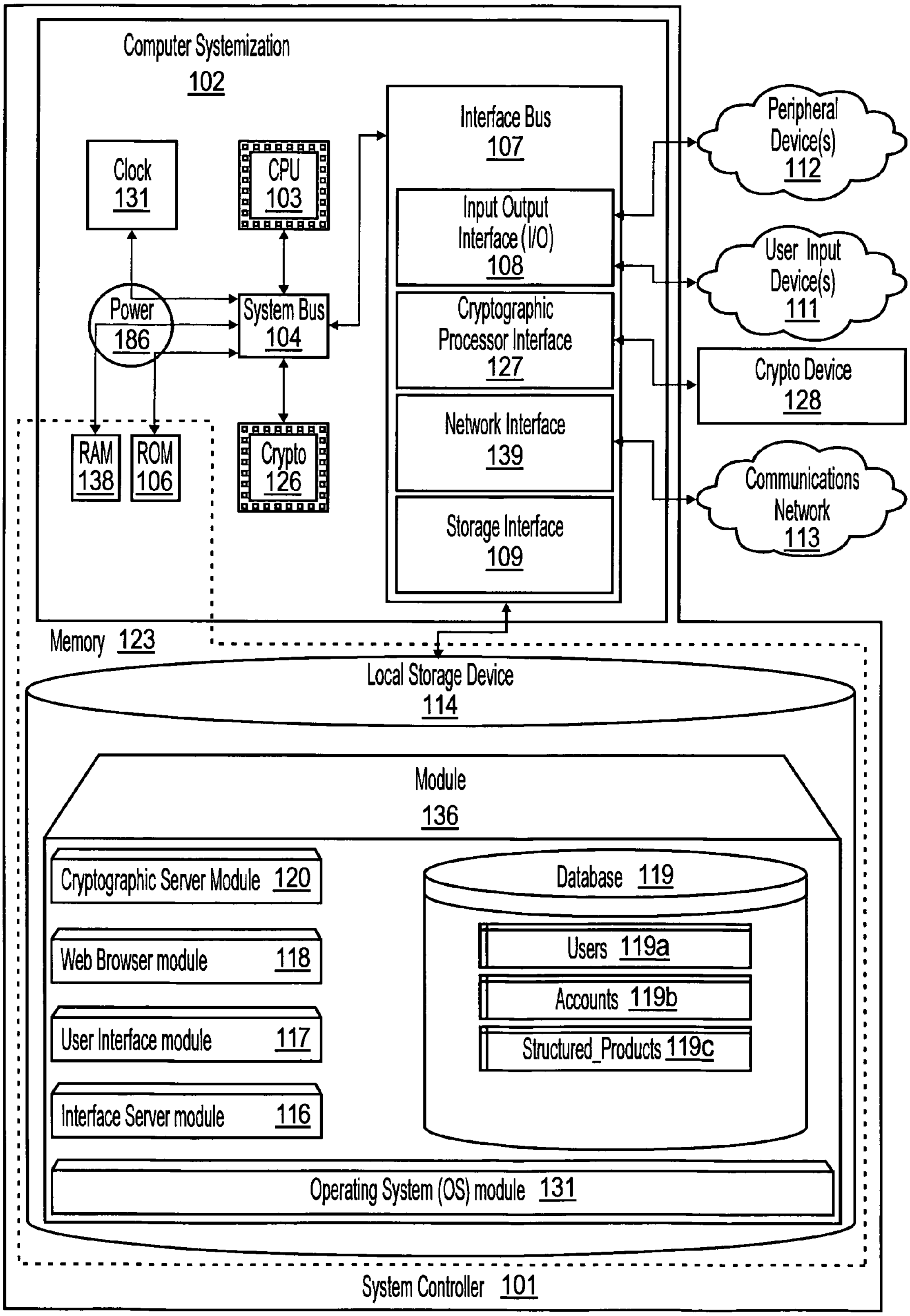

Computer Systemization
102
Clock
131
CPU
103
Power
186
System Bus
104
Crypto
126
RAM
138
ROM
106
Interface Bus
107
Input Output
Interface (I/O)
108
Cryptographic
Processor Interface
127
Network Interface
139
Storage Interface
109
Peripheral
Device(s)
112
User Input
Device(s)
111
Crypto Device
128
Communications
Network
113
Memory 123
Local Storage Device
114
Module
136
Cryptographic Server Module 120
Web Browser module 118
User Interface module 117
Interface Server module 116
Database 119
Users 119a
Accounts 119b
Structured_Products 119c
Operating System (OS) module 131
System Controller 101


FIG. 21

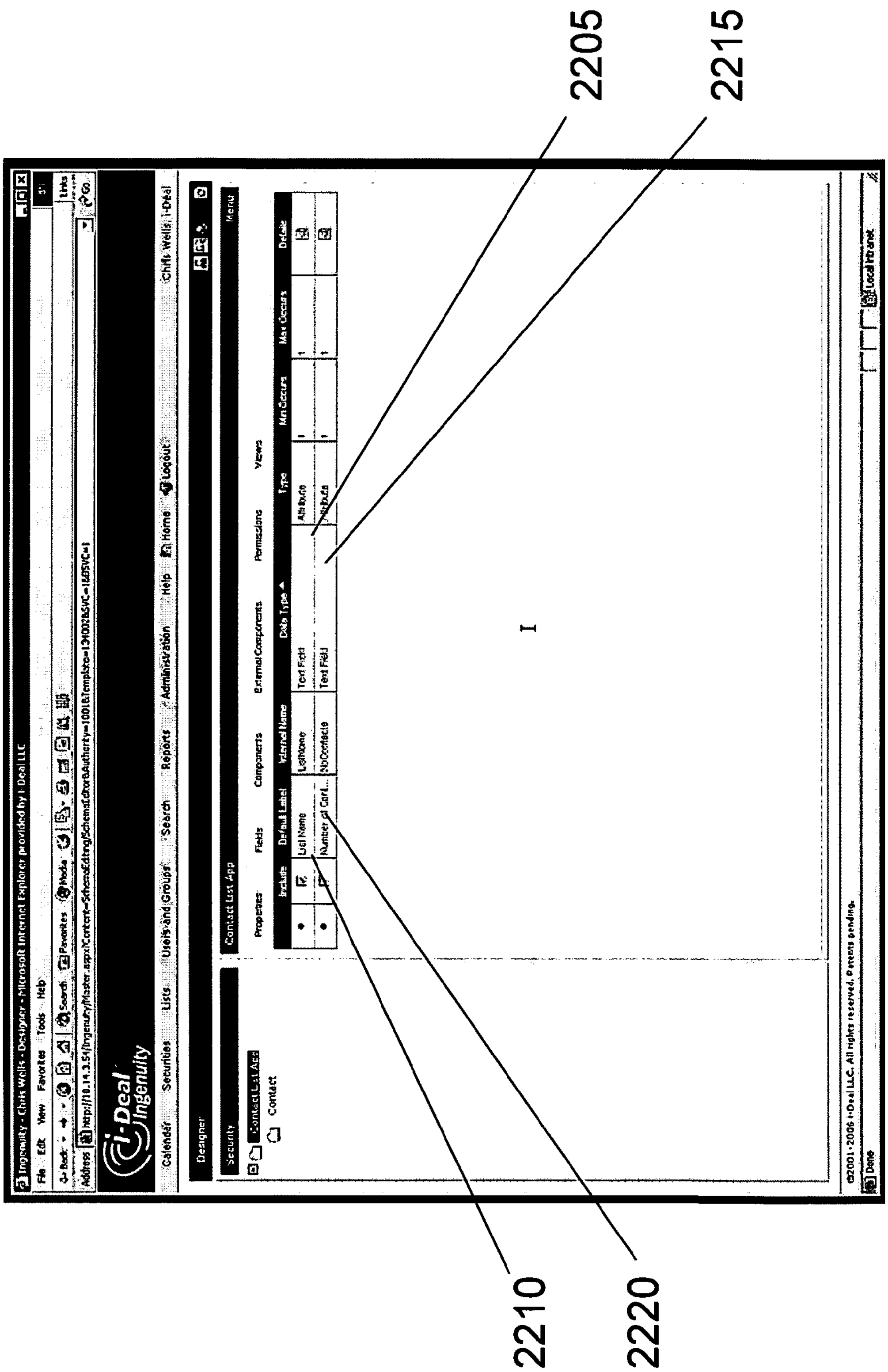


FIG. 22

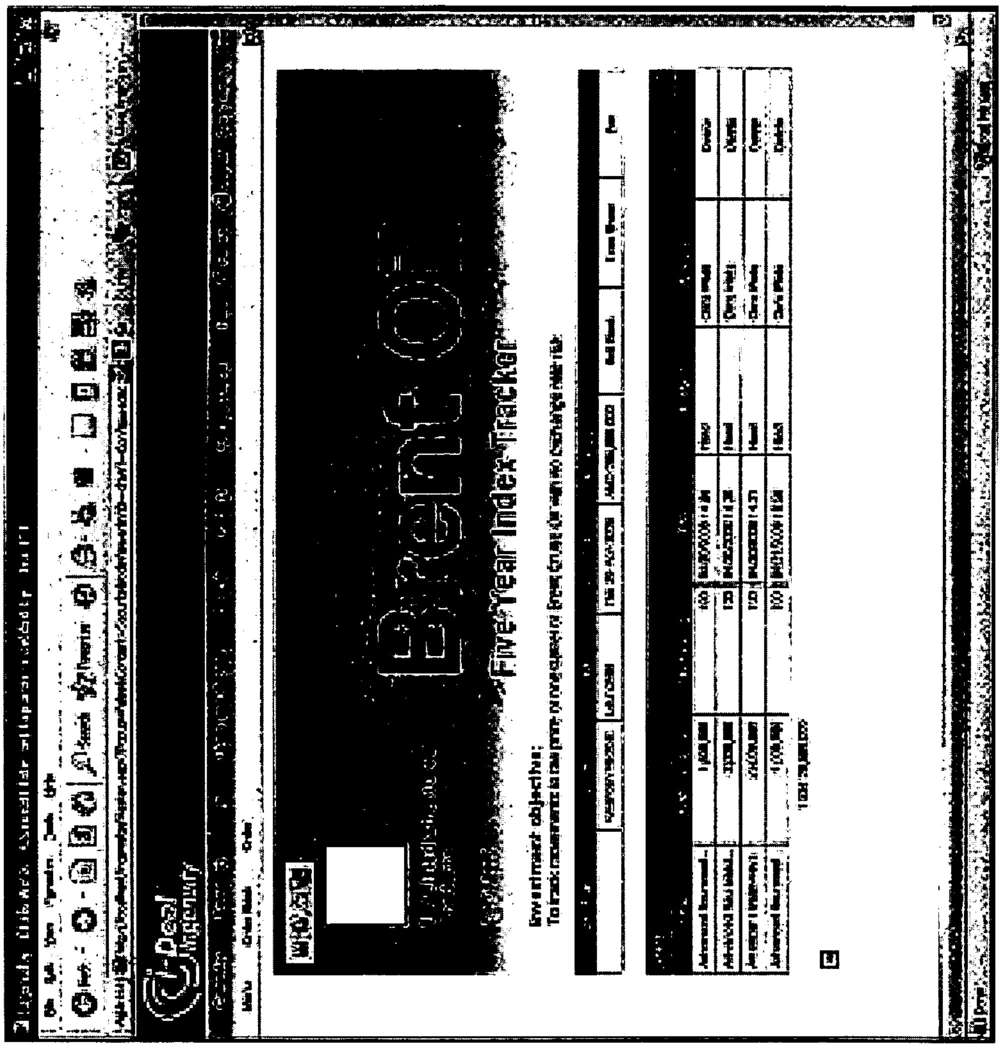


FIG. 23

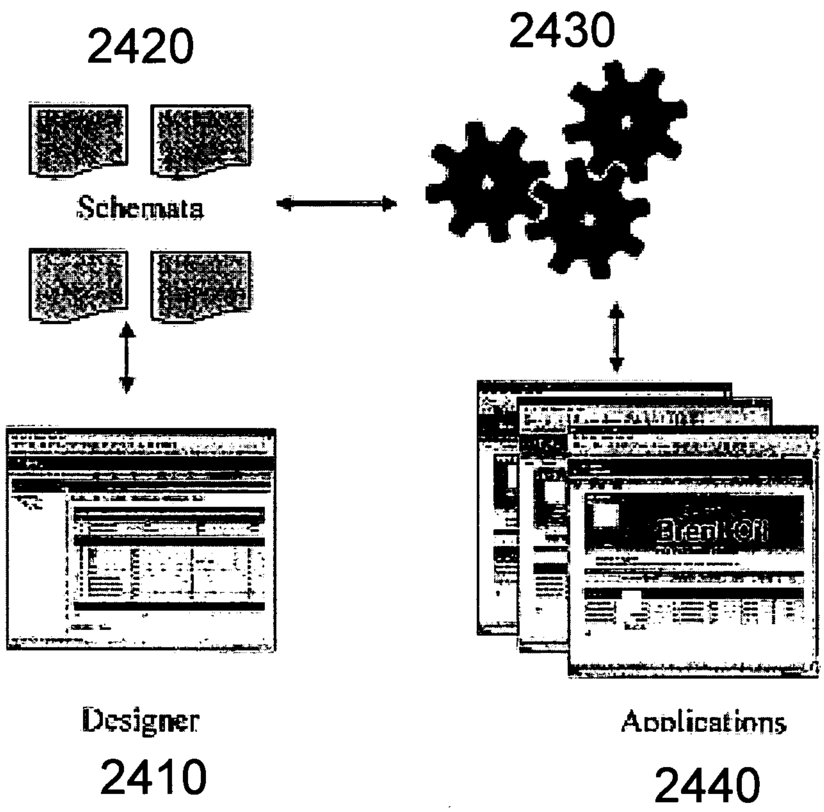


FIG. 24

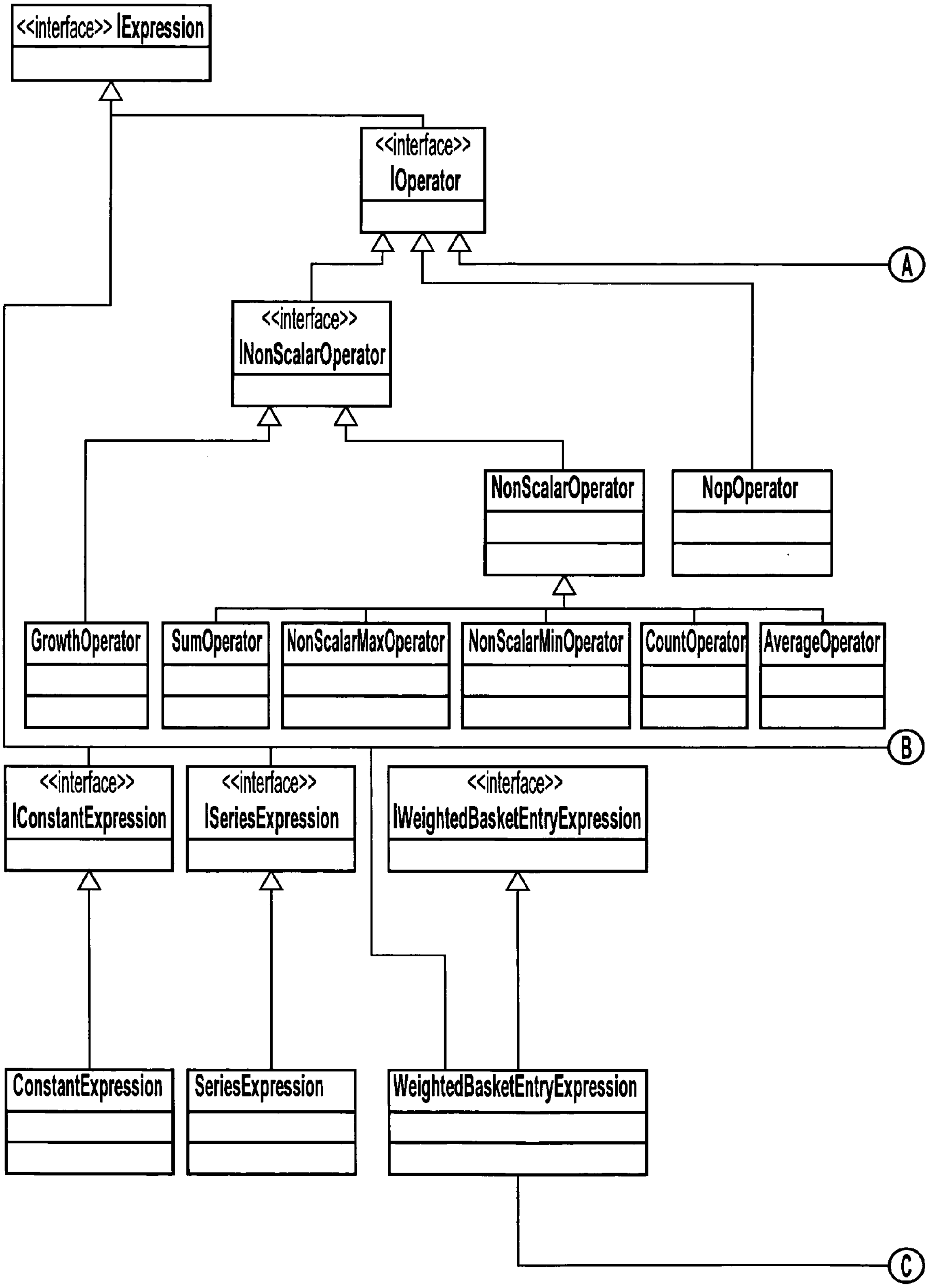
<<interface>> IExpression
<<interface>>
IOperator
A
<<interface>>
INonScalarOperator
NonScalarOperator
NopOperator
GrowthOperator
SumOperator
NonScalarMaxOperator
NonScalarMinOperator
CountOperator
AverageOperator
B
<<interface>>
IConstantExpression
<<interface>>
ISeriesExpression
<<interface>>
IWeightedBasketEntryExpression
ConstantExpression
SeriesExpression
WeightedBasketEntryExpression
C

FIG. 25A

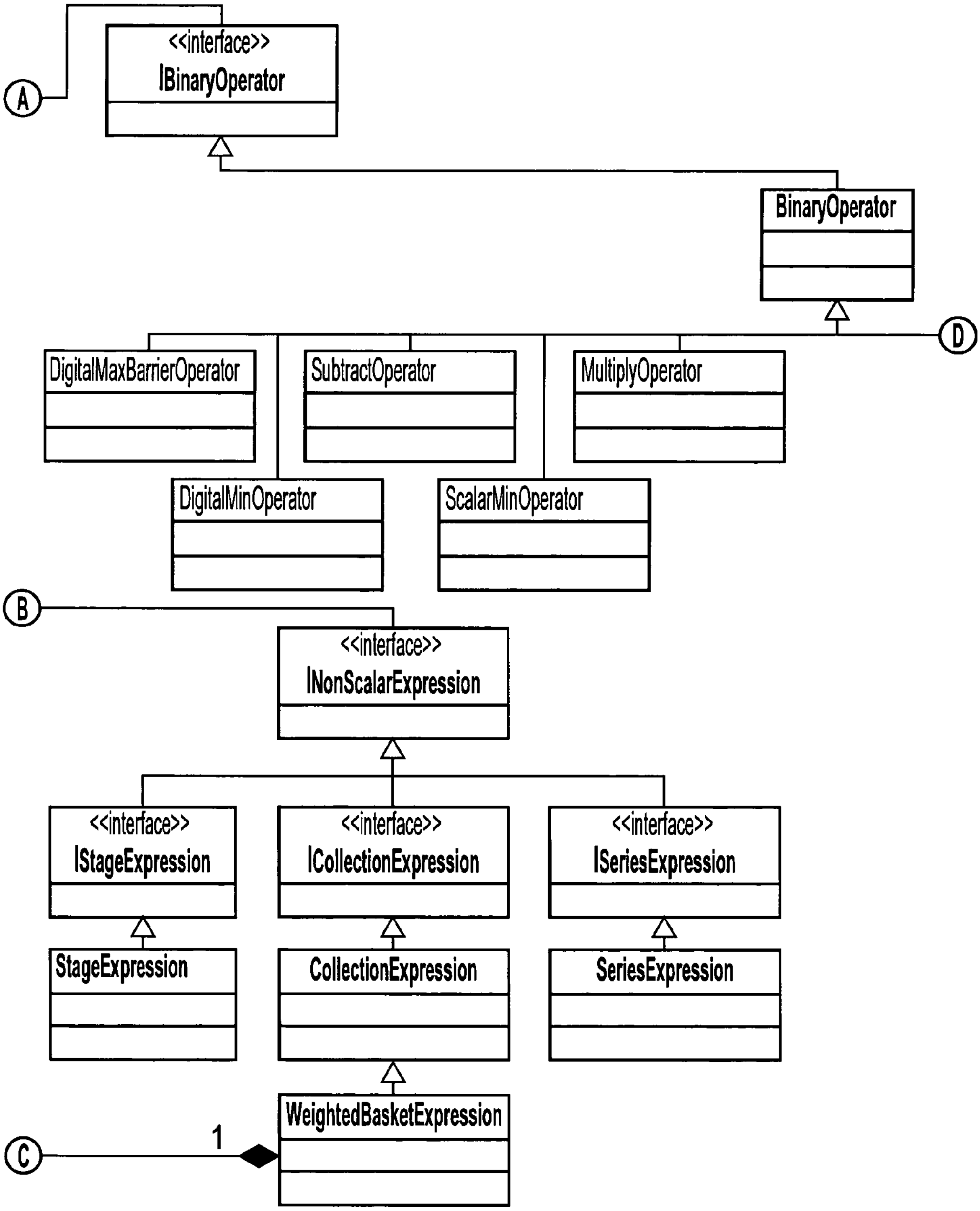

A
<<interface>>
IBinaryOperator
BinaryOperator
D
DigitalMaxBarrierOperator
SubtractOperator
MultiplyOperator
DigitalMinOperator
ScalarMinOperator
B
<<interface>>
INonScalarExpression
<<interface>>
IStageExpression
<<interface>>
ICollectionExpression
<<interface>>
ISeriesExpression
StageExpression
CollectionExpression
SeriesExpression
WeightedBasketExpression
C
1


FIG. 25B

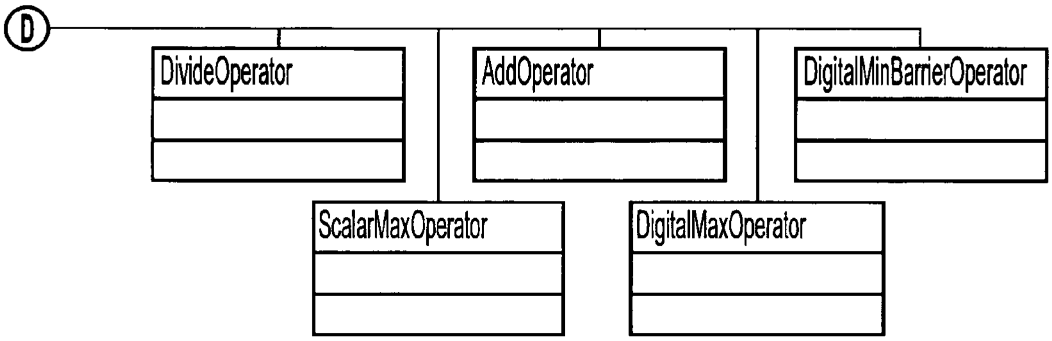
D
DivideOperator
AddOperator
DigitalMinBarrierOperator
ScalarMaxOperator
DigitalMaxOperator

FIG. 25C

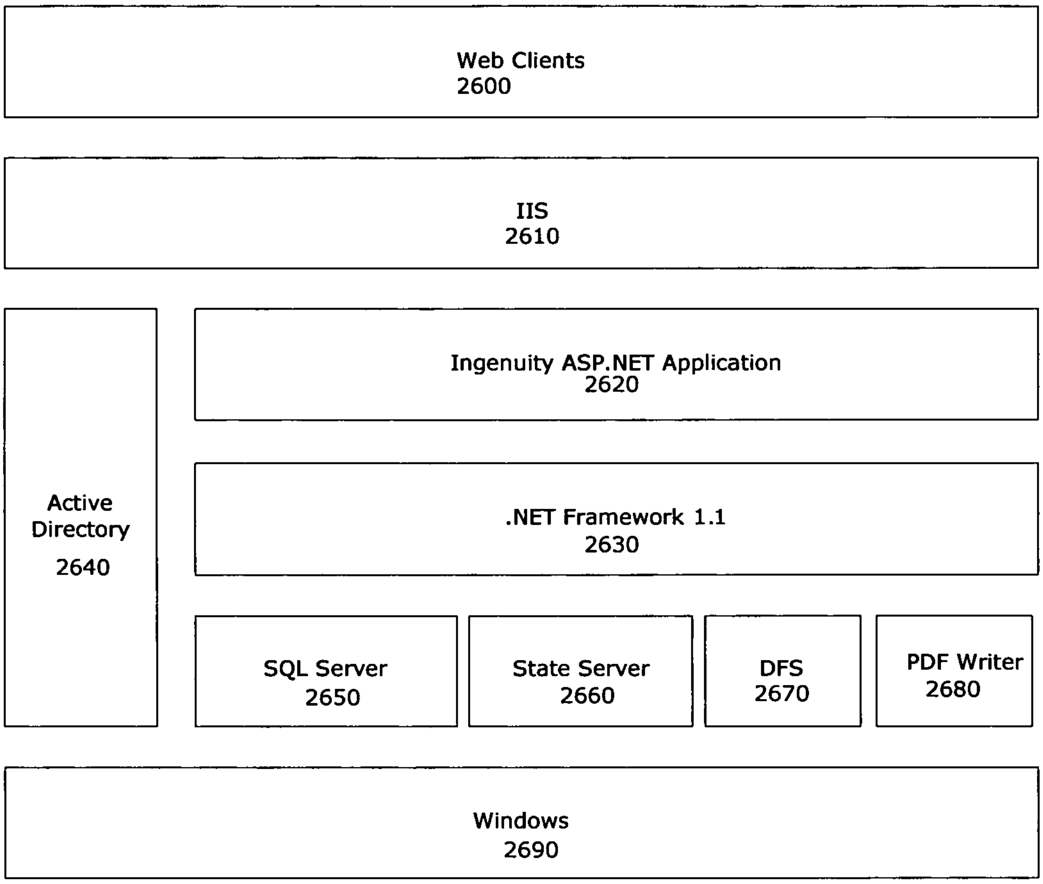
Web Clients
2600
IIS
2610
Ingenuity ASP.NET Application
2620
.NET Framework 1.1
2630
Active
Directory
2640
SQL Server
2650
State Server
2660
DFS
2670
PDF Writer
2680
Windows
2690

FIG. 26

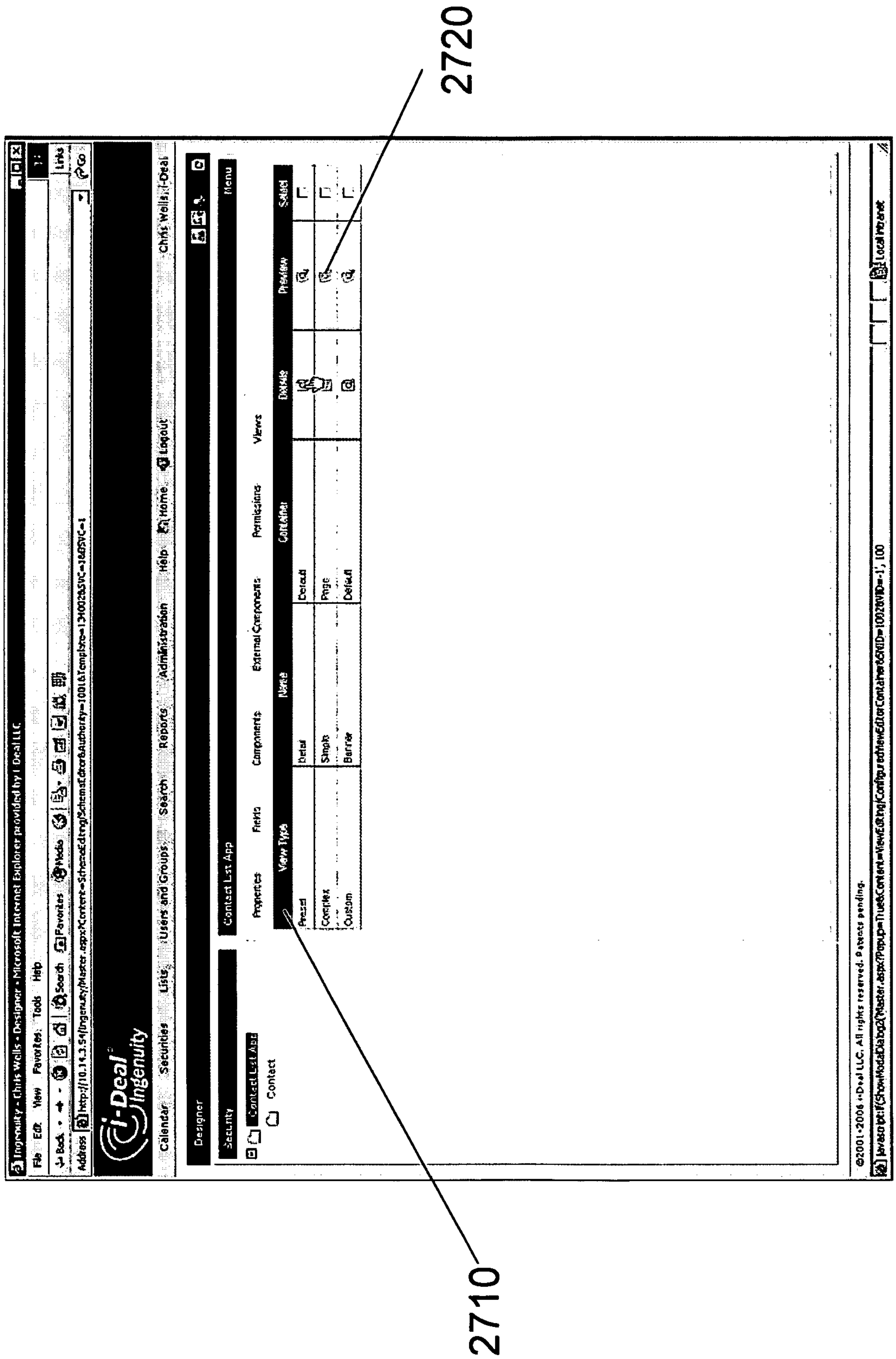


FIG. 27

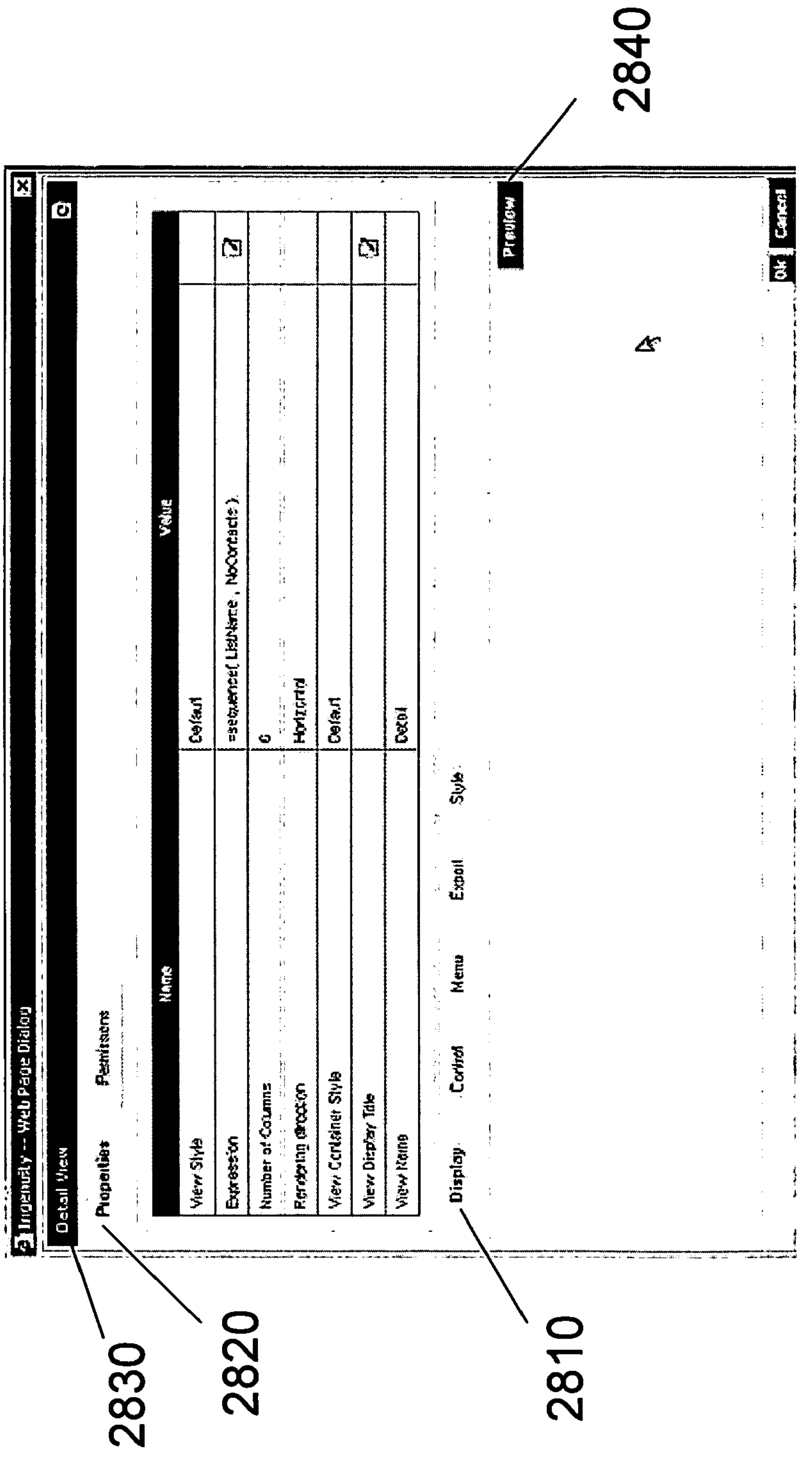
Ingenuity -- Web Page Dialog
Detail View
Properties
Parameters
Name
Value
View Style
Default
Expression
=sequence( ListName , NoContacts )
Number of Columns
6
Rendering direction
Horizontal
View Container Style
Default
View Display Title
View Name
Detail
Display
Control
Menu
Export
Style
Preview
Ok
Cancel
2810
2820
2830
2840

FIG. 28

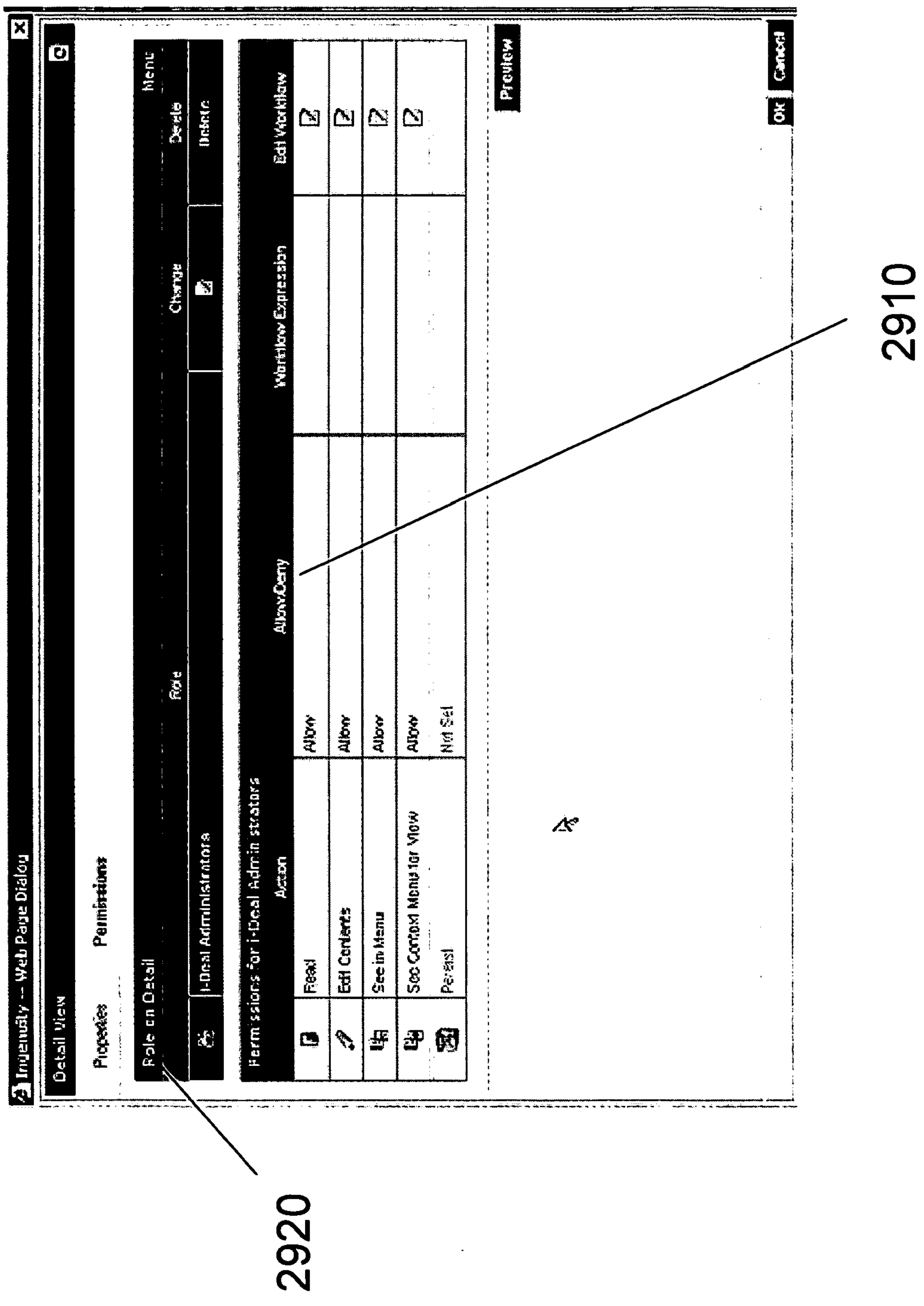
Ingenuity -- Web Page Dialog
Detail View
Properties
Permissions
Role on Detail
Role
Change
Delete
Menu
I-Deal Administrators
Delete
Permissions for I-Deal Administrators
Action
Allow/Deny
Workflow Expression
Edit Workflow
Read
Allow
Edit Contents
Allow
See in Menu
Allow
See Context Menu for View
Allow
Persist
Not Set
Preview
OK
Cancel
2910
2920

FIG. 29

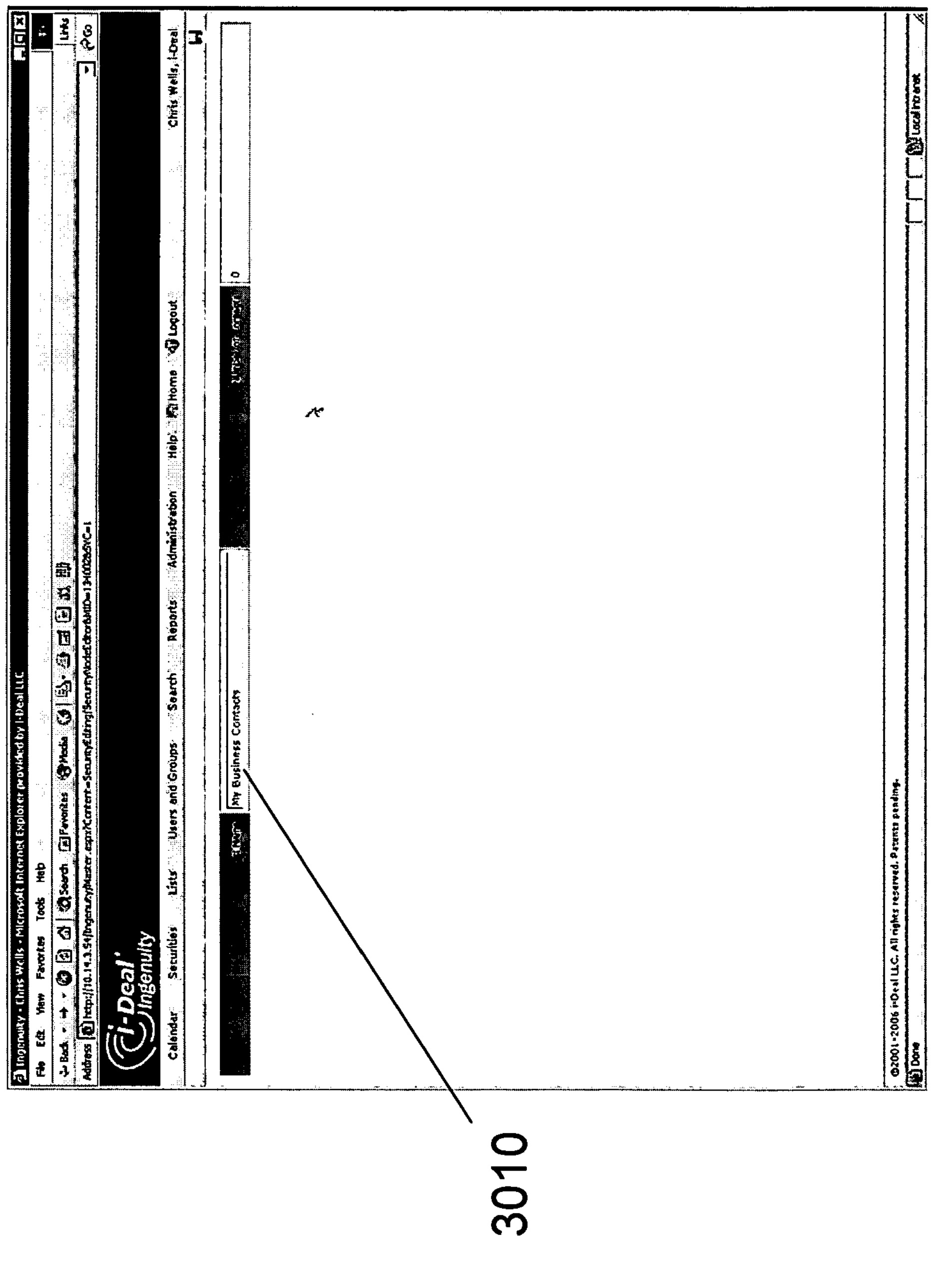
Ingenuity - Chris Wells - Microsoft Internet Explorer provided by i-Deal LLC
File Edit View Favorites Tools Help
i-Deal Ingenuity
Calendar Securities Lists Users and Groups Search Reports Administration Help Home Logout
Chris Wells, I-Deal
My Business Contacts
0
©2001-2006 i-Deal LLC. All rights reserved. Patents pending.
Done
Local intranet
3010

FIG. 30

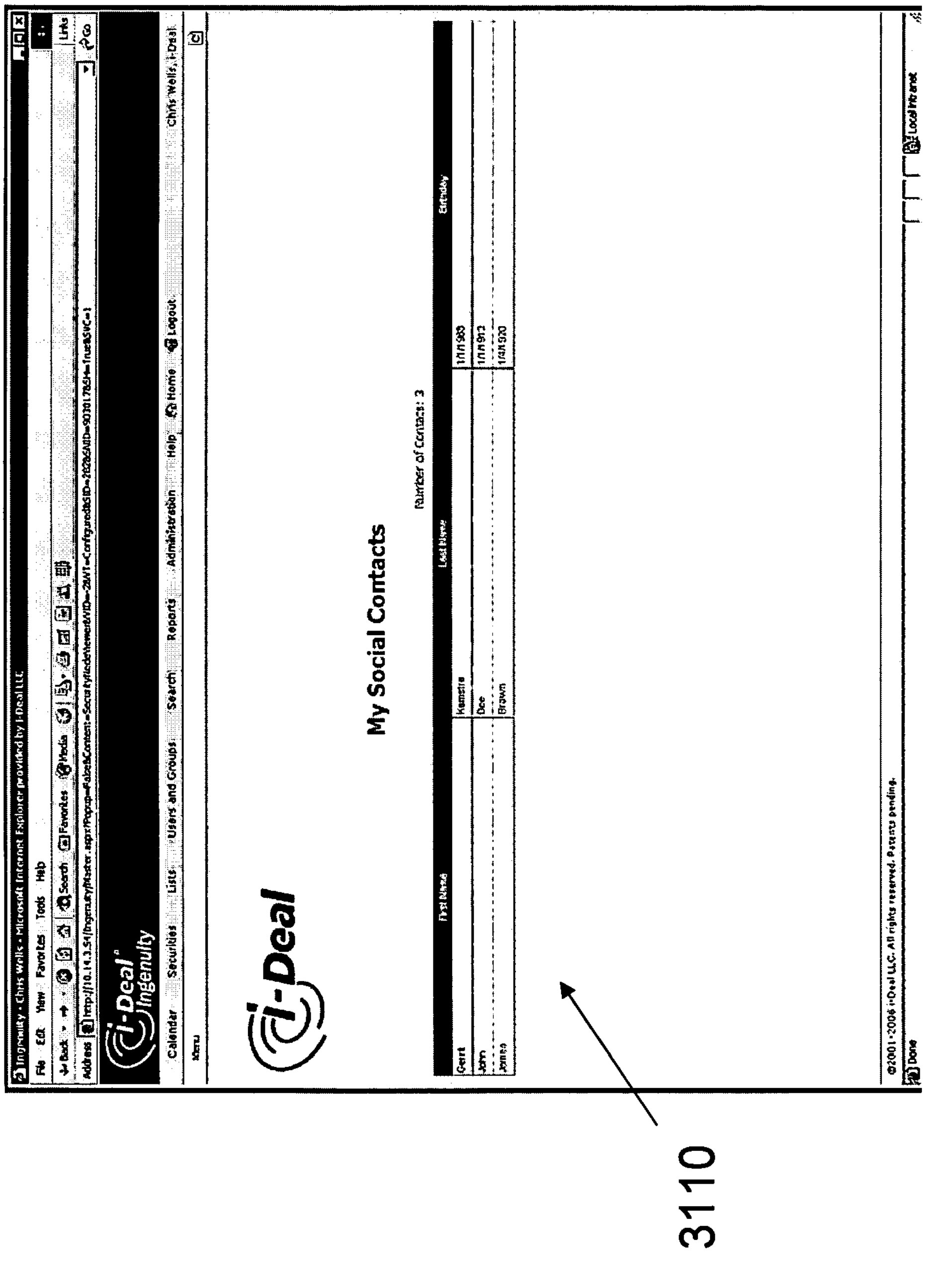
i-Deal
My Social Contacts
Number of Contacts: 3
First Name
Last Name
Birthday
3110

FIG. 31

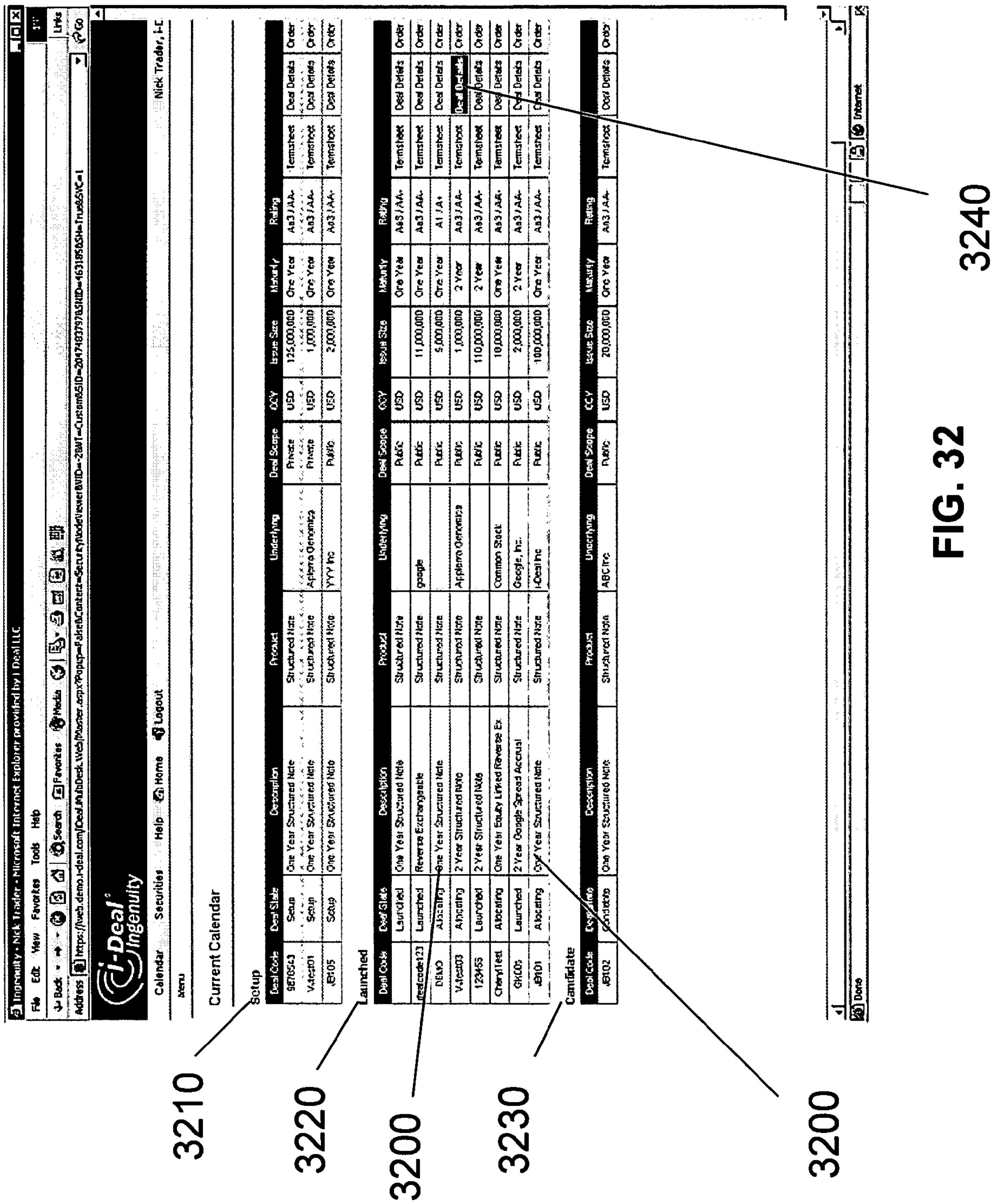


FIG. 32

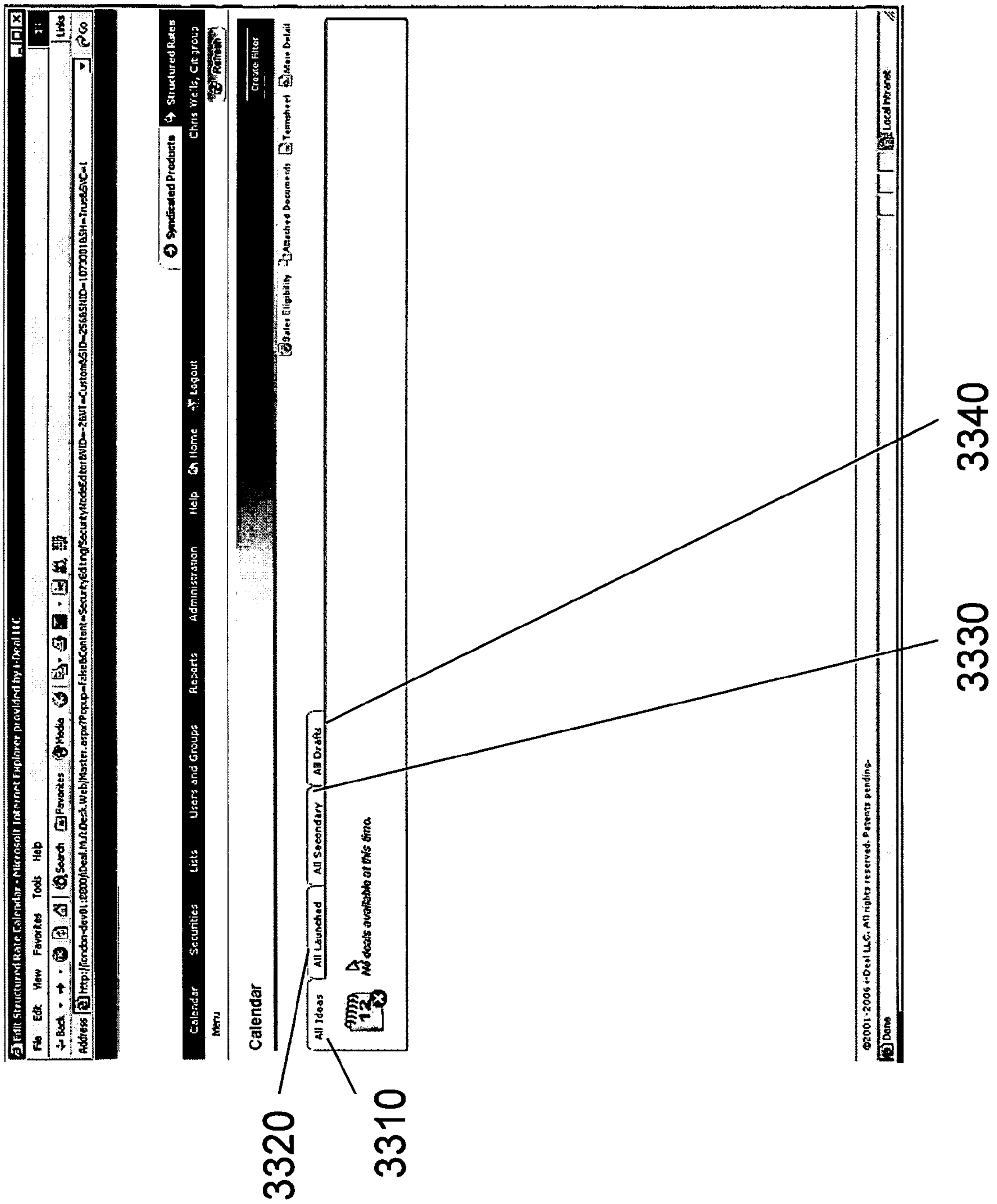
Edit Structured Rate Calendar - Microsoft Internet Explorer provided by i-Deal LLC
File Edit View Favorites Tools Help
Calendar Securities Lists Users and Groups Reports Administration Help Home Logout
Syndicated Products
Structured Rates
Calendar
Create Filter
Refresh
All Ideas
All Launched
All Secondary
All Drafts
No deals available at this time.
Sales Eligibility
Attached Documents
Termsheet
More Detail
©2001-2006 i-Deal LLC. All rights reserved. Patents pending.
Done
Local intranet
3310
3320
3330
3340

FIG. 33

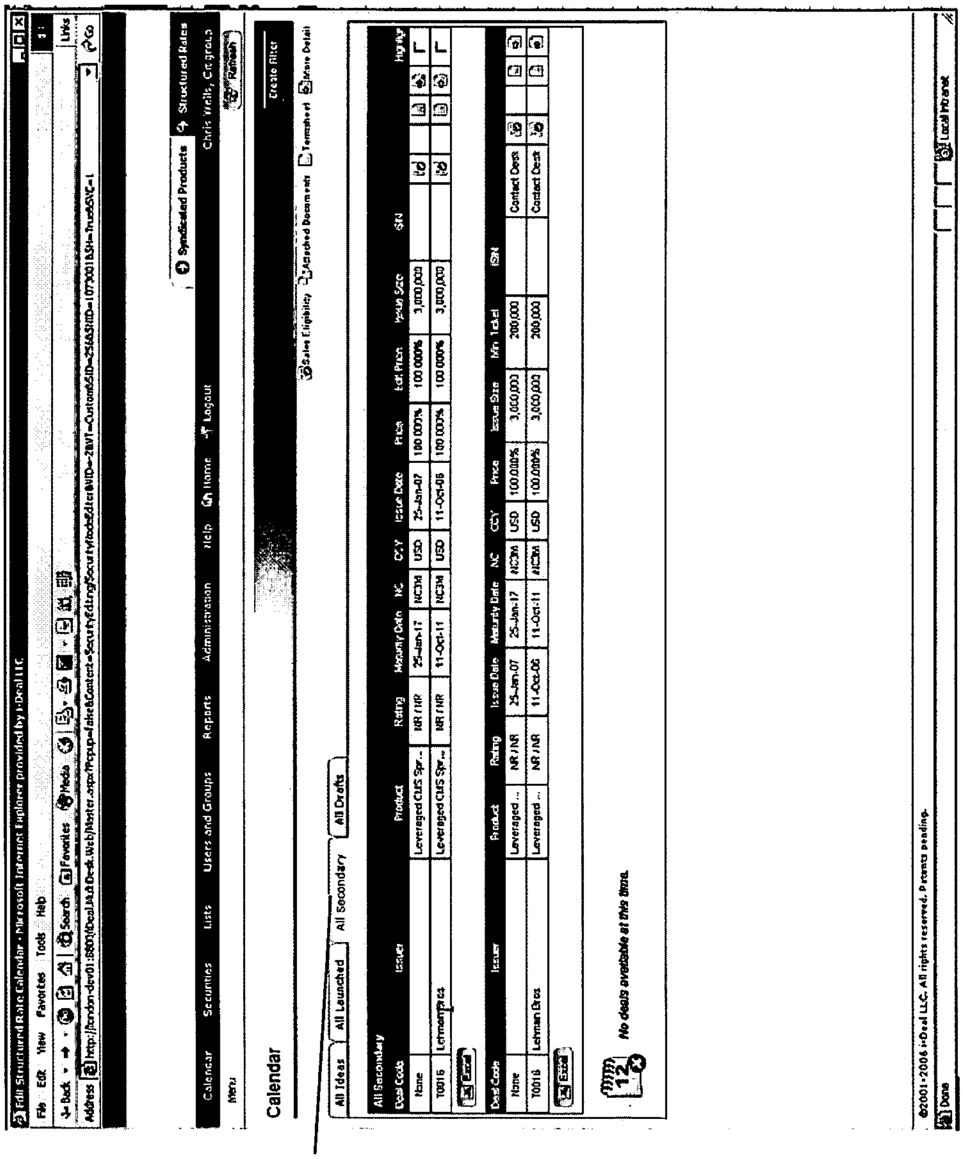

3410

FIG. 34

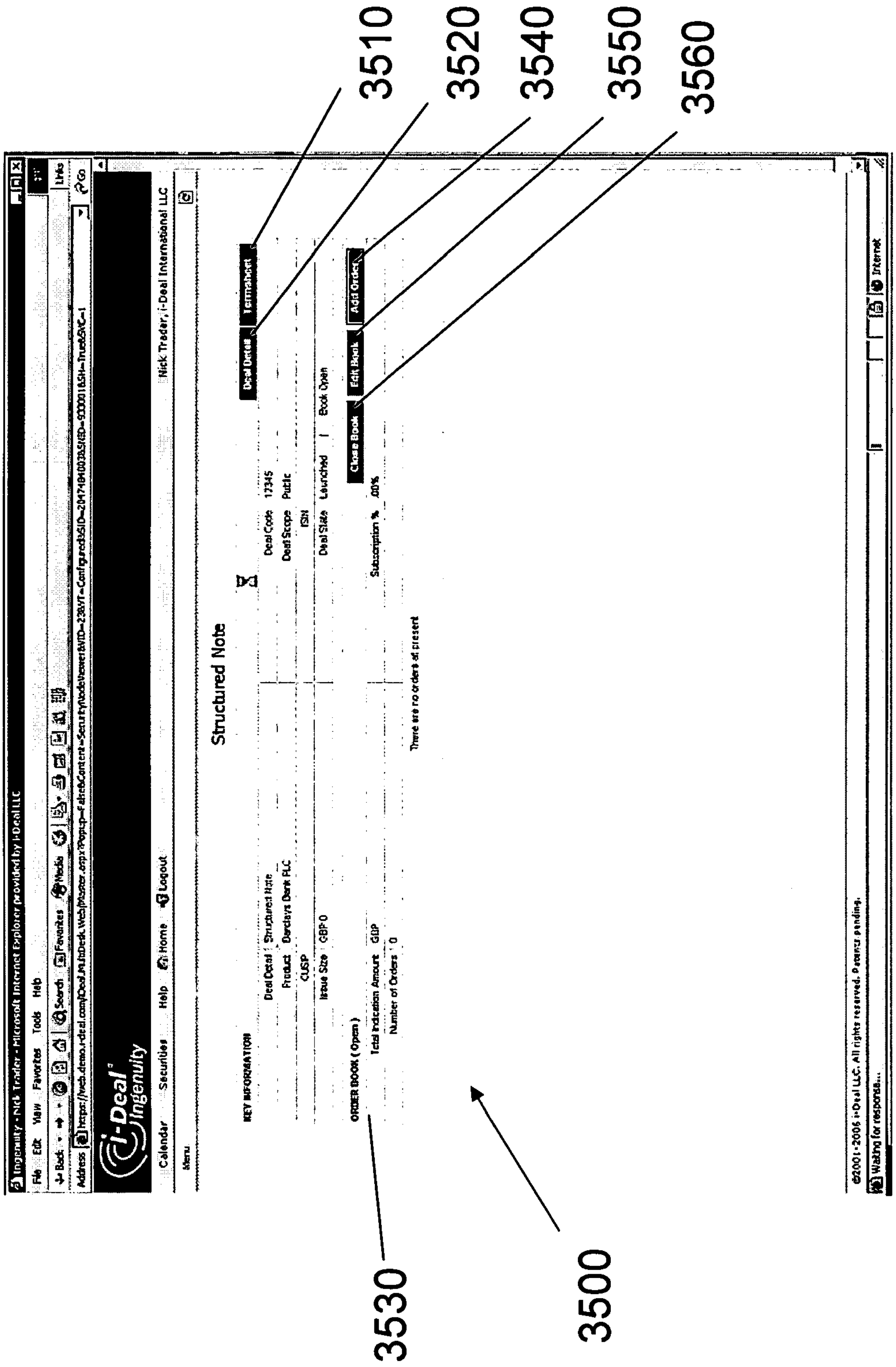


FIG. 35

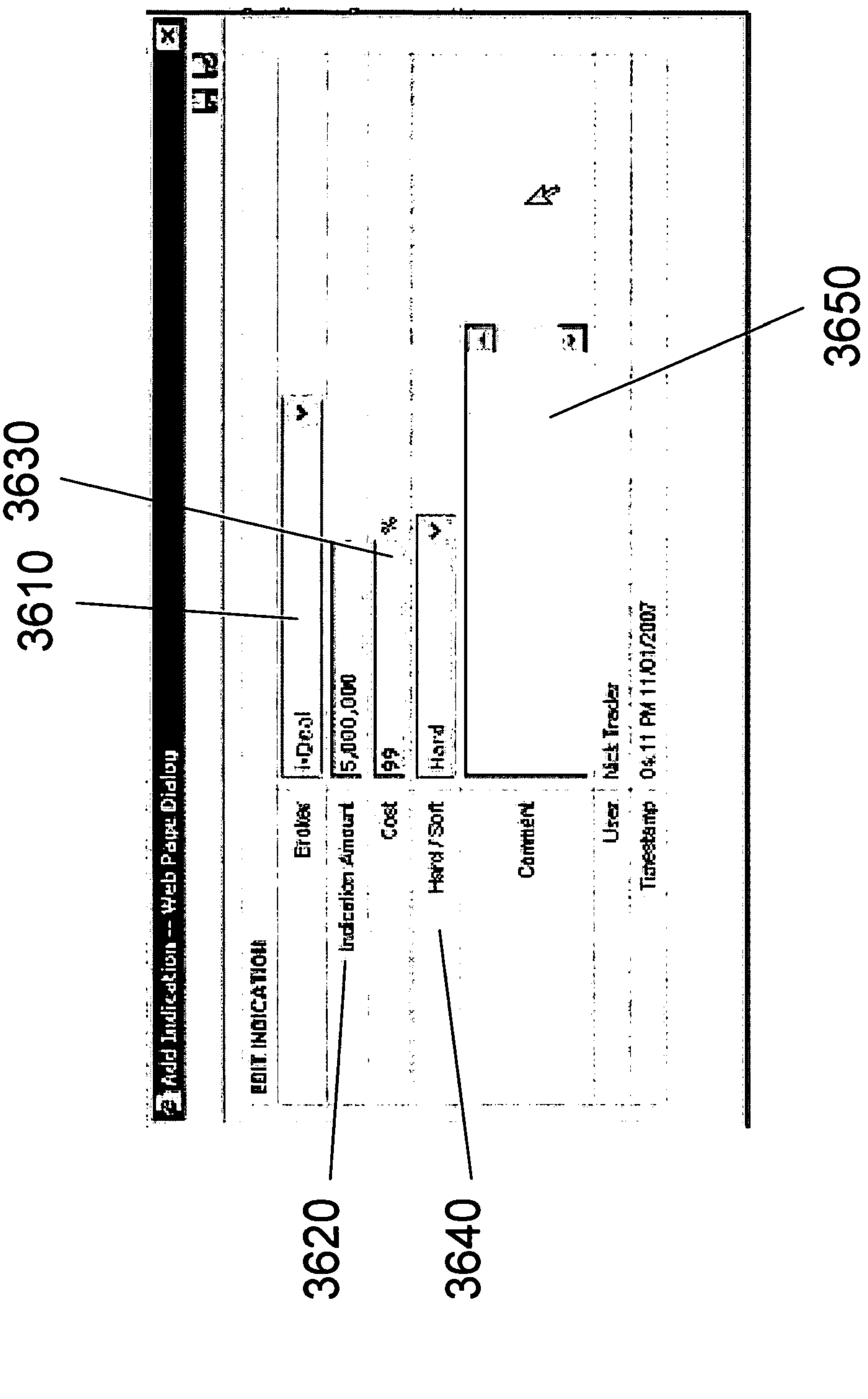
Add Indication -- Web Page Dialog
EDIT INDICATION
Broker
I-Deal
Indication Amount
5,000,000
Cost
99
%
Hard / Soft
Hard
Comment
User
Nick Trader
Timestamp
04:11 PM 11/01/2007
3610
3620
3630
3640
3650

FIG. 36

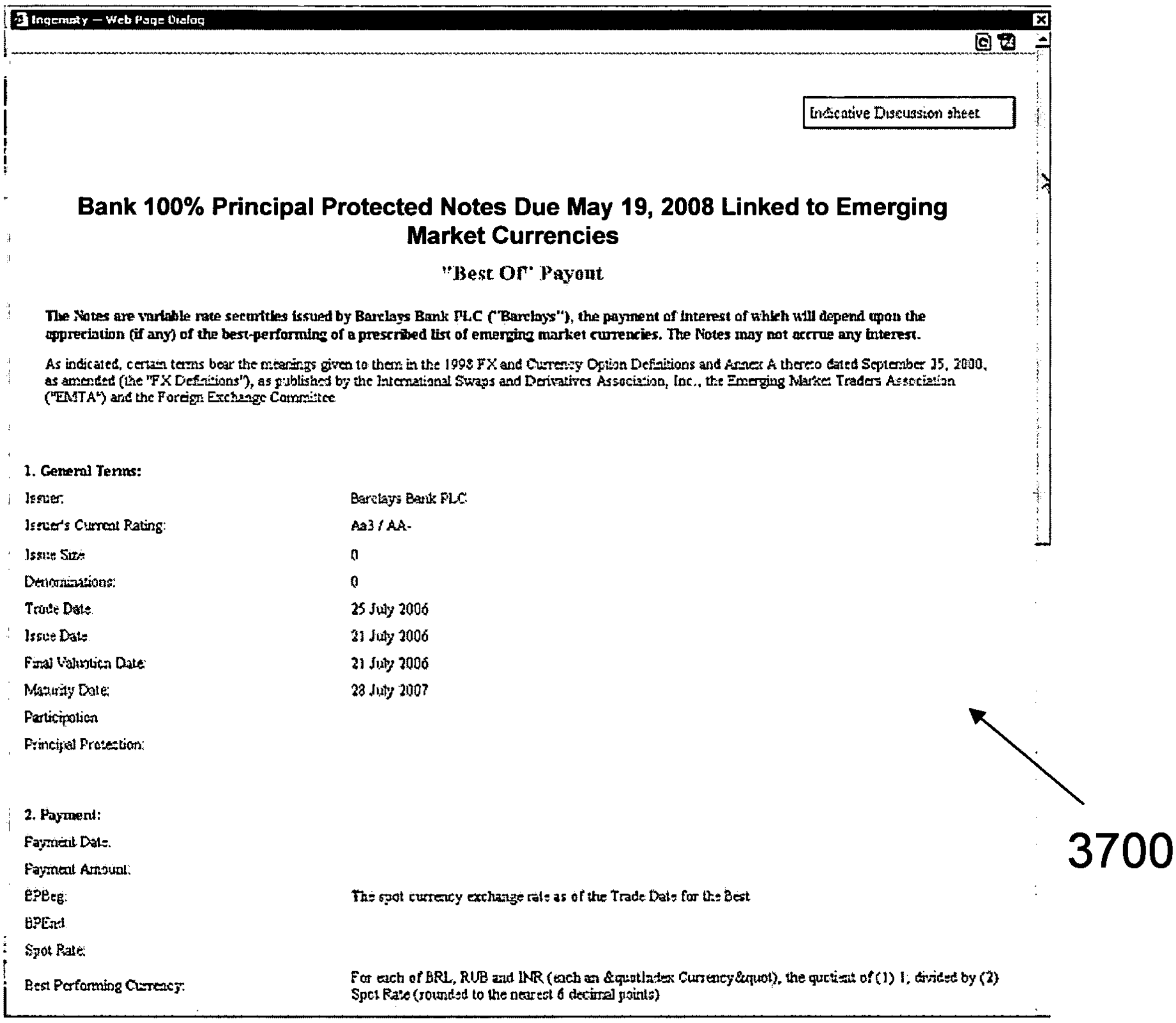
Ingenuity — Web Page Dialog
Indicative Discussion sheet
Bank 100% Principal Protected Notes Due May 19, 2008 Linked to Emerging Market Currencies
"Best Of" Payout
The Notes are variable rate securities issued by Barclays Bank PLC ("Barclays"), the payment of interest of which will depend upon the appreciation (if any) of the best-performing of a prescribed list of emerging market currencies. The Notes may not accrue any interest.
As indicated, certain terms bear the meanings given to them in the 1998 FX and Currency Option Definitions and Annex A thereto dated September 15, 2000, as amended (the "FX Definitions"), as published by the International Swaps and Derivatives Association, Inc., the Emerging Market Traders Association ("EMTA") and the Foreign Exchange Committee
1. General Terms:
Issuer: Barclays Bank PLC
Issuer's Current Rating: Aa3 / AA-
Issue Size 0
Denominations: 0
Trade Date 25 July 2006
Issue Date 21 July 2006
Final Valuation Date 21 July 2006
Maturity Date: 28 July 2007
Participation
Principal Protection:
2. Payment:
Payment Date:
Payment Amount:
BPBeg: The spot currency exchange rate as of the Trade Date for the Best
BPEnd
Spot Rate:
Best Performing Currency: For each of BRL, RUB and INR (each an &quotIndex Currency&quot), the quotient of (1) 1, divided by (2) Spot Rate (rounded to the nearest 6 decimal points)
3700

FIG. 37

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 74753506 P